(19)

**Europäisches Patentamt**
**European Patent Office**
**Office européen des brevets**

(11)  **EP 4 510 575 A1**

(12)  **EUROPEAN PATENT APPLICATION**
published in accordance with Art. 153(4) EPC

(43) Date of publication:
**19.02.2025  Bulletin 2025/08**

(21) Application number: **22936844.4**

(22) Date of filing: **12.04.2022**

(51) International Patent Classification (IPC):
**H04N 19/159** (2014.01)    **H04N 19/186** (2014.01)

(52) Cooperative Patent Classification (CPC):
**H04N 19/159; H04N 19/186**

(86) International application number:
**PCT/CN2022/086466**

(87) International publication number:
**WO 2023/197190 (19.10.2023 Gazette 2023/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **HUO, Junyan**
  **Dongguan, Guangdong 523860 (CN)**

• **MA, Yanzhuo**
  **Dongguan, Guangdong 523860 (CN)**
• **YANG, Fuzheng**
  **Dongguan, Guangdong 523860 (CN)**
• **DU, Hongqing**
  **Dongguan, Guangdong 523860 (CN)**
• **LI, Ming**
  **Dongguan, Guangdong 523860 (CN)**

(74) Representative: **Penza, Giancarlo**
  **Bugnion S.p.A.
  Viale Lancetti, 17
  20158 Milano (IT)**

(54)  **CODING METHOD AND APPARATUS, DECODING METHOD AND APPARATUS, CODING DEVICE, DECODING DEVICE, AND STORAGE MEDIUM**

(57)    Disclosed in the present invention are a coding method and apparatus, a decoding method and apparatus, a coding device, a decoding device, and a storage medium. The decoding method comprises: decoding a bitstream, and determining a first control parameter for the current block; determining a reference sample value of a first color component of the current block; determining a weighting coefficient according to the reference sample value of the first color component of the current block and the first control parameter; determining a predicted value of a second color component of the current block according to the weighting coefficient and a reference sample value of the second color component of the current block; and determining a reconstructed value of a sampling point of the second color component of the current block according to the predicted value of the second color component of the current block. In this way, a first control parameter for the current block is transmitted in a bitstream, a weighting coefficient corresponding to a pixel in the current block that is to be subjected to prediction is calculated using the first control parameter, and the weighting coefficient is used for color component prediction of said pixel in the current block, such that not only can the accuracy of prediction be improved and a bit rate be saved on, but the coding and decoding performance can also be improved.

A bitstream is decoded to determining a first control parameter of a current block — 501

A reference sample value of a first color component of the current block is determined — 502

A weighting coefficient is determined according to the reference sample value of the first color component of the current block and the first control parameter — 503

A prediction value of the second color component of the current block is determined determining according to the weighting coefficient and a reference sample value of a second color component of the current block — 504

A reconstruction value of a second color component sampling point of the current block is determined according to the prediction value of the second color component of the current block — 505

**FIG. 5A**

**Description**

TECHNICAL FIELD

Embodiments of the present disclosure relate to the technical field of video encoding and decoding, and relate in particular to encoding and decoding methods and apparatuses, an encoding device, a decoding device, and a storage medium.

BACKGROUND

With the increase in people's demands for video display quality, new video application forms such as high-definition and ultra-high-definition videos have emerged in response. The next generation video coding standard H.266/Versatile Video Coding (VVC) has been established by the Joint Video Exploration Team (JVET) of International Organization for Standardization (ISO)/International Electrotechnical Commission (IEC) and International Telecommunication Union Telecommunication Standardization Sector (ITU-T).
Inter-color component prediction technology is included in the H.266/VVC. However, there is a large deviation between prediction values of blocks to be coded calculated using the inter-color component prediction technology in the H.266/VVC and original values, which leads to low prediction accuracy, resulting in a decrease in the quality of decoded videos and reducing coding performance.

SUMMARY

To solve the above technical problems, embodiments of the present invention provide encoding and decoding methods and apparatuses, an encoding device, a decoding device, and a storage medium.
In a first aspect, an embodiment of the present invention provides an encoding method, which includes following operations.
A bitstream is decoded to determine a first control parameter of a current block.
A reference sample value of a first color component of the current block is determined.
A weighting coefficient is determined according to the reference sample value of the first color component of the current block and the first control parameter.
A prediction value of a second color component of the current block is determined according to the weighting coefficient and a reference sample value of the second color component of the current block.
A reconstruction value of a second color component sampling point of the current block is determined according to the prediction value of the second color component of the current block.
In a second aspect, an embodiment of the present invention provides a coding method, which includes the following operations.
First control parameter candidates for a current block are determined.
A reference sample value of a first color component of the current block is determined.
A weighting coefficient is determined according to the reference sample value of the first color component of the current block and a candidate value of the first control parameter candidates.
A prediction value of a second color component of the current block is determined according to the weighting coefficient and a reference sample value of the second color component of the current block.
A reference value of a prediction difference of the second color component of the current block is determined according to the prediction value and an original value of the second color component of the current block.
A first control parameter of the current block is determined according to the reference value of the prediction difference of the second color component of the current block.
The first control parameter of the current block is encoded to write obtained encoded bits into a bitstream.
In a third aspect, an embodiment of the present invention provides a encoding apparatus, which includes a first determination unit, a first calculation unit, a first prediction unit and a coding unit.
The first determination unit is configured to determine first control parameter candidates for a current block.
The first calculation unit is configured to: determine a reference sample value of a first color component of the current block, and determine a weighting coefficient according to the reference sample value of the first color component of the current block and a candidate value of the first control parameter candidates.
The first prediction unit is configured to: determine, according to the weighting coefficient and a reference sample value of a second color component of the current block, a prediction value of the second color component of the current block; determine, according to the prediction value and an original value of the second color component of the current block, a reference value of a prediction difference of the second color component of the current block; and determine a first control parameter of the current block according to the reference value of the prediction difference of the second color component of the current block.

The encoding unit is configured to encode the first control parameter of the current block to write obtained encoded bits into a bitstream.

In a fourth aspect, an embodiment of the present invention provides a decoding apparatus, which includes a decoding unit, a second calculation unit and a second prediction unit.

The decoding unit is configured to decode a bitstream to determine a first control parameter of a current block.

The second calculation unit is configured to: determine a reference sample value of a first color component of the current block; and determine a weighting coefficient according to the reference sample value of the first color component of the current block and the first control parameter.

The second prediction unit is configured to: determine, according to the weighting coefficient and a reference sample value of a second color component of the current block, a prediction value of the second color component of the current block; and determine, according to the prediction value of the second color component of the current block, a reconstruction value of a second color component sampling point of the current block.

In a fifth aspect, an embodiment of the present disclosure further provides an encoding device, which includes a first memory and a first processor. The first memory stores a computer program executable on the first processor, and the first processor, when executing the program, implements the encoding method performed by an encoder.

In a sixth aspect, an embodiment of the present disclosure further provides a decoding device, which includes a second memory and a second processor. The second memory stores a computer program executable on the second processor, and the second processor, when executing the program, implements the decoding method performed by a decoder.

In a seventh aspect, an embodiment of the present disclosure provides a computer-readable storage medium having stored thereon a computer program, which implements the encoding method performed by an encoder when being executed by a first processor, or implements the decoding method performed by a decoder when being executed by a second processor.

By means of the above technical solutions, whether at the encoding end or at the decoding end, a weighting coefficient corresponding to a pixel to be predicted in a current block is calculated. The weighting coefficient is used to predict a color component of the pixel to be predicted in the current block, which can not only improve prediction accuracy and reduce bitrates, but also enhance encoding and decoding performance. In addition, the encoding end transmits the first control parameter to the decoding end through a bitstream, which can increase the reliability of the weighting coefficient, and further improve the accuracy of color component prediction to a certain extent.

BRIEF DESCRIPTION OF THE DRAWINGS

FIG. 1 is a diagram of distribution of reference regions.
FIG. 2 is a flow chart of a model parameter derivation scheme.
FIG. 3 is a block diagram of composition of an encoder according to an embodiment of the present disclosure.
FIG. 4 is a block diagram of composition of a decoder according to an embodiment of the present disclosure.
FIG. 5A is a flow chart of a decoding method according to an embodiment of the present disclosure.
FIG. 5B is a flow chart of a weighted chroma prediction method according to an embodiment of the present disclosure.
FIGS. 6A to 6D are diagrams of a softmax curve according to an embodiment of the present disclosure.
FIGS. 7A to 7C are diagrams of distribution of reference regions in three WCP modes according to an embodiment of the present disclosure.
FIG. 8 is a first flow chart of an encoding method according to an embodiment of the present disclosure.
FIG. 9 is a second flow chart of a coding method according to an embodiment of the present disclosure.
FIG. 10 is a third flow chart of a coding method according to an embodiment of the present disclosure.
FIG. 11 is a fourth flow chart of a coding method according to an embodiment of the present disclosure.
FIG. 12 is a fifth flow chart of a coding method according to an embodiment of the present disclosure.
FIG. 13 is a sixth flow chart of a coding method according to an embodiment of the present disclosure.
FIG. 14 is a diagram of a composition structure of an encoding apparatus according to an embodiment of the present disclosure.
FIG. 15 is a diagram of a specific hardware structure of an encoding device according to an embodiment of the present disclosure.
FIG. 16 is a diagram of a composition structure of a decoding apparatus according to an embodiment of the present disclosure.
FIG. 17 is a diagram of a specific hardware structure of a decoding device according to an embodiment of the present disclosure.

FIG. 18 is a diagram of a composition structure of an encoding and decoding system according to an embodiment of the present disclosure.

DETAILED DESCRIPTION

In order to understand characteristics and technical contents of the embodiments of the disclosure more thoroughly, implementations of the embodiments of the disclosure would be described in detail below with reference to the drawings. The drawings are provided for the purpose of reference and illustration only, and are not intended to limit the embodiments of the disclosure.

Unless otherwise defined, all technical and scientific terms used here have the same meaning as usually understood by technicians in the technical field to which the disclosure belongs. The terms used here are only for the purpose of describing the embodiments of the disclosure, and are not intended to limit the disclosure.

In the following descriptions, reference is made to "some embodiments" which describe a subset of all possible embodiments. However, it may be understood that "some embodiments" may be the same or different subsets of all possible embodiments, and may be combined with each other without conflict. It should also be noted that terms "first \second\third" involved in the embodiments of the disclosure are only intended to distinguish similar objects and do not represent a specific order of the objects. It may be understood that "first\second\third" may exchange their specific orders or sequences in an allowable situation, so that the embodiments of the disclosure described here may be implemented in an order other than those illustrated or described here.

In a video picture, a color space can be represented in a YUV format, a YCbCr format, an RGB format, or a YCgCo format. A coding block (CB) is generally represented by using a first color component, a second color component, and a third color component. The three color components are a luminance component, a blue chroma component, and a red chroma component, respectively. Taking a video picture represented in the YCbCr format or the YUV format as an example, the luminance component is generally represented by a symbol Y, the blue chroma component is generally represented by a symbol Cb or U, and the red chroma component is generally represented by a symbol Cr or V.

It can be understood that in existing video picture or video coding/decoding processes, cross-component prediction technology mainly includes the Cross-Component Linear Model (CCLM) prediction mode and the Multi-Directional Linear Model (MDLM) prediction mode. Regardless of whether model parameters are derived according to the CCLM prediction mode or the MDLM prediction mode, both corresponding prediction models thereof can implement the cross-color component prediction, such as from the first color component to the second color component, from the second color component to the first color component, from the first color component to the third color component, from the third color component to the first color component, from the second color component to the third color component, or from the third color component to the second color component.

Taking the prediction from the first color component to the second color component as an example, assuming that the first color component is a luminance component and the second color component is a chroma component, in order to reduce the redundancy between the luminance component and the chroma component, the CCLM prediction mode is used in the VVC, that is, a chroma prediction value is constructed according to a luminance reconstruction value of the same coding block, as shown in the following equation:

$Pred_C(i,j) = \alpha \times Rec_L(i, j) + \beta$, where (i, j) denotes the position coordinates of a pixel to be predicted in a coding block, i denotes a horizontal direction, and j denotes a vertical direction; $Pred_C(i, j)$ denotes a chroma prediction value corresponding to the pixel to be predicted at the position coordinates (i, j) in the coding block, and $Rec_L(i, j)$ denotes a luminance reconstruction value corresponding to the pixel to be predicted at the (downsampled) position coordinates (i, j) in the same coding block. In addition, $\alpha$ and $\beta$ are linear model parameters, which can be derived from reference pixels.

For a coding block, reference regions of a current block thereof may be divided into five parts: a left neighboring region, an upper neighboring region, a lower-left neighboring region, an upper left neighboring region, and an upper-right neighboring region. The following three cross-component linear model prediction modes are included in the H.266/VVC: a left and upper neighboring intra CCLM prediction mode (which may be denoted by INTRA_LT_CCLM), a left and lower-left neighboring intra CCLM prediction mode (which may be denoted by INTRA_L_CCLM), and an upper and upper-right neighboring intra CCLM prediction mode (which may be denoted by INTRA_T_CCLM). Each prediction mode of these three prediction modes may select a preset number (e.g., 4) of reference pixels for the derivation of model parameters $\alpha$ and $\beta$, and the biggest difference between these three prediction modes is that the selection regions corresponding to the reference pixels used to derive model the parameters $\alpha$ and $\beta$ are different.

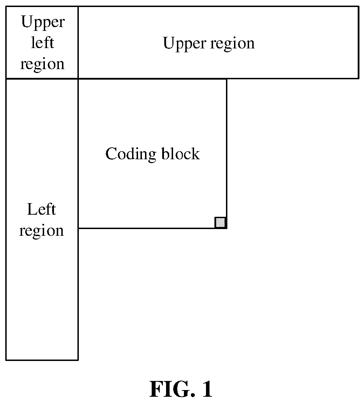

Referring to FIG. 1, a diagram of distribution of reference regions is shown. In FIG. 1, an upper region, an upper left region, and a left region of a current block (also referred to as a coding block or a decoding block) are referred to as the reference regions, and pixels in the reference regions are all reconstructed reference pixels. In addition, the block filled in gray is a pixel to be predicted at the position coordinates (i, j) in the coding block.

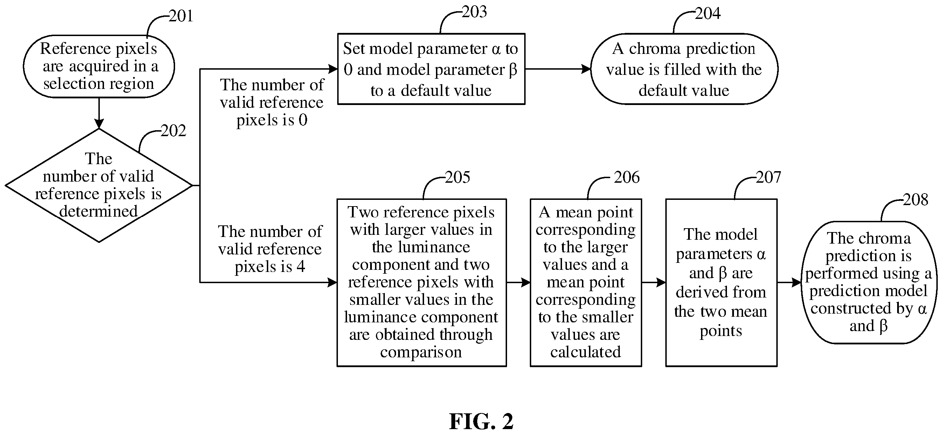

After the preset number of reference pixels is acquired, chroma prediction is performed according to the flow chart of a model parameter derivation scheme shown in FIG. 2. According to the process shown in FIG. 2, assuming that the preset number is four, the process may include the following operations.

S201: Reference pixels are acquired in a selection region.

S202: The number of valid reference pixels is determined.

S203: If the number of valid reference pixels is 0, the model parameter $\alpha$ is set to be 0 and the model parameter $\beta$ is set to be a default value.

S204: A chroma prediction value is filled with the default value.

S205: If the number of valid reference pixels is 4, two reference pixels with larger values in the luminance component and two reference pixels with smaller values in the luminance component are obtained through comparison.

S206: A mean point corresponding to the larger values and a mean point corresponding to the smaller values are calculated.

S207: The model parameters $\alpha$ and $\beta$ are derived from the two mean points.

S208: The chroma prediction is performed using a prediction model constructed by $\alpha$ and $\beta$.

It should be noted that in the VVC, the operation in which the number of valid reference pixels is 0 is determined according to the validity of the neighboring regions.

It should also be noted that the prediction model is constructed using the principle of "determining a straight line by using two points". The two points may be referred to as fitting points. In the current technical solution, after four reference pixels are acquired, two reference pixels with larger values in the luminance component and two reference pixels with smaller values in the luminance component are obtained through comparison. Then, a mean point (which may be represented by mean$_{max}$) is obtained according to the two reference pixels with larger values, and another mean point (which can be represented by mean$_{min}$) is obtained according to the two reference pixels with smaller values. That is, two mean points mean$_{max}$ and mean$_{min}$ can be obtained. Next, mean$_{max}$ and mean$_{min}$ are used as two fitting points, and the model parameters (represented by $\alpha$ and $\beta$) can be derived. Finally, a prediction model is constructed according to $\alpha$ and $\beta$, and prediction processing for the chroma components is performed according to the prediction model.

However, in the related art, a simple linear model $Pred_C(i, j) = \alpha \cdot Rec_L(i, j) + \beta$ is used for each coding block to predict chroma components, and the same model parameters $\alpha$ and $\beta$ are used for the prediction of pixels at any position in each coding block, which may lead to the following drawbacks: on the one hand, coding blocks with different content characteristics all use a simple linear model to perform luminance-to-chroma mapping, so as to achieve chroma prediction, but not all luminance-to-chroma mapping functions in any coding block can be accurately fitted by this simple linear model, which leads to inaccurate prediction of some coding blocks. On the other hand, in the prediction process, pixel points at different positions within the coding block all use the same model parameters $\alpha$ and $\beta$, and there is also a large difference in prediction accuracy for different positions within the coding block. That is, in current CCLM technology, there is a large deviation between prediction values and original values for some coding blocks, which leads to low prediction accuracy and quality degradation, thereby further reducing encoding and decoding efficiency.

On the basis of the foregoing, embodiments of the present disclosure provide encoding and decoding methods. Whether at the encoding end or at the decoding end, a weighting coefficient corresponding to a pixel to be predicted in a current block is calculated, and is used to predict a color component of the pixel to be predicted in the current block, thereby not only improving prediction accuracy and reducing bitrates, but also enhancing encoding and decoding performance. In addition, the encoding end transmits a first control parameter to the decoding end through a bitstream, which can increase the reliability of the weighting coefficient, and further improve the accuracy of chroma prediction to a certain extent.

Embodiments of the present disclosure would be described in detail below with reference to the drawings.

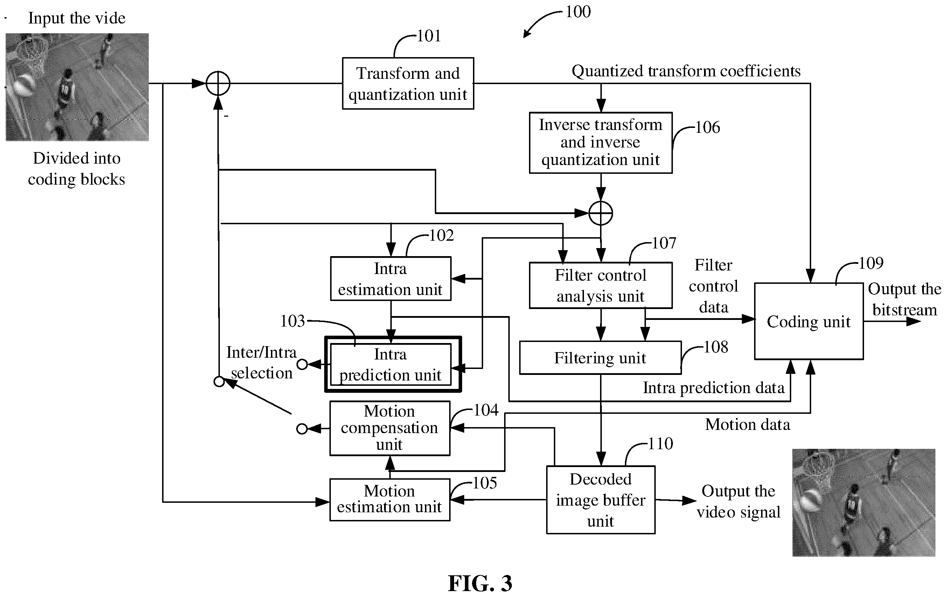

Referring to FIG. 3, a block diagram of composition of an encoder provided in an embodiment of the present disclosure is shown. As shown in FIG. 3, an encoder (specifically, "video coder") 100 may include a transform and quantization unit 101, an intra estimation unit 102, an intra prediction unit 103, a motion compensation unit 104, a motion estimation unit 105, an inverse transform and inverse quantization unit 106, a filter control analysis unit 107, a filtering unit 108, a coding unit 109, a decoded picture buffer unit 110, and so on. The filtering unit 108 may implement deblocking filtering and Sample Adaptive Offset (SAO) filtering, and the coding unit 109 may implement header information coding and Context-based Adaptive Binary Arithmetic Coding (CABAC). For an inputted original video signal, a video coding block can be obtained by division of a Coding Tree Unit (CTU), and then residual pixel information obtained through intra or inter prediction is processed through the transform and quantization unit 101 to transform the video coding block, which includes the following operations. The residual information is transformed from a pixel domain to a transform domain, and the obtained transform coefficient is quantized, so that the bitrate can be further reduced. The intra estimation unit 102 and the intra prediction unit 103 are configured to perform intra prediction on the video coding block. Specifically, the intra estimation unit 102 and the intra prediction unit 103 are configured to determine an intra prediction mode to be used to code the video coding block. The motion compensation unit 104 and the motion estimation unit 105 are configured to perform inter prediction coding on the received video coding block relative to one or more blocks in one or more reference frames to provide temporal prediction information. Motion estimation performed by the motion estimation unit 105 is a process of generating a motion vector that can be used to estimate the motion of the video coding block, and then motion compensation is performed by the motion compensation unit 104 on the basis of the motion vector determined by the motion estimation unit 105. After determining the intra prediction mode, the intra prediction unit 103 is further configured to provide selected intra prediction data to the coding unit 109, and the motion estimation unit 105 also sends the motion vector data determined by calculation to the coding unit 109. Further, the inverse transform and inverse quantization unit 106 is used for the reconstruction of the video coding block. A residual block is reconstructed in a pixel domain, the reconstructed residual block passes through the filter control analysis unit 107 and the filtering unit 108 to remove blocking artifacts, and then the reconstructed residual block is added to a predictive block in a frame of the decoded picture buffer unit 110 and is used to generate a reconstructed video coding block. The coding unit 109 is configured to code various coding parameters and quantized transform coefficients. In a CABAC-based coding algorithm, context content may be based on neighboring coding blocks, and may be used to code information indicating the determined intra prediction mode and output a bitstream of the video signal. The decoded picture buffer unit 110 is configured to store the reconstructed video coding block for prediction reference. As the coding of a video picture proceeds, new reconstructed video coding blocks would be continuously generated, and these reconstructed video coding blocks would all be stored in the decoded picture buffer unit 110.

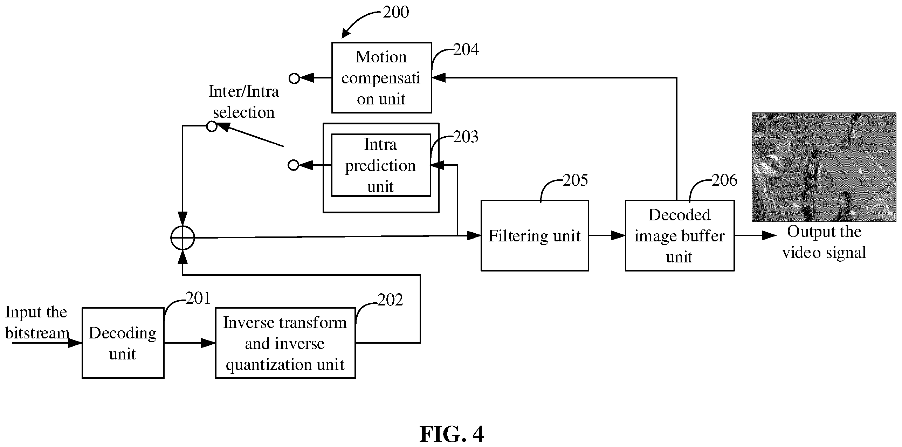

Referring to FIG. 4, a block diagram of composition of a decoder provided in an embodiment of the present disclosure is shown. As shown in FIG. 4, a decoder (specifically, "video decoder") 200 includes a decoding unit 201, an inverse transform and inverse quantization unit 202, an intra prediction unit 203, a motion compensation unit 204, a filtering unit 205, and a decoded picture buffer unit 206, and so on. The decoding unit 201 may implement header information decoding and CABAC decoding, and the filtering unit 205 may implement deblocking filtering and SAO filtering. After an inputted video signal undergoes the coding processing in FIG. 3, a bitstream of the video signal is outputted. The bitstream is inputted into the decoder 200, and first passes through the decoding unit 201 to obtain decoded transform coefficients. The transform coefficients are processed by the inverse transform and inverse quantization unit 202 to generate a residual block in a pixel domain. The intra prediction unit 203 may be used to generate, based on a determined intra prediction mode and data from previously decoded blocks of a current frame or picture, prediction data for a current video decoding block. The motion compensation unit 204 determines prediction information for the video decoding block by analyzing motion vectors and other associated syntax elements, and uses the prediction information to generate a predictive block for the video decoding block being decoded. Summation is performed on the residual block from the inverse transform and inverse quantization unit 202 and the corresponding predictive block generated by the intra prediction unit 203 or by the motion compensation unit 204, so as to form a decoded video block. The decoded video signal passes through the filtering unit 205 to remove blocking artifacts, which can improve the video quality. The decoded video block is then stored in the decoded picture buffer unit 206, and the decoded picture buffer unit 206 stores a reference picture for subsequent intra prediction or motion compensation, and is also used for outputting a video signal to obtain a restored original video signal.

It should be noted that the method according to the embodiments of the present disclosure is mainly applied to the intra prediction unit 103 shown in FIG. 3 and the intra prediction unit 203 shown in FIG. 4. That is, the embodiment of the present disclosure may be applied to an encoder, a decoder, or both an encoder and a decoder, but the embodiment of the present disclosure is not specifically limited thereto.

It should further be noted that, when the method according to the embodiments of the present disclosure is applied to the intra prediction unit 103, the "current block" specifically refers to a current coding block to be subjected to intra prediction. When the method according to the embodiments of the present disclosure is applied to the intra prediction unit 203, the "current block" specifically refers to a current decoding block to be subjected to intra prediction.

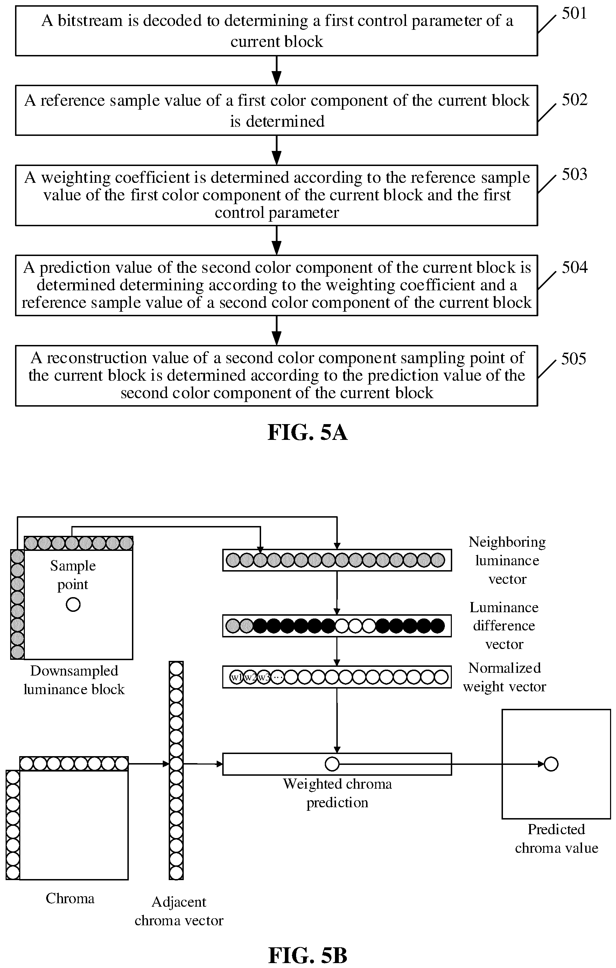

In an embodiment of the present disclosure, referring to FIG. 5A, a flow chart of a decoding method according to an embodiment of the present disclosure is shown. As shown in FIG. 5A, the method may include the following operations.

At operation 501: a bitstream is decoded to determine a first control parameter of a current block.

It should be noted that the decoding method in the embodiment of the present disclosure is applied to a decoder. In addition, the decoding method may specifically refer to an intra prediction method, and more specifically, the decoding method refers to a color component prediction method. A video picture may be divided into a plurality of decoding blocks, and each decoding block may include a first color component, a second color component and a third color component. The current block in the embodiment of the present disclosure refers to a current decoding block to be subjected to the intra prediction in the video picture.

When the prediction of the first color component needs to be performed, a component to be predicted is the first color component. When the prediction of the second color component needs to be performed, a component to be predicted is the second color component. When the prediction of the third color component needs to be performed, a component to be predicted is the third color component. In addition, assuming that the prediction of the first color component is performed on the current block, and that the first color component is a luminance component (that is, the component to be predicted is a luminance component), the current block may also be referred to as a luminance block. Alternatively, assuming that the prediction of the second color component is performed on the current block, and that the second color component is a chroma component (that is, the component to be predicted is a chroma component), the current block may also be referred to as a chroma block. In addition, in the embodiment of the present disclosure, the current block may also be referred to as a coding block or a decoding block.

Here, the first control parameter is a control parameter of the weighting coefficient, and is used to set the size of the weighting coefficient. The weighting coefficient is a weighting coefficient of a reference sample value of the second color component of the current block, and is used to determine a prediction value of the second color component of the current block. It can be understood that, when the prediction of the second color component needs to be performed, the first control parameter is a control parameter corresponding to the second color component. When the prediction of the first color component needs to be performed, the first control parameter is a control parameter corresponding to the first color component. When the prediction of the third color component needs to be performed, the first control parameter is a control parameter corresponding to the third color component. Control parameters corresponding to different color components may be equal or unequal, and control parameters corresponding to different color components may be collectively referred to as a "first control parameter", or may be distinguished by a "first control parameter", a "second control parameter", and a "third control parameter". The embodiments of the present disclosure are not specifically limited thereto.

In some embodiments, the operation that the bitstream is decoded to determine the first control parameter of the current block may include the following operations. Data units at a block layer and above in the bitstream are decoded to the first control parameter of the current block.

In some embodiments, the operation that the bitstream is decoded to determine the first control parameter of the current block may include the following operations. Data units at a block layer and above in the bitstream are decoded to determine first control parameter candidates, and the first control parameter are determined according to the first control parameter candidates.

The first control parameter candidates include one or more candidate values of the first control parameter of the current block. That is, a decoding end may obtain one or more candidate values of the first control parameter of the current block from the data units at the block layer and above in the bitstream. When a candidate value of the first control parameter is obtained, it can be understood that an encoding end transmits control parameters for each block in the bitstream, and the decoding end obtains the first control parameter of the current block according to decoding, and directly applies the same to color component prediction. When the first control parameter candidates include multiple candidate values of the first control parameter, it can be understood that the encoding end transmits some typical control parameters in the bitstream without transmitting corresponding control parameters for each block, and the decoding end may select the corresponding first control parameters according to a prediction parameter of the current block after decoding the bitstream. The encoding end transmits the first control parameter to the decoding end through the bitstream, and the decoding end calculates the weighting coefficient according to the received first control parameter, which may increase the reliability of the weighting coefficient and further improve the accuracy of color component prediction to a certain extent.

In some embodiments, the data units at the block layer and above include at least one of the following: a parameter set data unit, a Picture Header (PH), a Slice Header (SH), a Coding Tree Unit (CTU) or a Coding Unit (CU).

Here, the parameter set data unit includes at least one of a Sequence Parameter Set (SPS), a Picture Parameter Set (PPS) or an Adaptation Parameter Set (APS).

That is, the encoding end transmits the first control parameter candidates in the data units at the block layer and above. Specifically, the first control parameter may be transmitted at an SPS layer, a PPS layer, an APS layer, a PH layer, an SH layer, a CTU layer, or a CU layer in the bitstream.

In some embodiments, when the first control parameter candidates include one candidate value of the first control parameter, the control parameter may be understood as the best control parameter determined by the encoding end for the current block. When the best control parameter is transmitted at the CU layer, the control parameter S may be separately transmitted for different CU blocks, so that the prediction accuracy can be improved. In an embodiment, when the transmission is at the SPS layer, pictures of the same sequence use the same S. When the transmission is at the PPS layer, the same frame uses the same S. When the transmission is at the APS layer, the same frame uses the same S. When the transmission is at the PH layer, the same frame uses the same S. When the transmission is at the SH layer, the same slice uses the same S. When the transmission is at the CTU layer, the same CTU uses the same S.

Further, one coding block may correspond to one control parameter selection, or different control parameter selections may be set for different color components in the coding block. For example, for the chroma components Cb and Cr, the same prediction is performed for Cb and Cr chroma blocks, and the same obtained best S is used for the components Cr and Cb. Alternatively, for the chroma components Cb and Cr, the prediction is performed for the chroma components Cb and Cr respectively, and each of the Cb and Cr uses a respective best S.

In some embodiments, the operation that the bitstream is decoded to determine the first control parameter of the current block may include the following operations. The bitstream is decoded to determine an index parameter of the first control parameter of the current block. In some other embodiments, the operation that the data units at a block layer and above in the bitstream are decoded to determine the first control parameter candidates may include the following operations. The data units at the block layer and above in the bitstream are decoded to determine an index parameter of a candidate value of the first control parameter. That is, the encoding end may further transmit, in the bitstream, the index parameter of the control parameter to the decoding end, and the decoding end may determine the corresponding control parameter according to the decoded index parameter.

In an embodiment, the decoding end may obtain the best control parameter S for the current block from the CU layer by parsing, and the specific process is as follows:

| seq_parameter_set_rbsp( ) { | Descriptor |
|---|---|
| **sps_wcp_enabled_flag** | u(1) |
| } | |
| pic_parameter set rbsp( ) { | Descriptor |
| **pps_wcp_enabled_flag** | u(1) |
| } | |

| picture_header_structure( ) { | Descriptor |
|---|---|
| if(sps_chroma_format_idc != 0){ | |
| if(sps_wcp_enabled_flag && pps_wcp_enabled flag){ | |
| **ph_wcp_enabled_flag** | u(1) |
| } | |
| } | |
| } | |

| slice_header( ) { | Descriptor |
|---|---|
| if(sps_chroma_format_idc != 0){ | |
| if(sps_wcp_enabled_flag && pps_wcp_enabled flag){ | |
| **slice_wcp_enabled_flag** | u(1) |
| } | |
| } | |
| } | |

| coding_unit( x0, y0, cbWidth, cbHeight, cqtDepth, treeType, modeType ) { | Descriptor |
|---|---|
| if(sps_chroma_format_idc != 0){ | |
| if(ph_wcp_enabled_flag ‖ slice_wcp_enabled_flag){ | |
| **wcp_mode_flag** | ae(v) |
| if(wcp_mode_flag){ | |
| **wcp_mode_idx** | ae(v) |
| **wep_S_Chroma** | u(6) |
| }else | |
| **intra_chroma_pred_mode** | ae(v) |
| } | |
| } | |
| } | |

Sequence Parameter Set (SPS) layer:

sps_chroma_format_idc: the value being 0 indicates that the color component of the current picture is a luminance component, and the value not being 0 indicates that the color component of the current picture is a chroma component.

sps_wcp_enabled_flag: the flag indicates whether the WCP is enabled in the sps layer. The value being 1 indicates that the WCP is enabled, and the value being 0 indicates that the WCP is not enabled.

Picture Parameter Set (PPS) layer:

pps_wcp_enabled_flag: the flag indicates whether the WCP is enabled in the pps layer. The value being 1 indicates that WCP is enabled, and the value being 0 indicates that the WCP is not enabled.

Picture Header (PH) Layer:

ph_wcp_enabled_flag: the flag indicates whether the WCP is used in the current picture. The value being 1 indicates that the WCP is used, and the value being 0 indicates that the WCP is not enabled. When the syntax element does not exist, it is treated as being equal to 0.

Slice Header (SH) Layer:

slice_wcp_enabled_flag: the flag indicates whether the WCP is used in a current slice. The value being 1 indicates that the WCP is used, and the value being 0 indicates that the WCP is not used. When the syntax element does not exist, it is treated as being equal to 0.

Coding Unit (CU) layer:

wcp_mode_flag: the flag indicates whether the WCP is used in a current CU. The value being 1 indicates that the WCP is used, and the value being 0 indicates that the WCP is not used. When the syntax element does not exist, it is treated as being equal to 0.

wcp_mode_idx: denotes an index of the current the WCP mode.

wcp_S_Chroma: denotes a numerical value of the best control parameter S for components Cb and Cr in the current CU or an index of the best control parameter S.

intra_chroma_pred_mode: denotes an intra prediction mode of a current chroma component. When intra_chroma_pred_mode does not exist, it is inferred to be equal to 0.

In an embodiment, the decoding end may obtain the best control parameter S for the current block under different chroma components from the CU layer by parsing, and the specific process is as follows:

| seq_parameter_set_rbsp( ) { | **Descriptor** |
|---|---|
| **sps_wcp_enabled_flag** | u(1) |
| } | |

| pic_parameter_set_rbsp( ) { | **Descriptor** |
|---|---|
| **pps_wcp_enabled_flag** | u(1) |
| } | |

| picture_header_structure( ) { | **Descriptor** |
|---|---|
| if(sps_chroma_format_idc != 0){ | |
| if(sps_wcp_enabled_flag && pps_wcp_enabled flag){ | |
| **ph_wcp_enabled_flag** | u(1) |
| } | |
| } | |
| } | |

| slice_header( ) { | Descriptor |
|---|---|
| if(sps_chroma_format_idc != 0){ | |
| if(sps_wcp_enabled_flag && pps_wcp_enabled flag){ | |
| **slice_wcp_enabled_flag** | u(1) |
| } | |
| } | |
| } | |

| coding_unit( x0, y0, cbWidth, cbHeight, cqtDepth, treeType, modeType ) { | Descriptor |
|---|---|
| if(sps_chroma_format_idc != 0){ | |
| if(ph_wcp_enabled_flag ‖ slice_wcp_enabled_flag){ | |
| **wcp_mode_flag** | ae(v) |
| if(wcp_mode_flag){ | |
| **wcp_mode_idx** | ae(v) |
| **wcp_S_Cb** | u(6) |
| **wcp_S_Cr** | u(6) |
| }else | |
| **intra_chroma_pred_mode** | ae(v) |
| } | |
| } | |
| } | |

Sequence Parameter Set (SPS) layer:

sps_chroma_format_idc: the value being 0 indicates that the color component of the current picture is a luminance component, and the value not being 0 indicates that the color component of the current picture is a chroma component.

sps_wcp_enabled_flag: the flag indicates whether the WCP is enabled in the sps layer. The value being 1 indicates that the WCP is enabled, and the value being 0 indicates that the WCP is not enabled.

Picture Parameter Set (PPS) layer:

pps_wcp_enabled_flag: the flag indicates whether the WCP is enabled in the pps layer. The value being 1 indicates that WCP is enabled, and the value being 0 indicates that the WCP is not enabled.

Picture Header (PH) Layer:

ph_wcp_enabled_flag: the flag indicates whether the WCP is used in the current picture. The value being 1 indicates that the WCP is used, and the value being 0 indicates that the WCP is not enabled. When the syntax element does not exist, it is treated as being equal to 0.

Slice Header (SH) Layer:

slice_wcp_enabled_flag: the flag indicates whether the WCP is used in a current slice. The value being 1 indicates that the WCP is used, and the value being 0 indicates that the WCP is not used. When the syntax element does not exist, it is treated as being equal to 0.

Coding Unit (CU) layer:

wcp_mode_flag: the flag indicates whether the WCP is used in a current CU. The value being 1 indicates that the WCP is used, and the value being 0 indicates that the WCP is not used. When the syntax element does not exist, it is treated as being equal to 0.

wcp_mode_idx: denotes an index of the current the WCP mode.

wcp_S_Cb: denotes a numerical value of the best control parameter S for component Cb in the current CU or an index of the best control parameter S.

wcp_S_Cr: denotes a numerical value of the best control parameter S for component Cr in the current CU or an index of the best control parameter S.

intra_chroma_pred_mode: denotes an intra prediction mode of a current chroma component. When intra_chroma_pred_mode does not exist, it is inferred to be equal to 0.

At operation 502: a reference sample value of a first color component of the current block is determined.

In the embodiments of the present disclosure, the first color component and the second color component are different color components. The second color component is a component to be predicted in the embodiments of the present disclosure. The first color component is a reference color component in the embodiments of the present disclosure. The reference sample value of the first color component and the first control parameter are used to determine the weighting coefficient.

In some embodiments, the operation that the reference sample value of the first color component of the current block is determined may include the following operations. The reference sample value of the first color component of the current block is determined according to an neighboring sampling value of the first color component of the current block and a reconstruction value of the first color component of the current block.

In an embodiment, the reference sample value of the first color component of the current block is set to be equal to the absolute value of the difference between a first intra-block reference value and a first neighboring reference value. The first intra-block reference value is the reconstruction value of the first color component of the current block or a value obtained by filtering the reconstruction value of the first color component of the current block; and the first neighboring reference value is the neighboring sampling value of the first color component of the current block or a value obtained by filtering the neighboring sampling value of the first color component of the current block.

Here, the first intra-block reference value may be understood as the reconstruction value of the first color component of a pixel to be predicted in the current block, or a value obtained by filtering the reconstruction value of the first color component of the pixel to be predicted. The first neighboring reference value may be understood as a reconstruction value of the first color component of a reference pixel in the reference region, or a value obtained by filtering the reconstruction value of the first color component of the reference pixel.

In an embodiment, the first color component is exemplified as a luminance component, and the second color component is exemplified as a chroma component. The reference sample value of the first color component is the difference between a luminance reconstruction value (recY) of the pixel to be predicted and a luminance reconstruction value (refY) of the reference pixel. Under certain conditions, refY and recY may be pre-processed. In an embodiment, the pre-processing operation includes: (1) in order to reduce computational complexity, a point selection operation or a downsampling operation may be performed on refY or recY; (2) different filtering operations may be performed on refY or recY for current blocks of different sizes; (3) when the resolution of the chroma component of the video is not consistent with the resolution of the luminance component of the video, upsampling and downsampling operations may be performed on refY or recY to facilitate subsequent chroma prediction calculation; (4) when the resolution of the chroma component of the video is consistent with the resolution of the luminance component of the video, multiple rows/columns of reference pixels may be used, and in this case, the upsampling and downsampling operations may also be performed on refY or recY to facilitate subsequent chroma prediction calculation; and (5) when the quantity of the obtained refY is different from the quantity of a core parameter inSize, it is necessary to perform the point selection operation or the upsampling and downsampling operations on refY.

The process of acquiring the weighting coefficient includes constructing a luminance difference vector and calculating the weighting coefficient. A weighted chroma prediction value is obtained by acquiring the weighting coefficient and performing weighted prediction according to the weighting coefficient.

Specifically, for i=0, ..., predSizeW-1, j=0, ..., predSizeH-1, and k=0, 1...inSize-1, each element diffY[i][j][k] in a luminance difference vector is constructed, each element cWeight[i][j][k] (or cWeightFloat[i][j][k]) in a weight vector is calculated, and a chroma prediction value $C^{pred}$[i][j] is calculated according to cWeight[i][j] (or cWeightFloat[i][j][k]) and refC. Referring to equation (1), $K$ = inSize. predSizeW is the width of the prediction block, predSizeH is the height of the prediction block, and the quantity of the inSize is the quantity of the reference luminance.

$$Cpred[\text{i}][\text{j}] = \sum_{k=0}^{K-1} cWeight[i][j][k] \times ref_C[k] \qquad (1)$$

The luminance difference vector is constructed. For each pixel to be predicted, the luminance difference vector diffY[i][j][k] is obtained by subtracting luminance reconstruction information recY[i][j] corresponding to the pixel from the reference luminance information refY of the quantity of the inSize and taking an absolute value.

$$diffY[i][j][k] = abs(refY[k] - recY[i][j]) \qquad (2)$$

RecY[i][j]] represents a luminance reconstruction value of a pixel to be predicted (i, j) in the current block, recY[k] denotes a luminance reconstruction value of a k-th reference pixel, diffY[i][j][k] denotes the difference between the luminance reconstruction values of the pixel to be predicted (i, j) and the k-th reference pixel, diffY[i][j] denotes a luminance difference vector (i.e., including the absolute value of the difference between the luminance reconstruction value of each pixel to be predicted in the current block and the k-th reference pixel), and abs denotes taking the absolute value. In the embodiment of the present disclosure, the luminance difference vector of the pixel to be predicted is processed using the control parameter S.

At operation 503: a weighting coefficient is determined according to the reference sample value of the first color component of the current block and the first control parameter.

Here, the weighting coefficient may be calculated by means of a preset mapping relationship. In the embodiments of the present disclosure, the preset mapping relationship is a non-linear mapping relationship. Specifically, a function model (i.e., the preset mapping relationship, represented by f) for calculating the weighting coefficient is constructed according to the trend that the closer the luminance information of reference pixel is to the luminance information of the pixel to be predicted (i, j) in the current block, the higher the importance of the chroma of the reference pixel to the pixel to be predicted (i, j).

In some embodiments, the operation that the weighting coefficient is determined according to the reference sample value of the first color component of the current block and the first control parameter may include the following operations. A first input parameter is determined according to the reference sample value of the first color component of the current block and the first control parameter, and the weighting coefficient is determined according to a preset mapping relationship and the first input parameter.

In some embodiments, both the reference sample value of the first color component of the current block and the first control parameter may be used as the first input parameter, and inputted into a non-linear mapping function corresponding to the preset mapping relationship, and the weighting coefficient is used as an output value of the non-linear function. That is, both the reference sample value of the first color component and the first control parameter are used as input parameters of the non-linear function, and the value of the non-linear function changes as its input parameters change. In some embodiments, the preset mapping relationship is a softmax function.

In an embodiment, the preset mapping relationship is a softmax function. In practical application, the mapping relationship may be the softmax function itself, or may be part of the softmax function. The luminance difference vector diffY[*i*][*j*] corresponding to each pixel to be predicted is used as an input of the non-linear mapping model, and the model outputs a floating-point-type weight vector *cWeightFloat*[*i*][*j*] corresponding to each pixel to be predicted, and the calculation equation thereof is as shown in (3):

$$cWeightFloat[i][j][k] = \frac{e^{-diffY[i][j][k]}}{\sum_{n=0}^{inSize-1} e^{-diffY[i][j][n]}} \qquad (3)$$

Under certain conditions, the equation (3) may be adjusted according to the control parameter (S). It should be noted that the weight vector *cWeightFloat*[*i*][*j*] includes a weight value of each reference pixel, and *cWeightFloat*[*i*][*j*] includes a weight value of the quantity of inSize. The weight value in the embodiment of the present disclosure is the weighting coefficient to be calculated.

For example, when the size of the current prediction block is flexible, the non-linear mapping model may be adjusted according to the WCP control parameter (S). Taking the non-linear softmax function as an example, different scale parameter adjustment functions may be selected according to different block classification categories to which the current prediction block belongs, and in this case, equation for calculating the weight vector corresponding to each pixel to be predicted is as shown in (4):

$$cWeightFloat[i][j][k] = \frac{e^{\frac{-diffY[i][j][k]}{S}}}{\sum_{n=0}^{inSize-1} e^{\frac{-diffY[i][j][n]}{S}}} \qquad (4)$$

After the above calculation is completed, *cWeightFloat* may be fixed-point converted, for example:

$$cWeight[i][j][k] = round\left(cWeightFloat[i][j][k] \times 2^{Shift}\right) \qquad (5)$$

Among the above,

$$\text{Round(x)} = \text{Sign(x)} \times \text{Floor(Abs(x)} + 0.5)$$

$$\text{Sign(x)} = \begin{cases} 1 & ; & x > 0 \\ 0 & ; & x == 0 \\ -1 & ; & x < 0 \end{cases}$$

Floor(x) denotes the largest integer less than or equal to x

$$\text{Abs(x)} = \begin{cases} x & ; & x >= 0 \\ -x & ; & x < 0 \end{cases}$$

To improve the accuracy of the weight of the chroma reference point in the WCP algorithm to obtain a weighted chroma prediction value closer to the non-compressed original chroma value, in the present patent, the present disclosure mainly uses the non-linear softmax function (e.g., the equation (4)) as a basic mapping model, thereby adjusting the control parameter S of the non-linear model.

In an embodiment, in some embodiments, the operation that the first input parameter is determined according to the reference sample value of the first color component of the current block and the first control parameter may include the following operations. the first input parameter is set to be equal to the ratio of the reference sample value of the first color component of the current block to the first control parameter. That is, diffY[i][j][k]/S is taken as the first input parameter, the ratio of diffY[i] [j][k] to S is calculated first, and is then substituted into equation (4) to calculate the weight value.

In an embodiment, in some embodiments, the operation that the first input parameter is determined according to the reference sample value of the first color component of the current block and the first control parameter may include the following operations. The first input parameter is set to be equal to the product of the reference sample value of the first color component of the current block and the first control parameter. That is, diffY[i][j][k]/S is regarded as the first input parameter, the division operation is converted into a multiplication operation to calculate the product of diffY[i][j][k] and 1/S, and the product is substituted into equation (4) to calculate the weight value.

In some embodiments, the operation that the first input parameter is determined according to the reference sample value of the first color component of the current block and the first control parameter may include the following operations. The first input parameter is set to be equal to a value obtained by right-shifting the reference sample value of the first color component of the current block by S bits. The value of S is determined according to the first control parameter. In an embodiment, the value of S is set to be equal to the first control parameter. That is, diffY[i][j][k]/S is taken as the first input parameter, and the division operation is converted into a right shift operation, which can reduce the computational difficulty since the implementation of the right shift operation is less difficult than the implementation of division.

In some embodiments, the operation that the first input parameter is determined according to the reference sample value of the first color component of the current block and the candidate value among the first control parameter candidates may include the following operations. The reference sample value of the first color component of the current block and the first control parameter are used as index values for a value mapping lookup table, and the value mapping lookup table is searched to obtain a corresponding array element value. The first input parameter is set to be equal to the array element value.

In addition, in some embodiments, the mapping relationship may simplify operations, for example, an array element lookup may be used to reduce part of the calculation operations. For example, a mapping lookup table consisting of reference sample values of the first color component, first control parameters and array elements is preset. The reference sample value of the first color component and the first control parameter are used as index values, the mapping lookup table is searched to obtain the array element, and then a value corresponding to the array element value in a preset non-linear mapping function relationship is determined. The weighting coefficient is then set to be equal to this value.

In an embodiment, when calculating a floating-point-type weighting coefficient or a fixed-point converted weighting coefficient, operations the same as those of numerator calculation are all obtained through a look-up table, thereby avoiding calculation operations of numerator and denominator parts. The details are as follows:

For example, a calculation equation for the floating-point-type weighting coefficient may be presented as follows:

$$cWeightFloat[i][j][k] = f(diffY[i][j][k]) = \frac{e^{\frac{-diffY[i][j][k]}{S}}}{\sum_{n=0}^{inSize-1} e^{\frac{-diffY[i][j][n]}{S}}} \quad (6)$$

The numerator of the function expression of equation (6) described above may be completely stored by using an independent variable $diffY[i][j][k]$ and the value of S to be traversed as the array indexes.

Complete storage means that the value range of $diffY[i][j][k]$ and numerators of the number of S to be traversed are all stored. Under the complete storage, an array space with the size of (the value range of $diffY[i][j][k]$ multiplied by the number of S to be traversed) is required. For a certain control parameter S value, the size of the table required to be stored is the size of the value range of $diffY[i][j][k]$. The case that the pixel of 10 bits and the equation (6) are used to calculate the weighting coefficient is taken as an example.

The variable $diffY[i][j][k]$ is an integer ranging from 0 to 1023. In this main embodiment, the range of the control parameter S is not limited temporarily. If the selection range of the parameter S is continuous, the starting value of S is 1, and the difference between two neighboring values of S is 1, i.e., 1, 2, 3, 4, ... S. The corresponding index is 1, 2, 3, 4, ... S. The values of $diffY[i][j][k]$ and S are used as the indexes of a two-dimensional array storMole to completely store the numerator:

$$flag_S = \begin{cases} 1, S = 1 \\ 2, S = 2 \\ S, S = S \end{cases}$$

The calculation of the floating-point-type weighting coefficient may be presented as:

$$cWeightFloat[i][j][k] = f(diffY[i][j][k]) = \frac{storMole[diffY[i][j][k]][flag_S]}{\sum_{n=0}^{inSize-1} storMole[diffY[i][j][n]][flag_S]} \quad (7)$$

$$k = 0,1,2, \ldots inSize - 1$$

The elements of [index 1] and [index 2] of the two-dimensional array storMole are as shown in Table 1.1. The $diffY[i][j][k]$ is the index 1, and flags is the index 2.

Table 1.1 Value mapping lookup table

| Array index 1 | Array index 2 (flags) | Array element |
|---|---|---|
| 0 | 1 | $e^{\frac{-0}{1}}$ |
| 1 | 1 | $e^{\frac{-1}{1}}$ |
| ... | ... | ... |
| 1023 | 1 | $e^{\frac{-1023}{1}}$ |
| 0 | 2 | $e^{\frac{-0}{2}}$ |
| 1 | 2 | $e^{\frac{-1}{2}}$ |
| ... | ... | ... |
| 1023 | 2 | $e^{\frac{-1023}{2}}$ |
| ... | ... | ... |
| 0 | S | $e^{\frac{-0}{S}}$ |
| 1 | S | $e^{\frac{-1}{S}}$ |

(continued)

| Array index 1 | Array index 2 (flags) | Array element |
|---|---|---|
| ... | ... | ... |
| 1023 | S | $e^{\frac{-1023}{S}}$ |

In some embodiments, for the fixed-point calculation, an enlarged integer value may also be stored. That is, the array elements in Table 1.1 are enlarged integer values, and a corresponding reduction operation needs to be performed after a prediction value is obtained.

Further, the operation that the weighting coefficient is determined according to the preset mapping relationship and the first input parameter may include the following operations. The first input parameter is used as an input value of the preset mapping relationship, and the weighting coefficient is set to be equal to an output value of the preset mapping relationship. The preset mapping relationship is a correspondence between the first input parameter and the weighting coefficient, and the value of the weighting coefficient decreases as the value of the first input parameter increases. That is, after the first input parameter of equation (4) is determined, a function operation is performed to obtain a corresponding weight value.

At operation 504: a prediction value of the second color component of the current block is determined determining according to the weighting coefficient and a reference sample value of a second color component of the current block.

In some embodiments, the operation that the prediction value of the second color component of the current block is determined determining according to the weighting coefficient and the reference sample value of the second color component of the current block may include the following operations. A weighted sum of the weighting coefficient and the reference sample value of the second color component of the current block is calculated to determine the prediction value of the second color component of the current block.

In some embodiments, the operation that the prediction value of the second color component of the current block is determined determining according to the weighting coefficient and the reference sample value of the second color component of the current block may include the following operations. A weighted sum of the weighting coefficient and the reference sample value of the second color component of the current block is calculated to determine a first prediction value of the second color component of the current block, and the first prediction value of the second color component of the current block is filtered to determine the prediction value of the current block.

In some embodiments, the reference sample value of the second color component of the current block is set to be equal to an neighboring sampling value of the second color component of the current block or a value obtained by filtering the neighboring sampling value of the second color component of the current block.

The neighboring sampling value of the second color component is a value obtained according to the reconstruction value of the second color component of the reference pixel. The reconstruction value of the second color component of the reference pixel is directly used as the neighboring sampling value of the second color component, or the reconstruction value of the second color component of the reference pixel is filtered to obtain the neighboring sampling value of the second color component. In an embodiment, when the second color component is a chroma component, the reference sample value of the second color component is a reconstruction value of the chroma component of the reference pixel or a value obtained by filtering the reconstruction value of the second color component of the reference pixel.

A weight vector *cWeightFloat[i][j]* or *cWeight[i][j]* corresponding to each pixel to be predicted in the current block is calculated according to the control parameter S. The weight vector may be fixed-point converted or not fixed-point converted. Then, the chroma prediction value of the pixel to be predicted is calculated according to the weight vector cWeight[i][j] (or *cWeightFloat[i][j]*) and reference chroma information refC corresponding to each pixel to be predicted. Specifically, the reference chroma information refC of each pixel to be predicted $C^{pred}[i][j]$ is multiplied one by one with the weight vector element corresponding to the each pixel to be predicted to obtain subC[i][j] (or subCFloat[i][j]), and the multiplication results are accumulated to obtain the chroma prediction value $C^{pred}[i][j]$ of each pixel to be predicted (i.e., weighted prediction). The calculation equation is as follows: for k = 0, 1, ... inSize-1

$$subCFloat[i][j][k] = (cWeightFloat[i][j][k] \times refC[k]) \qquad (8)$$

After the calculation is completed, the subCFloat may be fixed-point converted, and in the process of fixed-point conversion, in order to maintain a certain calculation accuracy, a coefficient may be multiplied, for example:

$$subC[i][j][k] = round(subCFloat[i][j][k] \times 2^{Shift}) \qquad (9)$$

or:

$$subC[i][j][k] = (cWeight[i][j][k] \times refC[k]) \tag{10}$$

For i = 0, ..., predSizeW-1, j = 0, ..., predSizeH-1, and k = 0, 1, ... inSize-1,

$$C^{pred}Float[i][j] = \sum_{k=0}^{inSize-1} subCFloat[i][j][k] \tag{11}$$

After the calculation is completed, $C^{pred}Float[i][j]$ is fixed-point converted, for example:

$$C^{pred}[i][j] = round(C^{pred}Float[i][j]) \tag{12}$$

or the fixed-point converted subC[i][j][k] is used for calculation:

$$C^{pred}[i][j] = \left(\sum_{k=0}^{inSize-1} subC[i][j][k] + Offset\right) \gg Shift_1 \tag{13}$$

where Offset = 1 « ($Shift_1$ - 1), and $Shift_1$ is the amount of shift required in the fixed-point operation used to improve the accuracy during the calculation of cWeight[i][j][k] or $subC[i][j][k]$ ($Shift_1$ = Shift) or during other operations.

Further, the method may also include the following operations. The prediction value is corrected. In an embodiment, for the correction of the chroma prediction value $C^{pred}[i][j]$, the chroma prediction value should be within a limited range, and if the range is exceeded, a corresponding correction operation should be performed.

In an embodiment, a clipping operation can be performed on the chroma prediction value of $C^{pred}[i][j]$, which is specifically as follows:

when the value of $C^{pred}[i][j]$ is less than 0, it is set to 0; and when the value of $C^{pred}[i][j]$ is larger than (1<<BitDepth)-1, it is set to (1<<BitDepth)- 1. BitDepth is a bit depth required for chroma values to ensure that all prediction values are between 0 and (1<<BitDepth)- 1.

That is:

$$C^{pred}[i][j] = Clip3(0, (1 \ll BitDepth) - 1, C^{pred}[i][j]) \tag{14}$$

where

$$Clip3(x, y, z) = \begin{cases} x; z < x \\ y; z > y \\ z; otherwise \end{cases} \tag{15}$$

or the calculation of equation (13) and the calculation of equation (14) are combined into the following equation:

$$C^{pred}[i][j] = Clip3(0, (1 \ll BitDepth) - 1), \left(\sum_{k=0}^{inSize-1} subC[i][j][k] + Offset\right) \gg Shift_1 \tag{16}$$

Further, the method may also include the following operations. The prediction value is post-processed. The weighted chroma prediction value (here represented by a predWcp) needs to be post-processed under certain conditions to obtain a final chroma prediction value predSamples. Otherwise, the final chroma prediction value predSamples is predWcp.

In an embodiment, the post-processing operation includes: (1) when predSizeW in the WCP core parameters is not equal to the width nTbW of the current block, or when predSizeH is not equal to the width nTbH of the current block, the upsampling or downsampling operation needs to be performed on predWcp to obtain the final chroma prediction value predSamples.

(2) To reduce the instability caused by pixel-by-pixel WCP independent parallel prediction, predWcp can be smoothly filtered as the final chroma prediction value predSamples.

(3) To further improve the accuracy of the WCP prediction value, a position-related correction process may be performed on predWcp. For example: a chroma compensation value for each pixel to be predicted is calculated using reference pixels located close to each other in space, predWcp is corrected using the chroma compensation value, and the corrected prediction value is used as the final chroma prediction value predSamples.

(4) To further improve the accuracy of the WCP prediction value, the chroma prediction values calculated by other chroma prediction techniques may be weighted and fused with the chroma prediction value predWcp calculated by WCP, and the fusion result is used as the final chroma prediction value predSamples. For example, the chroma prediction value predicted by the CCLM technique and the chroma prediction value predWcp by WCP may be weighted with equal weights or unequal weights, and the weighted result is used as the final chroma prediction value predSamples.

(5) To improve the prediction performance of WCP, the prediction output predWcp of WCP may be corrected using a neural network.

The embodiments of the present disclosure provide a weighted chroma prediction method (WCP). As shown in FIG. 5B, for each sample point recY[i][j] in a downsampled luminance block, firstly, a luminance difference vector diffY[i][j] is obtained according to the absolute value of the difference between recY[i][j] and an neighboring luminance vector refY [k]. Secondly, a normalized weight vector cWeight[i][j] is derived according to a non-linear mapping model related to diffY[i] [j]. Thirdly, the weight vector is used and is vector-multiplied with the neighboring chroma vector to obtain a chroma prediction value Cpred[i][j] of the prediction chroma sample.

At operation 505: a reconstruction value of a second color component sampling point of the current block is determined according to the prediction value of the second color component of the current block.

In some embodiments, the operation that the reconstruction value of the second color component sampling point of the current block is determined according to the prediction value of the second color component of the current block may include the following operations. The bitstream is decoded to determine a reconstruction value of a prediction difference of the second color component of the current block, and the reconstruction value of the second color component sampling point of the current block is determined according to a sum of the prediction value of the second color component of the current block and the reconstruction value of the prediction difference of the second color component of the current block.

Here, the prediction difference may be understood as a residual of the second color component, and the decoding end adds the prediction value and the reconstruction value of the prediction difference obtained by decoding the bitstream, so as to obtain the reconstruction value of the second color component of the pixel to be predicted in the current block.

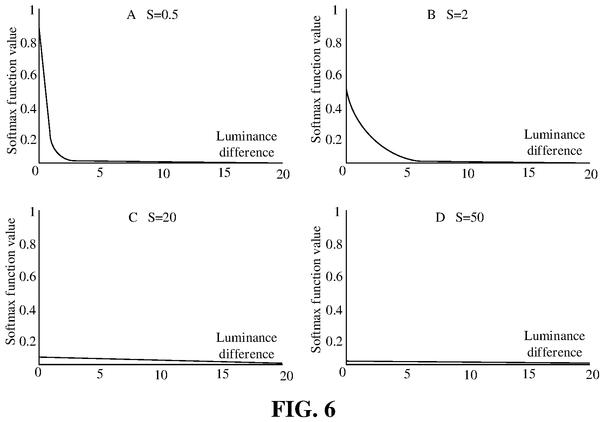

Due to the flexibility of block division, the prediction blocks may be divided into large and small blocks, square and rectangular blocks, and so on. To deal with various block types, prediction blocks may be classified according to the size of the prediction blocks or the number of pixels of the prediction blocks through theoretical analysis, and the same fixed control parameter S can be used for the same type of prediction blocks. S=0.5 in FIG. 6A, S=2 in FIG. 6B, S=20 in FIG. 6C, and S=50 in FIG. 6D. It can be seen that the softmax curve tends to become flat as the control parameter S increases, and it can be seen from FIGS. 6C and 6D that the weighting coefficient of the reference pixel hardly changes as the luminance difference increases. However, when the control parameter S is small, it can be seen from FIGS. 6A and 6B that the weighting coefficient of the reference pixel rapidly decreases as the luminance difference increases. In general, as the luminance difference increases, the weighting coefficient of the reference pixel decreases, but the speed at which the weighting coefficient decreases becomes slower as the control parameter S increases. The video content often affects the result of block division. For a region with simple content and flat pixels, the coder would divide the region into large blocks. For a region with complex content and a high pixel change rate, the coder would divide the region into small blocks. This division mechanism ensures the prediction accuracy to a certain extent while reducing bitrates. Therefore, theoretically, in most cases, for a large block of content, the content of the reference region and the content of the current block are close to each other, the weight distribution of reference points should be more uniform, and in this case, a larger control parameter S should be selected. For a small block of content, the correlation between the content of the reference region and the content of the current block is weakened, a large weight should be given to reference points with small luminance differences, and a small weight or even a weight of 0 should be given to reference points with large luminance differences. That is, the weight distribution of the reference points needs to exhibit an uneven distribution, and in this case, a smaller control parameter S should be selected.

Based on the foregoing, the selection of the first control parameter would be further exemplified in the embodiments of the present disclosure.

In some embodiments, operation that the first control parameter is determined according to the first control parameter candidates may include the following operations. The first control parameter is determined from the first control parameter candidates according to a prediction parameter of the current block. It can be understood that, when the first control parameter candidates include multiple candidate values of the first control parameter, the decoding end determines one first control parameter from the multiple candidate values according to the prediction parameter of the current block.

In some embodiments, the operation that the first control parameter is determined from the first control parameter candidates according to the prediction parameter of the current block may include the following operations. The first control parameter is determined from the first control parameter candidates based on a preset correspondence between prediction parameters and first control parameters according to the prediction parameter of the current block. It can be understood that all of the first control parameters included in the correspondence are regarded as first control parameter candidates of the current block, and according to the prediction parameter of the current block, a corresponding first control parameter is determined as the first control parameter of the current block. That is, the first control parameter is set to be equal to a first control parameter corresponding to the prediction parameter of the current block among the first control parameter candidates.

In some embodiments, the prediction parameter of the current block at least includes a size of the current block. The size of the current block includes at least one of a height of a current block, a width of the current block, a number of first color component sampling points included in the current block, or a number of second color component sampling points included in the current block. Here, the first color component sampling points and the second color component sampling points are pixel points to be predicted within the current block, and the first color component sampling points and the second color component sampling points may be pixel points completely identical to each other or not completely identical to each other.

It should be noted that, in the embodiments of the present disclosure, the value of the first control parameter may be determined by means of classification. For example, three categories are obtained by classification according to the size parameter of the current block, and the value of the first control parameter corresponding to each category is determined. Alternatively, three categories are obtained by classification according to the number of sampling points of the current block, and the value of the first control parameter corresponding to each category is determined. In this case, in the embodiments of the present disclosure, a correspondence between classification parameters and first control parameters may be transmitted in the bitstream, and the value of the first control parameter may be determined according to the correspondence. In an embodiment, Table 1.2 shows a correspondence between the first control parameter and a size parameter of the current block provided in an embodiment of the present disclosure, and Table 1.3 shows a correspondence between the first control parameter and the number of sampling points of the current block provided in an embodiment of the present disclosure. It should be noted that Tables 1.2 and 1.3 are merely exemplary look-up tables, and the present disclosure is not specifically limited thereto.

Table 1.2

| Size of current block | Control parameter S obtained in from the bitstream |
|---|---|
| Min(W,H)<=4 | 8 |
| Min(W,H)>4&&Min(W,H)<=16 | 12 |
| Min(W,H)>16 | 16 |

Table 1.3

| Number of pixels in the current block | Control parameter S obtained in from the bitstream |
|---|---|
| W×H<128 | 4 |
| 128<=W×H && W×H <256 | 8 |
| W×H >256 | 16 |

It should be noted that different control parameters S may be designed for different coding chroma block size classification manners or different numbers of pixels in coding blocks, which includes, but is not limited to, the above classification manners and classification theory. For the classification theory, for example, it is also possible to take into account the content specificity of certain sequences: small blocks tend to be given large weights, and large blocks tend to be given small weights, and so on.

In some embodiments, the prediction parameter of the current block include a prediction mode of the current block. In an embodiment, the prediction mode may be a chroma prediction mode, which is a weighted chroma prediction (WCP) method. When multiple WCP modes are included, different control parameters may be set for different WCP modes in some embodiments.

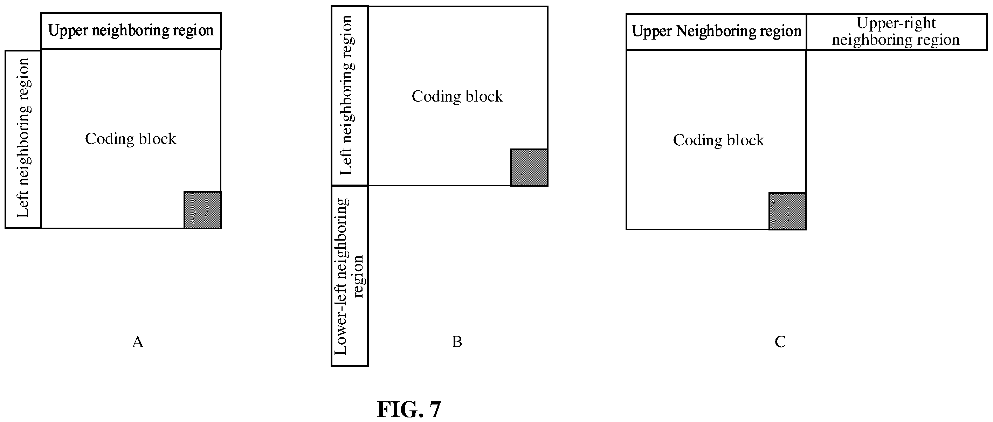

In some embodiments, the WCP modes are divided into three types of modes according to available reference regions: a WCP mode, a WCP_L mode, and a WCP_T mode. As shown in FIG. 7A, reference regions of the WCP mode include: an upper neighboring region and a left neighboring region of the current block. As shown in FIG. 7B, reference regions of the WCP_L mode include: a left neighboring region and a lower-left neighboring region of the current block. As shown in FIG. 7C, reference regions of the WCP_T mode include: an upper neighboring region and an upper-right neighboring region of the current block.

In an embodiment, Table 1.4 shows a correspondence between a control parameter and a prediction mode according to an embodiment of the present disclosure.

Table 1.4

| WCP mode of current block | Control parameter S obtained in from the bitstream |
|---|---|
| WCP mode | 4 |
| WCP_T mode | 8 |
| WCP_L mode | 16 |

In some embodiments, the prediction parameter of the current block includes an index parameter of the first control parameter. Here, the index parameter is used to index the first control parameter corresponding to a pixel to be predicted in the current block. In some other embodiments, the prediction parameter of the current block includes at least two parameters among the size of the current block, the prediction mode of the current block, and the index parameter of the first control parameter. In an embodiment, Table 1.5 shows a correspondence between the first control parameter and a prediction mode according to an embodiment of the present disclosure.

Table 1.5

| Size of current block | Control parameter S | Index parameter |
|---|---|---|
| Min(W,H)<=4 | 1 | 0 |
| Min(W,H)>4&&Min(W,H)<=8 | 4 | 1 |
| Min(W,H)>8&&Min(W,H)<=16 | 8 | 2 |
| Min(W,H)>16&&Min(W,H)<=32 | 16 | 3 |
| Min(W,H)>32 | 32 | 4 |

In some embodiments, the method further includes the following operations. A bitstream is parsed, and the preset correspondence between prediction parameters and first control parameters is determined. In an embodiment, the method includes the following operations. A slice header in the bitstream is decoded, and a parameter set directly or indirectly referenced by a slice is determined, and the slice corresponding to the slice header includes the current block. The preset correspondence between prediction parameters and first control parameters is determined according to the parameter set directly or indirectly referenced by the slice.

In some embodiments, the parameter set directly or indirectly referenced by the slice includes at least one of a sequence parameter set (SPS), a picture parameter set (PPS) or an adaptation parameter set (APS). That is, the correspondence may be in the PPS or APS directly referenced by the slice, or in the SPS indirectly referenced by the slice.

In some embodiments, the method further includes the following operations. The slice header is decoded, and the preset correspondence between prediction parameters and first control parameters is updated. It should be noted that, in actual application, the encoding end may retransmit all or part of the parameters in the correspondence in the slice header, and the retransmitted parameters may be the same as or different from the corresponding parameters in the parameter set, so that the correspondence may be updated using the data retransmitted in the slice header. Here, the update includes operations such as maintaining, replacing, modifying, adding, deleting, and other operations.

In some embodiments, the method further includes the following operations. A picture header in the bitstream is decoded, and the preset correspondence between prediction parameters and first control parameters is updated. A picture corresponding to the picture header includes the slice. It should be noted that, in actual application, the encoding end may also retransmit all or part of the parameters in the correspondence in the picture header, and the retransmitted parameters may be the same as or different from the corresponding parameters in the parameter set, and may be the same as or different from the corresponding parameters in the slice data unit, so that the correspondence may be updated by using the retransmitted data in the slice header.

Further, at the encoding end, several typical values of control parameter S may be configured by means of a CTC cfg configuration file, or the values of control parameter S may be directly given without configuring the control parameter S by means of the cfg file. When the control parameter S is configured in the cfg file, the encoding end reads the values of control parameter S when parsing the cfg configuration file, and sequentially writes the values of control parameter S or indexes of the control parameter S into the bitstream at the SPS layer. When the control parameter S is not configured in the cfg configuration file, the encoding end directly writes given values of control parameter S or indexes of the control parameter S into the bitstream sequentially at the SPS layer. The manner of writing the bitstream may be variable-length coding or fixed-length coding. When the WCP chroma prediction is performed on the current block, the decoding end acquires the values of control parameter S or the indexes of the control parameter S transmitted from the SPS layer by parsing the bitstream, and uses the acquired corresponding values of control parameter S for the calculation process of the weight vector during the chroma prediction of the current block by means of a certain condition, for example, limitation conditions such as a block size or the number of pixels in a block. An example of acquiring the control parameter S from the SPS layer according to the block size condition is as shown in Table 1.2 or 1.3 below.

It should be noted that, when the control parameter S is configured by means of the cfg file, this manner of reading the S control parameter configured in the cfg file at the SPS layer may set different values for the S control parameter according to different characteristics (e.g., size, prediction mode, etc.) of different sequences, thereby achieving an adaptive effect.

In an embodiment, a syntax parsing process in which fixed-length coding of S is performed at the decoding end is as follows:

| seq_parameter_set_rbsp( ) { | **Descriptor** |
|---|---|
| **sps_wcp_enabled_flag** | u(1) |
| if(sps_wcp_enabled_flag){ | |
| for(i = 0; i < sps_wcp_S_Num; i++) | |
| **sps_ S_ wcp[ i ]** | u(6) |
| } | |
| } | |

A syntax process in which variable-length coding of S is performed at the decoding end is as follows:

| seq_parameter_set_rbsp( ) { | **Descriptor** |
|---|---|
| **sps_wcp_enabled_flag** | u(1) |
| if(sps_wcp_enabled_flag){ | |
| for(i = 0; i < sps_wcp_S_Num; i++) | |
| **sps_ S_ wcp[ i ]** | ue(v) |
| } | |
| } | |

sps_wcp_enabled_flag: the flag indicates whether WCP is enabled at the sps layer. The value of the flag being 1 indicates that WCP is enabled, and the value of the flag being 0 indicates that WCP is not enabled.

sps_wcp_S_Num: denotes the number of the control parameters S.

sps_S_wcp[i]: denotes the value of an i-th control parameter S of components Cb and Cr in the SPS layer or the index of the control parameter S.

In addition to configuring several typical values of control parameter S in the CTC cfg configuration file or directly providing the control parameter values without configuring the cfg file. In some embodiments, some threshold parameters Thr may be added to the CTC cfg configuration file or may be directly given without configuring the cfg file. That is, the corresponding values of control parameter S may be adaptively selected through the threshold parameters which are configured by the cfg file or directly given. The details are as follows:

Several typical values of control parameter S and several threshold parameters Thr may be configured by the CTC cfg configuration file, or may be directly given without being configured by cfg, and there is a correspondence between the values of control parameter S and the threshold parameters Thr. The number sps_wcp_S_Num of values of control parameter S and the number sps_wcp_Thr_Num of the threshold parameters Thr are fixed, and may also be transmitted at the encoding end. The threshold parameters Thr may be any parameter related to the coding block, such as a quantization parameter (QP), a width, a height, a number of pixels etc., of the coding block. When the control parameter S and the threshold parameters Thr are configured in the cfg file, the encoding end reads the values of the control parameter S and the threshold parameters Thr when parsing the cfg file, and sequentially writes the values of the control parameter S or the indexes of the control parameter S, and the threshold parameters Thr or the indexes of the threshold parameters Thr into the bitstream at the SPS layer. When the control parameter S and the threshold parameters Thr are not configured in the cfg file, the encoding end directly writes the given values of control parameter S or the indexes of the control parameter S, and the threshold parameters Thr or the indexes of the threshold parameters Thr into the bitstream sequentially at the SPS layer. The manner of writing the bitstream may be variable-length coding or fixed-length coding. When WCP chroma prediction is performed on the current block, the decoding end acquires the values of control parameter S or the indexes of the control parameter S, and the values of the threshold parameters Thr or the indexes of the threshold parameters Thr transmitted from the SPS layer by parsing the bitstream, and uses the acquired corresponding values of control parameter S for the calculation process of the weight vector during the chroma prediction of the current block according to the threshold parameters Thr. A related example of the threshold parameters Thr and the control parameter S is as follows:

For example, the threshold parameter Thr may be related to a QP value: when QP < QP_Thr0, S = S0; when QP_Thr0 < QP <= QP_Thr1, S = S1; and when QP > QP_Thr1, S = S2. QP is a QP value of the current coding block, QP_Thr0 and QP_Thr1 are threshold parameters, and S0, S1, and S2 are control parameters S.

It should be noted that, when the control parameters S and the threshold parameters Thr are configured by the cfg file, this manner of reading the control parameters S and the threshold parameters Thr configured in the cfg file at the SPS layer may set different values of control parameters S and threshold parameters Thr according to different characteristics of different sequences, thereby achieving an adaptive effect.

A syntax parsing process in which the fixed-length coding of the control parameter S or its index and the threshold Thr or its index is performed at the decoding end is as follows:

| seq_parameter_set_rbsp( ) { | Descriptor |
|---|---|
| **sps_wcp_enabled_flag** | u(1) |
| if(sps_wcp_enabled_flag){ | |
| for(i = 0; i < sps_wcp_S_Num; i++) | |
| **sps_ S_ wcp[ i ]** | u(6) |
| for(j = 0; j < sps_wcp_Thr_Num; j++) | |
| **sps_Thr_wcp[ j ]** | u(6) |
| } | |
| } | |

A syntax parsing process in which variable-length coding of the control parameter S or its index and the threshold Thr or its index is performed at the decoding end is as follows:

| seq_parameter_set_rbsp( ) { | Descriptor |
|---|---|
| **sps_wcp_enabled_flag** | u(1) |
| if(sps_wcp_enabled_flag){ | |
| for(i = 0; i < sps_wcp_S_Num; i++) | |
| **sps_ S_ wcp[ i ]** | ue(v) |
| for(j = 0; j < sps_wcp_Thr_Num; j++) | |
| **sps_Thr_wcp[ j ]** | ue(v) |
| } | |
| } | |

sps_wcp_enabled_flag: the flag indicates whether WCP is enabled at the sps layer. The value of the flag being 1 indicates that WCP is enabled, and the value of the flag being 0 indicates that WCP is not enabled.

Sps_wcp_S_Num: denotes the number of the control parameters S.

sps_wcp_Thr _Num: denotes the number of the threshold parameters Thr.

sps_S_wcp[i]: denotes the value of an i-th control parameter S of components Cb and Cr in the SPS layer or the index of the control parameter S.

sps_Thr_wcp[j]: denotes the value of a j-th threshold parameter S of components Cb and Cr in the SPS layer or the index of the threshold parameter Thr.

In addition to acquiring the control parameters S transmitted at the SPS layer according to certain limitation conditions, it is also possible to acquire control parameters S transmitted at the APS layer according to certain limitation conditions (for example, the limitation conditions may be the same as those for acquiring the control parameters S in the SPS layer above). It should be noted that the values of the control parameters S transmitted at the APS layer and the number of S may be flexibly set. The syntax semantics are as follows (where S or its index may be variable-length coded or fixed-length coded):

| seq_parameter_set_rbsp( ) { | Descriptor |
|---|---|
| **sps_wcp_enabled_flag** | u(1) |
| } | |

| adaptation_parameter_set_rbsp( ) { | Descriptor |
|---|---|
| if(sps_wcp_enabled_flag){ | |
| for(i = 0; i < aps_wcp_S_Num; i++) | |
| **aps_ S_ wcp[ i ]** | ue(v) |
| } | |
| } | |

sps_wcp_enabled_flag: the flag indicates whether WCP is enabled at the sps layer. The value of the flag being 1 indicates that WCP is enabled, and the value of the flag being 0 indicates that WCP is not enabled.

aps_wcp_S_Num: denotes the number of the control parameters S.

aps_S_wcp[i]: denotes the value of an i-th control parameter S of components Cb and Cr at the APS layer or the index of the control parameter S.

Different control parameters S are used according to different categories of block classification, and transmitted through the SPS layer, the APS layer, or the PPS layer. The selectable range of the control parameter S is small, and the implementation at the encoding and decoding ends is relatively simple, which is applicable to most coding blocks.

In addition to the above and the transmission of a few candidate control parameters, it is also possible to have more options for the control parameter S to comprehensively measure the characteristics of all coding blocks in all sequences. Therefore, in the embodiment of the present disclosure, more candidate control parameters S are further given at the encoding end, the best control parameter S is selected from these candidate control parameters by introducing the original value of the coding block, and the selection process of the best control parameter at the encoding end is described in detail below.

A weighted chroma prediction (WCP) method is provided in an embodiment of the present disclosure. When the chroma prediction is performed on the current block, luminance reconstruction information of the current block, and luminance reconstruction information and chroma reconstruction information of neighboring reference regions are all coded reconstruction information. The weighted chroma prediction is implemented by using the above reconstruction information. The chroma prediction process would be introduced in detail below, which includes the following operations.

Input of WCP: the position (xTbCmp, yTbCmp) of the current chroma prediction block, the width nTbW of the current chroma prediction block and the height nTbH of the current chroma prediction block.

Output of WCP: a prediction value predSamples[x][y] of the current chroma prediction block, where x = 0, ... nTbW-1, and y = 0, ... nTbH-1, with the top-left pixel position in the current chroma prediction block as a coordinate origin.

The prediction process of the WCP technique includes determination of WCP core parameters, acquisition of input information, weighted chroma prediction and post-processing process. The chroma prediction value of the current chroma prediction block can be obtained through the above operations.

The WCP core parameters include: a control parameter (S), the number inSize of weighted chroma prediction inputs, and the number of weighted chroma prediction outputs (predWcp) (arranged in predSizeW×predSizeH). The number of weighted chroma prediction outputs (predWcp) may be set to the same value (e.g., predSizeW=redSizeH=S/4) or related to the current block size (e.g., predSizeW=nTbW, predSizeH=nTbH). The control parameter S may be used to adjust a non-linear function in subsequent operations or to adjust data involved in subsequent operations. The determination of the WCP core parameters is affected by the block size or block content under certain conditions. For example, if there are many types of block sizes applied by WCP, or the block contents are significantly different, or the numbers of pixels in the blocks are significantly different, the blocks may be classified, and the same or different core parameters may be determined according to different types of blocks.

In an embodiment, the chroma block is classified according to the width and height of the chroma prediction block, and the type of the chroma block is represented by wcpSizeId. For different types of chroma blocks, the WCP control parameter (S), the number inSize of weighted chroma prediction inputs, the number of weighted chroma prediction outputs (predWcp) (arranged in predSizeW×predSizeH) may be the same or different. Here, an example is provided to illustrate the case that classification includes three categories. nTbW is the width of the current chroma prediction block, nTbH is the height of the current chroma prediction block, and the category wcpSizeId of the chroma block is defined as follows:
For the chroma block with wcpSizeId=0: min(nTbW, nTbH)<=4, the WCP control parameter (S) is 8, inSize is (2×nTbH+2×nTbW), and the weighted chroma prediction outputs nTbH×nTbW chroma prediction values;
wcpSizeId=1: 4<min(nTbW, nTbH)<=16. The WCP control parameter (S) is 12, inSize is (2×nTbH+2×nTbW), and the weighted chroma prediction outputs nTbH×nTbW chroma prediction values; and
wcpSizeId=2: min(nTbW, nTbH)>16. The WCP control parameter (S) is 16, inSize is (2×nTbH+2×nTbW), and the weighted chroma prediction outputs nTbH×nTbW chroma prediction values. The above quantitative relationship is correspondingly presented in the form of a table, as shown in Table 1.6:

Table 1.6

| wcpSizeId | S | inSize | predSizeH | predSizeW |
|---|---|---|---|---|
| 0 | 8 | 2×nTbH+2× | nTbH | nTbW |
| 1 | 12 | 2×nTbH+2× | nTbH | nTbW |
| 2 | 16 | 2×nTbH+2× | nTbH | nTbW |

Another example can be further provided to illustrate the case that the classification includes three categories. The type wcpSizeId of the chroma block is defined as follows:
For the chroma block with wcpSizeId=0: min(nTbW, nTbH)<=4, the WCP control parameter (S) is 8, inSize is (2×nTbH+2×nTbW), and the weighted chroma prediction outputs nTbH×nTbW chroma prediction values;
wcpSizeId=1: 4<min(nTbW, nTbH)<=16. The WCP control parameter (S) is 12, inSize is (1.5×nTbH+1.5×nTbW), and the weighted chroma prediction outputs nTbH/2×nTbW/2 chroma prediction values; and
wcpSizeId=2: min(nTbW, nTbH)>16. The WCP control parameter (S) is 16, inSize is (nTbH+nTbW), and the weighted chroma prediction outputs nTbH/4×nTbW/4 chroma prediction values. The above quantitative relationship is correspondingly presented in the form of a table, as shown in Table 1.7:

Table 1.7

| wcpSizeId | S | inSize | predSizeH | predSizeW |
|---|---|---|---|---|
| 0 | 8 | 2×nTbH+2×nTbW | nTbH | nTbW |
| 1 | 12 | 1.5×nTbH+1.5×nTbW | nTbH/2 | nTbW/2 |
| 2 | 16 | nTbH+nTbW | nTbH/4 | nTbW/4 |

In WCP, the chroma block may also be classified according to the number of pixels in the chroma prediction block, and the type of the chroma block is denoted by wcpSizeId. The definition of the type wcpSizeId of the chroma block is as follows:
For the chroma block with wcpSizeId=0: (nTbW×NTbH)<128, the WCP control parameter (S) is 10, inSize is (2×nTbH+2×nTbW), and the weighted chroma prediction outputs nTbH×nTbW chroma prediction values;
For the chroma block with wcpSizeId=1: 128<=(nTbW×NTbH)<=256. The WCP control parameter (S) is 8, inSize is (2×nTbH+2×nTbW), and the weighted chroma prediction outputs nTbH×nTbW chroma prediction values; and
wcpSizeId=2: (nTbW×NTbH)>256. The WCP control parameter (S) is 1, inSize is (2×nTbH+2×nTbW), and the weighted chroma prediction outputs nTbH×nTbW chroma prediction values. The above quantitative relationship is correspondingly presented in the form of a table, as shown in Table 1.8:

Table 1.8

| wcpSizeId | S | inSize | predSizeH | predSizeW |
|-----------|---|--------|-----------|-----------|
| 0 | 10 | 2×nTb-H+2× | nTbH | nTbW |
| 1 | 8 | 2×nTb-H+2× | nTbH | nTbW |
| 2 | 1 | 2×nTb-H+2× | nTbH | nTbW |

Another example can be further provided to illustrate the case that the classification includes three categories: The definition of the type wcpSizeId of the chroma block is as follows:

For the chroma block with wcpSizeId=0: (nTbW×nTbH) < 64, the WCP control parameter (S) is 16, inSize is (2×nTbH+2×nTbW), and the weighted chroma prediction outputs nTbH×nTbW chroma prediction values; wcpSizeId=1: 64<=(nTbW×nTbH)<=512. The WCP control parameter (S) is 4, inSize is (1.5×nTbH+1.5×nTbW), and the weighted chroma prediction outputs nTbH/2×nTbW/2 chroma prediction values; and wcpSizeId=2: (nTbW×nTbH)>512. The WCP control parameter (S) is 1, inSize is (nTbH+nTbW), and the weighted chroma prediction outputs nTbH/4×nTbW/4 chroma prediction values.

The above quantitative relationship is correspondingly presented in the form of a table, as shown in Table 1.9:

Table 1.9

| wcpSizeId | S | inSize | predSizeH | predSizeW |
|-----------|---|--------|-----------|-----------|
| 0 | 16 | 2×nTbH+2×nTbW | nTbH | nTbW |
| 1 | 4 | 1.5×nTbH+1.5×nTbW | nTbH/2 | nTbW/2 |
| 2 | 1 | nTbH+nTbW | nTbH/4 | nTbW/4 |

When the input information is acquired and the current block is predicted, the upper region, the upper left region and the left region of the current prediction block are referred to as reference regions. As shown in FIG. 1, the pixels in the reference regions are all reconstructed reference pixels.

Reference chroma information refC and reference luminance information refY are acquired from the reference regions. The acquired reference chroma information includes, but is not limited to: selecting a reference chroma reconstruction value of an upper reference region and a reference chroma reconstruction value of a left reference region of the current chroma prediction block. The acquired reference luminance information includes, but is not limited to, acquiring corresponding reference luminance information according to the position of the reference chroma information. The luminance reconstruction information recY of the current prediction block is acquired, and the manner of acquisition includes, but is not limited to, acquiring the corresponding luminance reconstruction information to serve as the luminance reconstruction information of the current prediction block according to the position of chroma information in the current chroma prediction block.

Under certain conditions, refC or refY or recY may be a weighted chroma prediction input after being subjected to the pre-processing. In an embodiment, the pre-processing operation includes: (1) in order to reduce computational complexity, a point selection operation or a downsampling operation may be performed on refC or refY or recY; (2) different filtering operations may be performed on refC or refY or recY for current blocks of different sizes; (3) when the resolution of the chroma component of the video is not consistent with the resolution of the luminance component of the video, upsampling and downsampling operations may be performed on refC or refY or recY to facilitate subsequent chroma prediction calculation; (4) when the resolution of the chroma component of the video is consistent with the resolution of the luminance component of the video, multiple rows/columns of reference pixels may be used, and in this case, the upsampling and downsampling operations may also be performed on refC or refY or recY to facilitate subsequent chroma prediction calculation; and (5) when the quantity of the obtained refC or refY is different from the quantity of a core parameter inSize, it is necessary to perform the point selection operation or the upsampling and downsampling operations on refC or refY.

The operation that the input information is acquired includes acquiring the reference chroma information refC of the quantity of inSize (if the pre-processing is needed, the information has been pre-processed), acquiring the reference luminance information refY of the quantity of inSize (if the pre-processing is needed, the information has been pre-processed), and acquiring the luminance reconstruction information recY of the current prediction block (if the pre-processing is needed, the information has been pre-processed).

For weighted chroma prediction, for i=0, ..., predSizeW-1, j=0, ..., predSizeH-1, and k=0, 1...inSize-1, each element diffY[i][j][k] in the luminance difference vector is constructed, each element cWeight[i][j][k] (or cWeightFloat[i][j][k]) in the weight vector is calculated, and a chroma prediction value Cpred[i][j] is calculated by cWeight[i][j] (or cWeightFloat[i][j][k]) and refC. predSizeW is the width of a prediction block, predSizeH is the height of the prediction block, and inSize is the number of reference pixels.

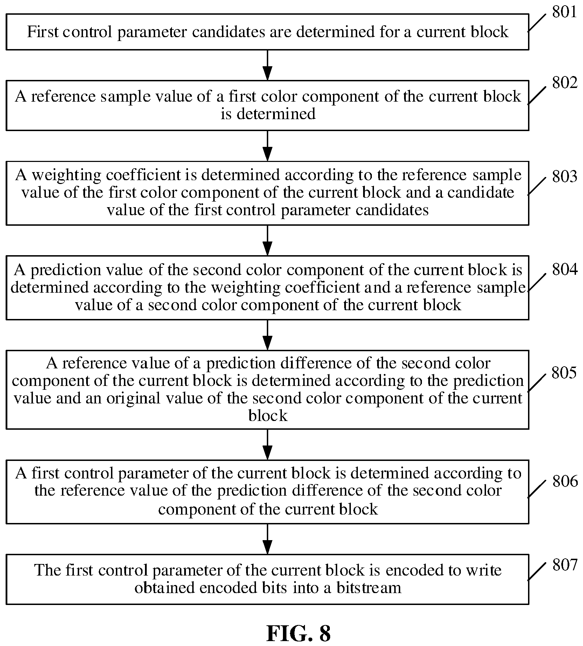

In still another embodiment of the present disclosure, referring to FIG. 8, a first flow chart of an encoding method provided in an embodiment of the present disclosure is shown. As shown in FIG. 8, the method may include the following operations.

At operation 801: first control parameter candidates are determined for a current block.

It should be noted that the encoding method in the embodiments of the present disclosure is applied to an encoder. In addition, the encoding method may specifically refer to an intra prediction method, more specifically, a color component prediction method. A video picture may be divided into multiple coding blocks, each coding block may include a first color component, a second color component, and a third color component. The current block in the embodiment of the present disclosure refers to a current coding block to be subjected to the intra prediction in the video picture.

When prediction of the first color component needs to be performed, a component to be predicted is the first color component. When prediction of the second color component needs to be performed, the component to be predicted is the second color component. When prediction of the third color component needs to be performed, the component to be predicted is the third color component. In addition, assuming that the prediction of the first color component is performed on the current block, and that the first color component is a luminance component (i.e., the component to be predicted is the luminance component), the current block may also be referred to as a luminance block. Alternatively, assuming that the prediction of the second color component is performed on the current block, and that the second color component is the chroma component (i.e., the component to be predicted is the chroma component), the current block may also be referred to as the chroma block. In addition, in the embodiments of the present disclosure, the current block may also be referred to as a prediction block, a coding block, or a decoding block.

The first control parameter candidates include multiple candidate values of the first control parameter, and the first control parameter candidates may be understood as a control parameter selection range corresponding to the current block. An encoding end determines one or more first control parameters for the current block from the control parameter selection range, writes the obtained first control parameters into the bitstream, and transmits the bitstream to a decoding end. In an embodiment, the control parameter selection range may be a continuous range, or may be a discontinuous range including several control parameters.

Further, one coding block may correspond to one selection range of the control parameter, or different selection ranges of the control parameter may be set for different color components in the coding block.

In an embodiment, in a first selection scheme, for the chroma components Cb and Cr, the same prediction is performed for Cb and Cr chroma blocks, and the same best S that is obtained is used for the components Cr and Cb. For all blocks, the selection range of a control parameter S is given, and S is traversed at a certain step size D within this selection range. Table 2.1 shows a correspondence between a selection range of the control parameter and a coding chroma block provided according to an embodiment of the present disclosure.

Table 2.1 Selection range of the control parameter and step size D for traversal in all coding chroma blocks

| Coded chroma block of WCP mode | Selection range of control parameter S | Step size D |
| --- | --- | --- |
| All coding chroma blocks | 1-32 | 1 |

In addition to traversing the control parameters S within a certain selection range, several typical control parameters S may also be selected. Table 2.2 shows a correspondence between several typical control parameters S and coding chroma blocks according to an embodiment of the present disclosure.

Table 2.2 Several typical control parameters S for traversal in all coding chroma blocks

| Coded chroma block of WCP mode | Several typical control parameters S |
| --- | --- |
| All coding chroma blocks | 1,4,8,16 |

In a second selection scheme, regarding the chroma components Cb and Cr, the prediction is performed separately for the components Cb and Cr, and each of Cb and Cr obtains a respective best S by traversing. The WCP does not classify the block size. For all blocks, the selection range of the control parameter S is given, and S is traversed at a certain step size D within this range, as shown in Table 2.3 below:

Table 2.3 Selection range of the control parameter S and the step size D for traversal in the chroma blocks Cb and Cr

| Coding chroma block of WCP mode | Selection range of the control parameter S | Step size D |
| --- | --- | --- |
| All coding Cb chroma blocks | 1-32 | 1 |
| All coding Cr chroma blocks | 1-64 | 2 |

In addition to traversing the control parameters S within a certain selection range, several typical control parameters S may also be selected, and the several typical control parameters S selected for the components Cb and Cr may be the same or different, for example, as shown in Tables 2.4 and 2.5 below:

Table 2.4 Selection range of several typical control parameters S and the step size D for traversal in the chroma blocks Cb and Cr

| Coded chroma block of WCP mode | Several typical control parameters S |
| --- | --- |
| All coding Cb chroma blocks | 1, 4, 8, 12 |
| All coding Cr chroma blocks | 1, 4, 8, 12 |

Table 2.5 Selection range of several typical control parameters S and the step size D for traversal in the chroma blocks Cb and Cr

| Coded chroma block of WCP mode | Several typical control parameters S |
| --- | --- |
| All coding Cb chroma blocks | 1,4,8,12 |
| All coding Cr chroma blocks | 1,4,8,16 |

At operation 802: a reference sample value of a first color component of the current block is determined.

In the embodiments of the present disclosure, the first color component and the second color component are different color components. The second color component is a component to be predicted in the embodiment of the present disclosure, the first color component is a reference color component in the embodiment of the present disclosure, and the reference sample value of the first color component and the first control parameter are used to determine the weighting coefficient.

In some embodiments, the operation that the reference sample value of the first color component of the current block is determined may include the following operations. the reference sample value of the first color component of the current block is determined according to an neighboring sampling value of the first color component of the current block and a reconstruction value of the first color component of the current block.

In an embodiment, the reference sample value of the first color component of the current block is set to be equal to the absolute value of the difference between a first intra-block reference value and a first neighboring reference value. The first intra-block reference value is the reconstruction value of the first color component of the current block or a value obtained by filtering the reconstruction value of the first color component of the current block. The first neighboring reference value is the neighboring sampling value of the first color component of the current block or a value obtained by filtering the neighboring sampling value of the first color component of the current block.

Here, the first intra-block reference value may be understood as the reconstruction value of the first color component of a pixel to be predicted in the current block, or a value obtained by filtering the reconstruction value of the first color component of the pixel to be predicted. The first neighboring reference value may be understood as a reconstruction value of the first color component of a reference pixel in the reference region, or a value obtained by filtering the reconstruction value of the first color component of the reference pixel.

In an embodiment, the first color component is exemplified as a luminance component, and the second color component is exemplified as a chroma component. The reference sample value of the first color component is the difference between a luminance reconstruction value (recY) of the pixel to be predicted and a luminance reconstruction value (refY) of the reference pixel. Under certain conditions, refY and recY may be pre-processed. In an embodiment, the pre-processing operation includes: (1) in order to reduce computational complexity, a point selection operation or a downsampling operation may be performed on refY or recY; (2) different filtering operations may be performed on refY or recY for current blocks of different sizes; (3) when the resolution of the chroma component of the video is not consistent with the resolution of the luminance component, upsampling and downsampling operations may be performed on refY or recY to facilitate the subsequent chroma prediction calculation; (4) when the resolution of the chroma component of the video is consistent with the resolution of the luminance component, multiple rows/columns of reference pixels may be used, and in this case, the upsampling and downsampling operations may also be performed on refY or recY to facilitate the subsequent chroma prediction calculation; and (5) when the quantity of the obtained refY is different from the quantity of a core parameter inSize, it is necessary to perform the point selection operation or the upsampling and downsampling operations on refY.

A luminance difference vector is constructed. For each pixel to be predicted, a luminance difference vector diffY[i][j][k] is obtained by subtracting luminance reconstruction information recY[i][j] corresponding to the pixel from the reference luminance information refY of inSize reference pixels and taking an absolute value, as shown in equation (2).

At operation 803: a weighting coefficient is determined according to the reference sample value of the first color component of the current block and a candidate value of the first control parameter candidates.

Here, the weighting coefficient may be calculated by means of a preset mapping relationship. In the embodiment of the present disclosure, the preset mapping relationship is a non-linear mapping relationship. Specifically, a function model (i.e., the preset mapping relationship, represented by f) for calculating the weighting coefficient may be constructed according to the trend that the closer the reference pixel is to the luminance information of the pixel to be predicted (i, j) in the current block, the higher the importance of the chroma of the reference pixel to the pixel to be predicted (i, j).

In some embodiments, the operation that the weighting coefficient is determined according to the reference sample value of the first color component of the current block and the candidate value of the first control parameter candidates may include the following operations. A first input parameter is determined according to the reference sample value of the first color component of the current block and the candidate value of the first control parameter candidates; and the weighting coefficient is determined according to a preset mapping relationship and the first input parameter.

In some embodiments, both the reference sample value of the first color component of the current block and the candidate value of the first control parameter candidates may be taken as the first input parameter, and inputted into a non-linear mapping function corresponding to the preset mapping relationship. The weighting coefficient is taken as an output value of the non-linear function. That is, both the reference sample value of the first color component and the first control parameter are taken as the input parameters of the non-linear function, and the value of the non-linear function changes as its input parameters change.

In an embodiment, the preset mapping relationship is a softmax function. Reference can be made to equations (4) and (5) for the specific mapping relationship.

In some embodiments, the operation that the first input parameter is determined according to the reference sample value of the first color component of the current block and the candidate value of the first control parameter candidates may include the following operations. The first input parameter is set to be equal to the ratio of the reference sample value of the first color component of the current block to the candidate value of the first control parameter candidates. That is, diffY[i][j][k]/S is taken as the first input parameter, and the division operation is converted into a multiplication operation to calculate the product of diffY[i][j][k] and 1/S, and the product is substituted into equation (4) to calculate a weight value.

In some embodiments, the operation that the first input parameter is determined according to the reference sample value of the first color component of the current block and the candidate value of the first control parameter candidates may include the following operations. The first input parameter is set to be equal to the product of the reference sample value of the first color component of the current block and the candidate value of the first control parameter candidates. That is, diffY[i][j][k]/S is regarded as the first input parameter, and the division operation is converted into a multiplication operation to calculate the product of diffY[i][j][k] and 1/S, and the product is substituted into equation (4) to calculate a weight value.

In some embodiments, the operation that the first input parameter is determined according to the reference sample value of the first color component of the current block and the candidate value among the first control parameter candidates may include the following operations. The first input parameter is set to be equal to a value obtained by right-shifting the reference sample value of the first color component of the current block by S bits. A value of S is determined according to the first control parameter. In an embodiment, the value of S is set to be equal to the candidate value of the first control parameter candidates. That is, diffY[i][j][k]/S is regarded as the first input parameter, and the division operation is converted into a right shift operation, which can reduce computational difficulty since the implementation of the right shift operation is less difficult than the implementation of division.

In some embodiments, the operation that the first input parameter is determined according to the reference sample value of the first color component of the current block and the candidate value of the first control parameter candidates include the following operations. The reference sample value of the first color component of the current block and the first control parameter are used as index values for a value mapping lookup table, and the value mapping lookup table is searched to obtain a corresponding array element value. The first input parameter is set to be equal to the array element value.

In addition, in some embodiments, the mapping relationship may simplify operations. For example, an array element lookup may be used to reduce part of the calculation operations. In an embodiment, a mapping lookup table consisting of reference sample values of the first color component, first control parameters, and array elements is preset. The reference sample value of the first color component and the candidate value of the first control parameter candidates are used as index values, the mapping lookup table is searched to obtain an array element, and then a value corresponding to the array element value in a preset non-linear mapping function relationship is determined. The weighting coefficient is then set to be equal to this value. The elements of the two-dimensional array storMole [index 1][index 2] are as shown in Table 1.1. $diffY[i][j][k]$ is the index 1, and flags is the index 2. The indexed array elements are substituted into equation (7).

In some embodiments, the operation that the weighting coefficient is determined according to the preset mapping relationship and the first input parameter may include the following operations. The first input parameter is used as an input value of the preset mapping relationship, and the weighting coefficient is set to be equal to an output value of the preset mapping relationship. The preset mapping relationship is a correspondence between the first input parameter and the weighting coefficient, and the value of the weighting coefficient decreases as the value of the first input parameter increases. That is, after the first input parameter of equation (4) is determined, a function operation is performed to obtain a corresponding weight value.

At operation 804: a prediction value of the second color component of the current block is determined according to the weighting coefficient and a reference sample value of a second color component of the current block.

In some embodiments, the operation that the prediction value of the second color component of the current block is determined according to the weighting coefficient and the reference sample value of the second color component of the current block may include the following operations. A weighted sum of the weighting coefficient and the reference sample value of the second color component of the current block is calculated to determine the prediction value of the second color component of the current block.

In some embodiments, the operation that the prediction value of the second color component of the current block is determined according to the weighting coefficient and the reference sample value of the second color component of the current block may include the following operations. A weighted sum of the weighting coefficient and the reference sample value of the second color component of the current block is calculated to determine a first prediction value of the second color component of the current block. The first prediction value of the second color component of the current block is filtered to determine the prediction value of the current block.

In some embodiments, the reference sample value of the second color component of the current block is set to be equal to the neighboring sampling value of the second color component of the current block or a value obtained by filtering the neighboring sampling value of the second color component of the current block.

The neighboring sampling value of the second color component is a value obtained according to the reconstruction value of the second color component of the reference pixel. The reconstruction value of the second color component of the reference pixel is directly used as the neighboring sampling value of the second color component, or the reconstruction value of the second color component of the reference pixel is filtered to obtain the neighboring sampling value of the second color component. In an embodiment, when the second color component is a chroma component, the reference sample value of the second color component is a reconstruction value of the chroma component of the reference pixel, or a value obtained by filtering the reconstruction value of the second color component of the reference pixel. Reference can be made to equation (8) for the specific calculation process.

Further, the method also includes correcting the prediction value. In an embodiment, the chroma prediction value $C^{pred}[i][j]$ is corrected. The chroma prediction value should be within a limited range. If the range is exceeded, a corresponding correction operation should be performed.

Further, the method may further include post-processing the prediction value. The weighted chroma prediction output predWcp needs to be post-processed under certain conditions to serve as a final chroma prediction value predSamples, otherwise the final chroma prediction value predSamples is predWcp.

In an embodiment, the post-processing operation includes: (1) when predSizeW in the WCP core parameters is not equal to the width nTbW of the current block, or predSizeH is not equal to the width nTbH of the current block, the upsampling or downsampling operation needs to be performed on predWcp to obtain the final chroma prediction value predSamples.

(2) To reduce the instability caused by pixel-by-pixel WCP independent parallel prediction, predWcp can be smoothly filtered as the final chroma prediction value predSamples.

(3) To further improve the accuracy of the WCP prediction value, a position-related correction process may be performed on predWcp. For example: a chroma compensation value for each pixel to be predicted is calculated using reference pixels located close to each other in space, predWcp is corrected using the chroma compensation value, and the corrected prediction value is used as the final chroma prediction value predSamples.

(4) To further improve the accuracy of the WCP prediction value, the chroma prediction values calculated by other chroma prediction techniques may be weighted and fused with the chroma prediction value predWcp calculated by WCP, and the fusion result is used as the final chroma prediction value predSamples. For example, the chroma prediction value predicted by the CCLM technique and the chroma prediction value predWcp by WCP may be weighted with equal weights or unequal weights, and the weighted result is used as the final chroma prediction value predSamples.

(5) To improve the prediction performance of WCP, the prediction output predWcp of WCP may be corrected using a neural network.

At operation 805: a reference value of a prediction difference of the second color component of the current block is determined according to the prediction value and an original value of the second color component of the current block.

Here, the reference value of the prediction difference is used to denote a degree of distortion of the prediction value compared to the original value. A smaller reference value of the prediction difference indicates higher prediction accuracy, and a larger reference value of the prediction difference indicates lower prediction accuracy. In the embodiments of the present disclosure, the reference value of the prediction difference is used to select the best control parameter S within the control parameter selection range for the current block.

In an embodiment, the reference value of the prediction difference is presented according to parameters such as Sum of Absolute Difference (SAD), Sum of Absolute Transformed Difference (SATD), Sum of Squares for Error (SSE), Mean Absolute Difference (MAD), Mean Squared Error (MSE), and Rate Distortion Optimation (RDO). Using the MSE as the reference value of the prediction difference as an example, the calculation equation of the MSE is as follows:

$$\text{MSE} = \frac{1}{W \times H} \sum_{j=0}^{H-1} \sum_{i=0}^{W-1} (C^{org}[i][j] - C^{pred}[i][j])^2 \qquad (17)$$

In other embodiments, the prediction value of the second color component is a prediction value for some pixels to be predicted in the current block. Specifically, on the basis of a preset sampling ratio, pixels to be predicted are determined in the current picture unit, and some pixels in the current block are selected to participate in the traversal of S, so as to reduce the calculation quantities and improve search efficiency. For example, a quarter of pixels of the current block can be selected to participate in the traversal of S at a sampling ratio of 2:1 in both horizontal and vertical directions. The calculation equation of the MSE is as follows:

$$\text{MSE} = \frac{1}{\left(\frac{W}{2}\right) \times \left(\frac{H}{2}\right)} \sum_{j=0}^{H-1} \sum_{i=0}^{W-1} (C^{org}[2i][2j] - C^{pred}[2i][2j])^2 \qquad (18)$$

At operation 806: a first control parameter of the current block is determined according to the reference value of the prediction difference of the second color component of the current block.

In some embodiments, the operation that the first control parameter of the current block is determined according to the reference value of the prediction difference of the second color component of the current block may include the following operations. A minimum reference value is determined according to reference values of the prediction difference corresponding to multiple candidate values of the first control parameter candidates. The first control parameter is set to be equal to a candidate value corresponding to the minimum reference value.

It should be noted that, each candidate value of the first control parameter candidates corresponds to a reference value of the prediction difference. In order to make the prediction value closest to the original value, the control parameter corresponding to the smallest reference value of the prediction difference should be selected as the best control parameter. In an embodiment, a method for selecting the best control parameter S_best is as follows: a variable S_best is used to record the best control parameter S, a variable MSE_best is used to record the minimum MSE, and a variable MSE_s is used to record the MSE when the control parameter is s. A process of selecting the best control parameter S_best is as follows:

| |
|---|
| Setting an initial value: MSE_best = INT_MAX |
| Setting an initial value: S_best = 1 |
| Traversing: for s in S: |
|     Calculating: MSE_s |
|     Determining: if(MSE_s < MSE_best) |
|                 Obtaining the minimum MSE at that time: MSE_best = MSE_s |
|                 Obtaining the best S at the time: S_best = s |
| Ending: end |

Step 807: the first control parameter of the current block is encoded to write obtained encoded bits into a bitstream.

Here, the first control parameter may be the best control parameter determined by the encoding end for the current block, or multiple first control parameter candidates determined by the encoding end for the current block. The encoding end transmits the first control parameter to the decoding end through the bitstream, and the decoding end calculates a weighting coefficient according to the received first control parameter, which can increase the reliability of the weighting coefficient and further improve the accuracy of the color component prediction to a certain extent.

In some embodiments, the operation that the first control parameter of the current block is encoded may include the following operation. An index parameter of the first control parameter of the current block is encoded.

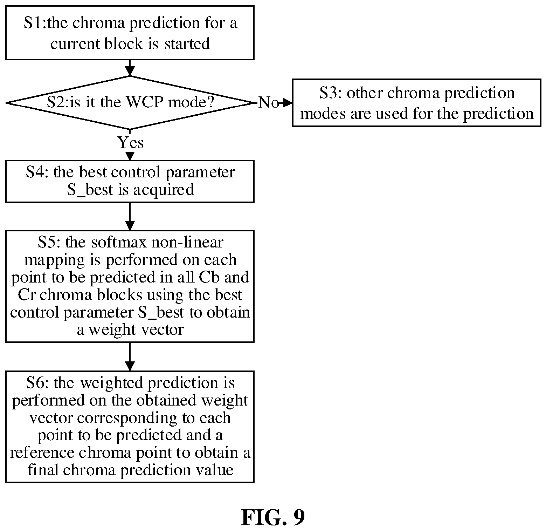

With respect to the first selection scheme, FIG. 9 is a second flow chart of a coding method according to an embodiment of the present disclosure. As shown in FIG. 9, the coding method includes the following operations.

S1: the chroma prediction for a current block is started;

S2: is it the WCP mode? If yes, operation S4 is executed, and if not, operation S3 is executed;

S3: other chroma prediction modes are used for the prediction;

S4: the best control parameter S_best is acquired;

S5: the softmax non-linear mapping is performed on each point to be predicted in all Cb and Cr chroma blocks using the best control parameter S_best to obtain a weight vector; and

S6: the weighted prediction is performed on the obtained weight vector corresponding to each point to be predicted and a reference chroma point to obtain a final chroma prediction value.

In an embodiment, the decoding end may obtain the best control parameter S for the current block from the CU layer by parsing, and the specific process is as follows:

| seq_parameter_set_rbsp( ) { | Descriptor |
|---|---|
| **sps_wcp_enabled_flag** | u(1) |
| } | |

| pic_parameter_set_rbsp( ) { | Descriptor |
|---|---|
| **pps_wcp_enabled_flag** | u(1) |
| } | |

| picture_header_structure( ) { | Descriptor |
|---|---|
| if(sps_chroma_format_idc != 0){ | |
| if(sps_wcp_enabled_flag && pps_wcp_enabled_flag){ | |
| **ph_wcp_enabled_flag** | u(1) |
| } | |
| } | |
| } | |

| slice_header( ) { | Descriptor |
|---|---|
| if(sps_chroma_format_idc != 0){ | |
| if(sps_wcp_enabled_flag && pps_wcp_enabled_flag){ | |
| **slice_wcp_enabled_flag** | u(1) |
| } | |
| } | |
| } | |

| coding_unit( x0, y0, cbWidth, cbHeight, cqtDepth, treeType, modeType ) { | Descriptor |
|---|---|

(continued)

| | |
|---|---|
| if(sps_chroma_format_idc != 0){ | |
|   if(ph_wcp_enabled_flag ‖ slice_wcp_enabled_flag){ | |
|     **wcp_mode_flag** | ae(v) |
|     if(wcp_mode_flag){ | |
|       **wcp_mode_idx** | ae(v) |
|       **wcp_S_Chroma** | u(6) |
|     }else | |
|       **intra_chroma_pred_mode** | ae(v) |
|     } | |
|   } | |
| } | |

Sequence Parameter Set (SPS) layer:

sps_chroma_format_idc: the value being 0 indicates that the color component of the current picture is a luminance component, and the value not being 0 indicates that the color component of the current picture is a chroma component.

sps_wcp_enabled_flag: the flag indicates whether the WCP is enabled in the sps layer. The value being 1 indicates that the WCP is enabled, and the value being 0 indicates that the WCP is not enabled.

Picture Parameter Set (PPS) layer:

pps_wcp_enabled_flag: the flag indicates whether the WCP is enabled in the pps layer. The value being 1 indicates that WCP is enabled, and the value being 0 indicates that the WCP is not enabled.

Picture Header (PH) Layer:

ph_wcp_enabled_flag: the flag indicates whether the WCP is used in the current picture. The value being 1 indicates that the WCP is used, and the value being 0 indicates that the WCP is not enabled. When the syntax element does not exist, it is treated as being equal to 0.

Slice Header (SH) Layer:

slice_wcp_enabled_flag: the flag indicates whether the WCP is used in a current slice. The value being 1 indicates that the WCP is used, and the value being 0 indicates that the WCP is not used. When the syntax element does not exist, it is treated as being equal to 0.

Coding Unit (CU) layer:

wcp_mode_flag: the flag indicates whether the WCP is used in a current CU. The value being 1 indicates that the WCP is used, and the value being 0 indicates that the WCP is not used. When the syntax element does not exist, it is treated as being equal to 0.

wcp_mode_idx: denotes an index of the current the WCP mode.

wcp_S_Chroma: denotes a numerical value of the best control parameter S for components Cb and Cr in the current CU or an index of the best control parameter S.

intra_chroma_pred_mode: denotes an intra prediction mode of a current chroma component. When intra_chroma_pred_mode does not exist, it is inferred to be equal to 0.

In the scheme, the added chroma prediction mode of the WCP is in a competitive relationship with other chroma prediction modes. The specific parsing of the mode index wcp_mode_idx of the chroma prediction mode is as follows:

| Chroma prediction mode | Binarization |
|---|---|
| CCLM_LT | 10 |
| MMLM_LT | 110 |
| WCP | 1110 |
| CCLM_L | 11110 |
| CCLM_T | 111110 |
| MMLM_L | 1111110 |
| MMLM_T | 1111111 |
| DM | 00 |
| PLANAR | 0100 |
| VER | 0101 |
| HOR | 0110 |
| DC | 0101 |

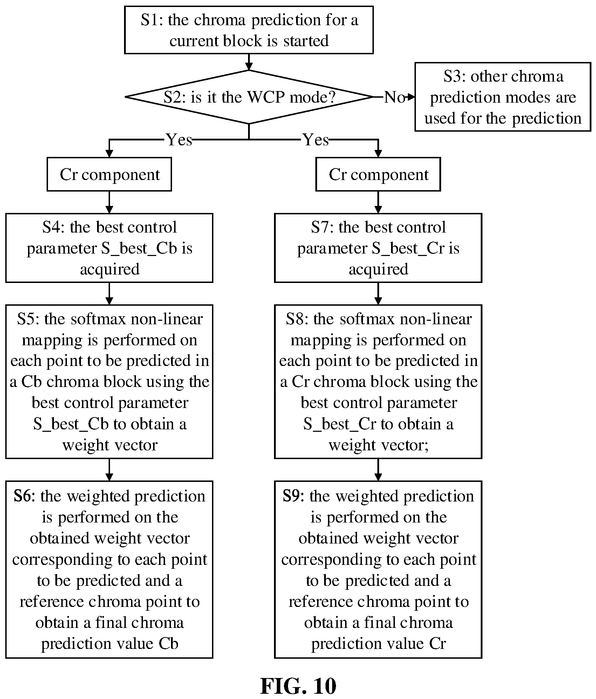

With respect to second selection scheme, FIG. 10 is a third flow chart of a coding method according to an embodiment of the present disclosure. As shown in FIG. 10, the coding method includes the following operations.

S1: the chroma prediction for a current block is started;
S2: is it the WCP mode? If yes, operations S4-S6 are executed for component Cb, and operations S7-S9 are executed for component Cr; and if not, operation S3 is performed;
S3: other chroma prediction modes are used for the prediction;
S4: the best control parameter S_best_Cb is acquired;
S5: the softmax non-linear mapping is performed on each point to be predicted in a Cb chroma block using the best control parameter S_best_Cb to obtain a weight vector;
S6: the weighted prediction is performed on the obtained weight vector corresponding to each point to be predicted and a reference chroma point to obtain a final chroma prediction value Cb;
S7: the best control parameter S_best_Cr is acquired;
S8: the softmax non-linear mapping is performed on each point to be predicted in a Cr chroma block using the best control parameter S_best_Cr to obtain a weight vector; and
S9: the weighted prediction is performed on the obtained weight vector corresponding to each point to be predicted and a reference chroma point to obtain a final chroma prediction value Cr.

In an embodiment, the decoding end may obtain, from the CU layer, the best control parameter S for the current block under different chroma components by parsing, and the specific process is as follows:

| seq_parameter_set_rbsp( ) { | Descriptor |
|---|---|
| **sps_wcp_enabled_flag** | u(1) |
| } | |
| pic_parameter_set_rbsp( ) { | Descriptor |
| **pps_wcp_enabled_flag** | u(1) |
| } | |

| picture_header_structure( ) { | Descriptor |
|---|---|
| if(sps_chroma_format_idc != 0){ | |
| if(sps_wcp_enabled_flag && pps_wcp_enabled_flag){ | |
| **ph_wcp_enabled_flag** | u(1) |
| } | |

(continued)

| | |
|---|---|
| } | |
| } | |

| slice_header( ) { | Descriptor |
|---|---|
| if(sps_chroma_format_idc != 0){ | |
| if(sps_wcp_enabled_flag && pps_wcp_enabled_flag){ | |
| **slice_wcp_enabled_flag** | u(1) |
| } | |
| } | |
| } | |

| coding_unit( x0, y0, cbWidth, cbHeight, cqtDepth, treeType, modeType ) { | Descriptor |
|---|---|
| if(sps_chroma_format_idc != 0){ | |
| if(ph_wcp_enabled_flag ‖ slice_wcp_enabled_flag){ | |
| **wcp_mode_flag** | ae(v) |
| if(wcp_mode_flag){ | |
| **wcp_mode_idx** | ae(v) |
| **wcp_S_Cb** | u(6) |
| **wcp_S_Cr** | u(6) |
| }else | |
| **intra_chroma_pred_mode** | ae(v) |
| } | |
| } | |
| } | |

Sequence Parameter Set (SPS) layer:

sps_chroma_format_idc: the value being 0 indicates that the color component of the current picture is a luminance component, and the value not being 0 indicates that the color component of the current picture is a chroma component.

sps_wcp_enabled_flag: the flag indicates whether the WCP is enabled in the sps layer. The value being 1 indicates that the WCP is enabled, and the value being 0 indicates that the WCP is not enabled.

Picture Parameter Set (PPS) layer:

pps_wcp_enabled_flag: the flag indicates whether the WCP is enabled in the pps layer. The value being 1 indicates that WCP is enabled, and the value being 0 indicates that the WCP is not enabled.

Picture Header (PH) Layer:

ph_wcp_enabled_flag: the flag indicates whether the WCP is used in the current picture. The value being 1 indicates that the WCP is used, and the value being 0 indicates that the WCP is not enabled. When the syntax element does not exist, it is treated as being equal to 0.

Slice Header (SH) Layer:

slice_wcp_enabled_flag: the flag indicates whether the WCP is used in a current slice. The value being 1 indicates that the WCP is used, and the value being 0 indicates that the WCP is not used. When the syntax element does not exist, it is treated as being equal to 0.

Coding Unit (CU) layer:

wcp_mode_flag: the flag indicates whether the WCP is used in a current CU. The value being 1 indicates that the WCP is used, and the value being 0 indicates that the WCP is not used. When the syntax element does not exist, it is treated as being equal to 0.

wcp_mode_idx: denotes an index of the current the WCP mode.

wcp_S_Cb: denotes a numerical value of the best control parameter S for component Cb in the current CU or an index of the best control parameter S.

wcp_S_Cr: denotes a numerical value of the best control parameter S for component Cr in the current CU or an index of the best control parameter S.

intra_chroma_pred_mode: denotes an intra prediction mode of a current chroma component. When intra_chroma_pred_mode does not exist, it is inferred to be equal to 0.

In the embodiments of the present disclosure, the operation that the first control parameter candidates are determined is further exemplified.

In some embodiments, the method further includes the operation that the first control parameter candidates are determined according to a prediction parameter of the current block. That is, different selection ranges for the control parameter are set for different coding blocks, and a matching selection range for the control parameter is selected according to the prediction parameter of the current block, thereby improving the efficiency of the selection of the control parameter.

In an embodiment, in some embodiments, the method may further include the operation that a selection step size of the first control parameter candidates is determined based on the prediction parameter of the current block. In subsequent operations, the first control parameter candidates are traversed according to the selection step size. Every time one candidate value is selected from the first control parameter candidates, a weighting coefficient is obtained by performing non-linear mapping using the selected candidate value. A weighting operation is performed using the weighting coefficient to obtain prediction values of all or some of the pixels in the current block. A reference value of a prediction difference is calculated according to the prediction values and the original values until the traversal is completed. The best control parameter is determined according to the obtained reference value of the prediction difference corresponding to each candidate value.

In some embodiments, the operation that the first control parameter candidates are determined according to the prediction parameter of the current block may include the following operation. First control parameter candidates corresponding to the current block are determined based on a preset correspondence between prediction parameters and first control parameter candidates according to the prediction parameter of the current block. That is, the correspondence is preset, and the correspondence is a correspondence between prediction parameters and the selection ranges of the control parameter. A corresponding selection range of the control parameter is determined according to the prediction parameter of the current block, and one or more candidate values of the first control parameter are further selected from the control parameter selection range.

In some embodiments, the prediction parameter of the current block at least includes a size of the current block. The size of the current block includes at least one of a height of a current block, a width of the current block, a number of first color component sampling points included in the current block, or a number of second color component sampling points included in the current block. Here, the first color component sampling points and the second color component sampling points are pixel points within the current block, and the first color component sampling points and the second color component sampling points may be identical pixel points or non-identical pixel points.

In some embodiments, the prediction parameter of the current block includes a prediction mode of the current block. It should be noted that, in the embodiments of the present disclosure, when the selection range of the candidate control parameters is determined, the prediction parameter may include at least one of a component to be predicted, a size of the current block, a prediction mode, and an index parameter of a control parameter.

In some embodiments, the method may further include the operation that the selection step size of first control parameter candidates is determined based on the prediction parameter of the current block. When the selection range of the control parameter is continuous, the selection step size is set according to the prediction parameter, and all or some of the candidate values in the selection range are traversed according to the selection step size.

It should be noted that, in the embodiments of the present disclosure, the selection range of the first control parameter may be determined by means of classification. For example, three categories are obtained by classification according to the size parameter of the current block, and the respective selection range of the first control parameter corresponding to each category is determined. Alternatively, three categories are obtained by classification according to the number of sampling points of the current block, and the respective selection range of the first control parameter corresponding to each category is determined.

In an embodiment, in the third selection scheme, N-classification is performed according to the block size or the number of pixels in a block, the corresponding selection range of the control parameter is determined according to the type of the block. Regarding chroma components Cb and Cr, the same prediction is performed for Cb and Cr chroma blocks, and the same best S that is obtained is used for components Cr and Cb. For each category of blocks, one respective selection range of the control parameter S is given, the purpose of which is to make the prediction blocks of different categories traverse the control parameters S within different selection ranges. The encoding end traverses S at a certain step size D within this range. For example, the determination is made according to the minimum size and the maximum size of the coding chroma block. For example, the classification is performed according to the block size, as shown in Table 2.6 below.

Table 2.6 Selection range of the control parameter S, step size D, and index of the classified block for traversal in the coding chroma blocks classified according to the block size

| Coding chroma block size for WCP Mode | Selection range of the control parameter S | Step size D | Index of the block of the n-th category |
|---|---|---|---|
| Min(W,H)<=4 | 1-4 | 1 | 0 |
| Min(W,H)>4&& Min(W,H)<=8 | 4-8 | 1 | 1 |
| Min(W,H)>8&& Min(W,H)<=16 | 8-16 | 1 | 2 |
| Min(W,H)>16&& Min(W,H)<=32 | 16-32 | 1 | 3 |
| Min(W,H)>32 | 32-64 | 2 | 4 |

For example, the classification is performed according to the number W×H of pixels in the block, as shown in Table 2.7 below:

Table 2.7 Selection range of the control parameter S, step size D, and index of the classified block for traversal in the coding chroma blocks classified according to the block size

| Number of pixels in coding chroma block for WCP mode | Selection range of the control parameter S | Step size D | Index of the block of the n-th category |
|---|---|---|---|
| W×H<=16 | 1-4 | 1 | 0 |
| W×H>16 && W×H<=64 | 4-8 | 1 | 1 |
| W×H>64 && W×H<=256 | 8-16 | 1 | 2 |
| W×H>256 && W×H <=512 | 16-24 | 1 | 3 |
| W×H>512&& W×H <=1024 | 24-32 | 1 | 4 |
| W×H>1024 | 32-64 | 2 | 5 |

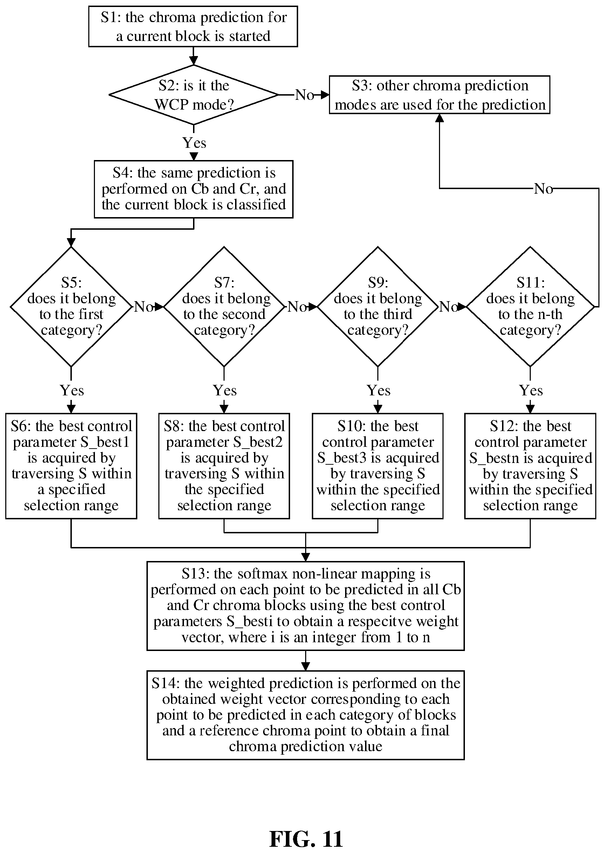

With respect to selection scheme 3, FIG. 11 is a fourth flow chart of a coding method according to an embodiment of the present disclosure. As shown in FIG. 11, the coding method includes the following operations.

S1: the chroma prediction for a current block is started;

S2: is it the WCP mode? If yes, the operation S4 is executed, and if not, the operation S3 is executed;

S3: other chroma prediction modes are used for the prediction;

S4: the same prediction is performed on Cb and Cr, and the current block is classified;

S5: does it belong to the first category? If yes, the operation S6 is executed, and if not the operation S7 is executed;

S6: the best control parameter S_best1 is acquired by traversing S within a specified selection range;

S7: does it belong to the second category? If yes, the operation S8 is executed, and if not the operation S9 is executed;

S8: the best control parameter S_best2 is acquired by traversing S within the specified selection range;

S9: does it belong to the third category? If yes, the operation S10 is executed, and if not the operation S11 is executed;

S10: the best control parameter S_best3 is acquired by traversing S within the specified selection range;

and so on;

S11: does it belong to the n-th category? If yes, the operation S12 is executed, and if not the operation S13 is executed;

S12: the best control parameter S_bestn is acquired by traversing S within the specified selection range;

S13: the softmax non-linear mapping is performed on each point to be predicted in all Cb and Cr chroma blocks using the best control parameters S_besti to obtain a respecitve weight vector, where i is an integer from 1 to n; and

S14: the weighted prediction is performed on the obtained weight vector corresponding to each point to be predicted in each category of blocks and a reference chroma point to obtain a final chroma prediction value.

For the selection scheme, the decoding end may obtain, from the CU layer, the best control parameter S for different categories of current blocks by parsing, and the specific process is as follows:

| seq_parameter_set_rbsp( ) { | Descriptor |
|---|---|
| **sps_wcp_enabled_flag** | u(1) |
| } | |
| pic_parameter_set_rbsp( ) { | Descriptor |
| **pps_wcp_enabled_flag** | u(1) |
| } | |

| picture_header_structure( ) { | Descriptor |
|---|---|
| if(sps_chroma_format_idc != 0){ | |
| if(sps_wcp_enabled_flag && pps_wcp_enabled_flag){ | |
| **ph_wcp_enabled_flag** | u(1) |
| } | |
| } | |
| } | |

| slice_header( ) { | Descriptor |
|---|---|
| if(sps_chroma_format_idc != 0){ | |
| if(sps_wcp_enabled_flag && pps_wcp_enabled_flag){ | |
| **slice_wcp_enabled_flag** | u(1) |
| } | |
| } | |
| } | |

| coding_unit( x0, y0, cbWidth, cbHeight, cqtDepth, treeType, modeType ) { | Descriptor |
|---|---|
| if(sps_chroma_format_idc != 0){ | |
| if(ph_wcp_enabled_flag ‖ slice_wcp_enabled_flag){ | |
| **wcp_mode_flag** | ae(v) |
| if(wcp_mode_flag){ | |
| **wcp_mode_idx** | ae(v) |
| **wcp_S_Chroma** | u(6) |
| }else | |
| **intra_chroma_pred_mode** | ae(v) |
| } | |

(continued)

| } | |
| } | |

Sequence Parameter Set (SPS) layer:

sps_chroma_format_idc: the value being 0 indicates that the color component of the current picture is a luminance component, and the value not being 0 indicates that the color component of the current picture is a chroma component.

sps_wcp_enabled_flag: the flag indicates whether the WCP is enabled in the sps layer. The value being 1 indicates that the WCP is enabled, and the value being 0 indicates that the WCP is not enabled.

Picture Parameter Set (PPS) layer:

pps_wcp_enabled_flag: the flag indicates whether the WCP is enabled in the pps layer. The value being 1 indicates that WCP is enabled, and the value being 0 indicates that the WCP is not enabled.

Picture Header (PH) Layer:

ph_wcp_enabled_flag: the flag indicates whether the WCP is used in the current picture. The value being 1 indicates that the WCP is used, and the value being 0 indicates that the WCP is not enabled. When the syntax element does not exist, it is treated as being equal to 0.

Slice Header (SH) Layer:

slice_wcp_enabled_flag: the flag indicates whether the WCP is used in a current slice. The value being 1 indicates that the WCP is used, and the value being 0 indicates that the WCP is not used. When the syntax element does not exist, it is treated as being equal to 0.

Coding Unit (CU) layer:

wcp_mode_flag: the flag indicates whether the WCP is used in a current CU. The value being 1 indicates that the WCP is used, and the value being 0 indicates that the WCP is not used. When the syntax element does not exist, it is treated as being equal to 0.

wcp_mode_idx: denotes an index of the current the WCP mode.

wcp_S_Chroma: denotes a value of the best control parameter S for the n-th category of Cb and Cr chroma CU or an index of the best control parameter S.

intra_chroma_pred_mode: denotes an intra prediction mode of a current chroma component. When intra_chroma_pred_mode does not exist, it is inferred to be equal to 0.

In the third selection scheme, the added chroma prediction mode of the WCP is in a competitive relationship with other chroma prediction modes. The specific parsing of the mode index wcp_mode_idx of the chroma prediction mode is the same as that of the first selection scheme and the second selection scheme.

In fourth selection scheme, the block size or the number of pixels in the block is not classified. The WCP mode is divided into three modes according to available reference regions: WCP, WCP_L, and WCP_T. The reference regions of the WCP mode are upper region + left region, the reference regions of the WCP_T mode are upper region + upper right region, and the reference regions of the WCP_L mode are left region + lower left region. For the chroma components Cb and Cr, the same prediction is performed for Cb and Cr chroma blocks, and the same best S that is obtained is used for the components Cr and Cb. For each WCP mode, a selection range of the control parameter S is given, and S is traversed at a certain step size D within this range, as shown in Table 2.8 below:

Table 2.8 Selection range of the control parameter S and step size D for traversal in different WCP modes

| WCP mode | Selection range of control parameter S | Step size D |
|---|---|---|
| WCP | 1-32 | 1 |
| WCP_T | 1-16 | 1 |

(continued)

| WCP mode | Selection range of control parameter S | Step size D |
|---|---|---|
| WCP_L | 1-16 | 1 |

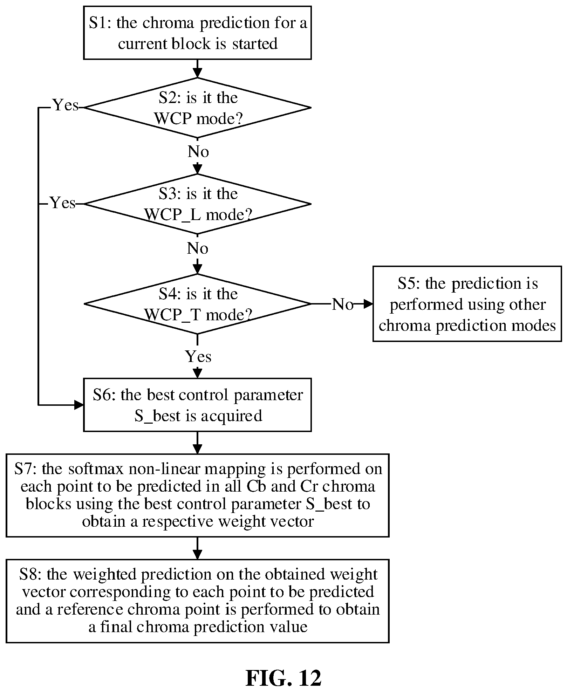

With respect to the fourth selection scheme, FIG. 12 is a fifth flow chart of a coding method according to an embodiment of the present disclosure. As shown in FIG. 12, the coding method includes the following operations.

S1: the chroma prediction for a current block is started;
S2: is it the WCP mode? If yes, the operation S6 is executed, and if not, the operation S3 is executed;
S3: is it the WCP_L mode? If yes, the operation S6 is executed, and if not, the operation S4 is executed;
S4: is it the WCP_T mode? If so, the operation S6 is executed, and if not, the operation S5 is executed;
S5: the prediction is performed using other chroma prediction modes;
here, the three chroma prediction modes WCP, WCP_L, and WCP_T are in a competitive relationship with other chroma prediction modes;
S6: the best control parameter S_best is acquired;
S7: the softmax non-linear mapping is performed on each point to be predicted in all Cb and Cr chroma blocks using the best control parameter S_best to obtain a respective weight vector; and
S8: the weighted prediction on the obtained weight vector corresponding to each point to be predicted and a reference chroma point is performed to obtain a final chroma prediction value.

For the fourth selection scheme, the decoding end may obtain, from the CU layer, the best control parameter S for the current block in different WCP modes by parsing, and the specific process is as follows:

| seq_parameter_set_rbsp( ) { | Descriptor |
|---|---|
| **sps_wcp_enabled_flag** | u(1) |
| } | |

| pic_parameter_set_rbsp( ) { | Descriptor |
|---|---|
| **pps_wcp_enabled_flag** | u(1) |
| } | |

| picture_header_structure( ) { | Descriptor |
|---|---|
| if(sps_chroma_format_idc != 0){ | |
| if(sps_wcp_enabled_flag && pps_wcp_enabled_flag){ | |
| **ph_wcp_enabled_flag** | u(1) |
| } | |
| } | |
| } | |

| slice_header( ) { | Descriptor |
|---|---|
| if(sps_chroma_format_idc != 0){ | |
| if(sps_wcp_enabled_flag && pps_wcp_enabled_flag){ | |
| **slice_wcp_enabled_flag** | u(1) |
| } | |
| } | |
| } | |

| coding_unit( x0, y0, cbWidth, cbHeight, cqtDepth, treeType, modeType ) { | Descriptor |
|---|---|
| if(sps_chroma_format_idc != 0){ | |
| if(ph_wcp_enabled_flag ‖ slice_wcp_enabled_flag){ | |
| **wcp_mode_flag** | ae(v) |
| if(wcp_mode_flag){ | |
| **wcp_mode_idx** | ae(v) |
| **wcp_S_Chroma** | u(6) |
| }else | |
| **intra_chroma_pred_mode** | ae(v) |
| } | |
| } | |
| } | |

Sequence Parameter Set (SPS) layer:

sps_chroma_format_idc: the value being 0 indicates that the color component of the current picture is a luminance component, and the value not being 0 indicates that the color component of the current picture is a chroma component.

sps_wcp_enabled_flag: the flag indicates whether the WCP is enabled in the sps layer. The value being 1 indicates that the WCP is enabled, and the value being 0 indicates that the WCP is not enabled.

Picture Parameter Set (PPS) layer:

pps_wcp_enabled_flag: the flag indicates whether the WCP is enabled in the pps layer. The value being 1 indicates that WCP is enabled, and the value being 0 indicates that the WCP is not enabled.

Picture Header (PH) Layer:

ph_wcp_enabled_flag: the flag indicates whether the WCP is used in the current picture. The value being 1 indicates that the WCP is used, and the value being 0 indicates that the WCP is not enabled. When the syntax element does not exist, it is treated as being equal to 0.

Slice Header (SH) Layer:

slice_wcp_enabled_flag: the flag indicates whether the WCP is used in a current slice. The value being 1 indicates that the WCP is used, and the value being 0 indicates that the WCP is not used. When the syntax element does not exist, it is treated as being equal to 0.

Coding Unit (CU) layer:

wcp_mode_flag: the flag indicates whether the WCP is used in a current CU. The value being 1 indicates that the WCP is used, and the value being 0 indicates that the WCP is not used. When the syntax element does not exist, it is treated as being equal to 0.

wcp_mode_idx: denotes an index of the current the WCP mode.

wcp_S_Chroma: denotes a numerical value of the best control parameter S for components Cb and Cr in the current CU or an index of the best control parameter S.

intra_chroma_pred_mode: denotes an intra prediction mode of a current chroma component. When intra_chroma_pred_mode does not exist, it is inferred to be equal to 0.

In the fourth selection scheme, the newly added three chroma prediction modes WCP, WCP_L, and WCP_T are in a competitive relationship with other chroma prediction modes. The specific parsing of the mode index wcp_mode_idx of the chroma prediction mode is as follows:

| Chroma prediction mode | Binarization |
|---|---|
| CCLM_LT | 10 |
| MMLM_LT | 110 |
| WCP | 1110 |
| CCLM_L | 11110 |
| CCLM_T | 111110 |
| MMLM_L | 1111110 |
| MMLM_T | 11111110 |
| WCP_L | 111111110 |
| WCP_T | 111111111 |
| DM | 00 |
| PLANAR | 0100 |
| VER | 0101 |
| HOR | 0110 |
| DC | 0101 |

In the fifth selection scheme, the WCP mode is divided into three modes according to available reference regions: WCP, WCP_L, and WCP_T. The reference regions of the WCP mode are upper region + left region, the reference regions of the WCP_T mode are upper region + upper right region, and the reference regions of the WCP_L mode are left region + lower left region. For each WCP mode, N-classification is performed according to the block size or the number of pixels in the block, and the corresponding selection range of the control parameter is determined according to the type of the block. It is noted that the number of classifications N in different WCP modes may be the same or different, and the classifications manner may be the same or different. For each category of blocks, one selection range of the control parameter S is given, the purpose of which is to make the prediction blocks of different categories traverse the control parameters S within different selection ranges. The encoding end traverses S at a certain step size D within this range. Here, for the chroma components Cb and Cr, the same prediction is performed for Cb and Cr chroma blocks, and the same best S that is obtained is used for the components Cr and Cb. For example, block sizes in different WCP modes are classified as shown in Table 2.9 below:

Table 2.9 Selection range of the control parameter S, step size D, and index of the classified block for traversal in the blocks classified by size under different WCP modes

| WCP mode | Coding chroma block size for this mode | Selection range of the control parameter S | Step size D | Index of the block of the n-th category |
|---|---|---|---|---|
| WCP | Min(W,H)<=4 | 1-8 | 1 | 0 |
| | Min(W,H)>4&& Min(W,H)<=16 | 8-32 | 2 | 1 |
| | Min(W,H)>16 | 32-64 | 2 | 2 |
| WCP_T | Min(W,H)<=4 | 1-8 | 1 | 0 |
| | Min(W,H)>4&& Min(W,H)<=16 | 8-16 | 2 | 1 |
| | Min(W,H)>16 | 16-32 | 2 | 2 |
| WCP_L | Min(W,H)<=4 | 1-8 | 1 | 0 |
| | Min(W,H)>4&& Min(W,H)<=16 | 8-16 | 2 | 1 |
| | Min(W,H)>16 | 16-32 | 2 | 2 |

The number W×H of pixels in the block in different WCP modes may be also classified as shown in Table 2.10 below:

Table 2.10 Selection range of the control parameter S, step size D, and index of the classified block for traversal in the blocks classified according to the number of pixels in the block under different WCP modes

| WCP mode | Number of pixels in coding chroma block for this mode | Selection range of the control parameter S | Step size D | Index of the block of the n-th category |
|---|---|---|---|---|
| WCP | W × H<=32 | 1-8 | 1 | 0 |
| | W×H >32&& W×H <=512 | 8-32 | 2 | 1 |
| | W×H >512 | 32-64 | 2 | 2 |
| WCP_T | W×H<=16 | 1-8 | 1 | 0 |
| | W×H >16&& W×H <=256 | 8-16 | 2 | 1 |
| | W×H >256 | 16-32 | 2 | 2 |
| WCP_L | W×H<=16 | 1-8 | 1 | 0 |
| | W×H >16&& W×H <=256 | 8-16 | 2 | 1 |
| | W×H >256 | 16-32 | 2 | 2 |

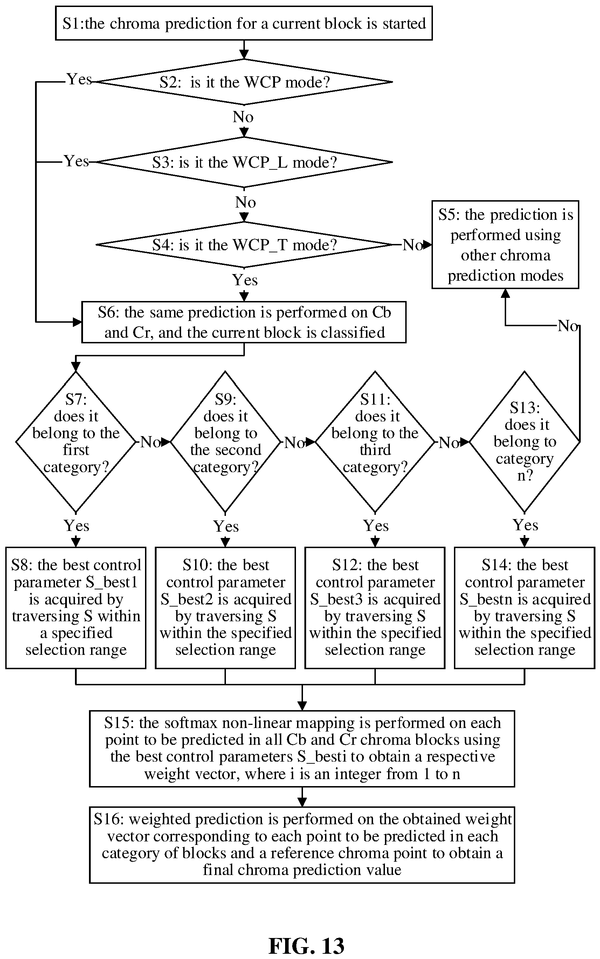

With respect to the fifth selection scheme, FIG. 13 is a sixth flow chart of a coding method according to an embodiment of the present disclosure. As shown in FIG. 13, the coding method includes the following operations.

S1: the chroma prediction for a current block is started;
S2: is it the WCP mode? If yes, the operation S6 is executed, and if not, the operation S3 is executed;
S3: is it the WCP_L mode? If yes, the operation S6 is executed, and if not, the operation S4 is executed;
S4: is it the WCP_T mode? If yes, the operation S6 is executed, and if not, the operation S5 is executed;
S5: the prediction is performed using other chroma prediction modes;
S6: the same prediction is performed on Cb and Cr, and the current block is classified;
S7: does it belong to the first category? If yes, the operation S8 is executed, and if not, the operation S9 is executed;
S8: the best control parameter S_best1 is acquired by traversing S within a specified selection range;
S9: does it belong to the second category? If so, the operation S10 is executed, and if not, the operation S11 is executed;
S10: the best control parameter S_best2 is acquired by traversing S within the specified selection range;
S11: does it belong to the third category? If yes, the operation S12 is executed, and if not, the operation S13 is executed;
S12: the best control parameter S_best3 is acquired by traversing S within the specified selection range; and so on;
S13: does it belong to category n? If yes, the operation S14 is executed, and if not, the operation S5 is executed;
S14: the best control parameter S_bestn is acquired by traversing S within the specified selection range;
S15: the softmax non-linear mapping is performed on each point to be predicted in all Cb and Cr chroma blocks using the best control parameters S_besti to obtain a respective weight vector, where i is an integer from 1 to n; and
S16: weighted prediction is performed on the obtained weight vector corresponding to each point to be predicted in each category of blocks and a reference chroma point to obtain a final chroma prediction value.

For the fifth selection scheme, the decoding end may obtain, from the CU layer, the best control parameter S for different categories of current blocks in different WCP modes by parsing, and the specific process is as follows:

| seq_parameter_set_rbsp( ) { | Descriptor |
|---|---|
| **sps_wcp_enabled_flag** | u(1) |
| } | |

| pic_parameter_set_rbsp( ) { | Descriptor |
|---|---|

(continued)

| pps_wcp_enabled_flag | u(1) |
|---|---|
| } | |

| picture_header_structure( ) { | Descriptor |
|---|---|
| if(sps_chroma_format_idc != 0){ | |
| if(sps_wcp_enabled_flag && pps_wcp_enabled_flag){ | |
| **ph_wcp_enabled_flag** | u(1) |
| } | |
| } | |
| } | |

| slice_header( ) { | Descriptor |
|---|---|
| if(sps_chroma_format_idc != 0){ | |
| if(sps_wcp_enabled_flag && pps_wcp_enabled_flag){ | |
| **slice_wcp_enabled_flag** | u(1) |
| } | |
| } | |
| } | |

| coding_unit( x0, y0, cbWidth, cbHeight, cqtDepth, treeType, modeType ) { | Descriptor |
|---|---|
| if(sps_chroma_format_idc != 0){ | |
| if(ph_wcp_enabled_flag ‖ slice_wcp_enabled_flag){ | |
| **wcp_mode_flag** | ae(v) |
| if(wcp_mode_flag){ | |
| **wcp_mode_idx** | ae(v) |
| **wcp_S_Chroma** | u(6) |
| }else | |
| **intra_chroma_pred_mode** | ae(v) |
| } | |
| } | |
| } | |

Sequence Parameter Set (SPS) layer:

sps_chroma_format_idc: the value being 0 indicates that the color component of the current picture is a luminance component, and the value not being 0 indicates that the color component of the current picture is a chroma component.
sps_wcp_enabled_flag: the flag indicates whether the WCP is enabled in the sps layer. The value being 1 indicates that the WCP is enabled, and the value being 0 indicates that the WCP is not enabled.

Picture Parameter Set (PPS) layer:

pps_wcp_enabled_flag: the flag indicates whether the WCP is enabled in the pps layer. The value being 1 indicates that WCP is enabled, and the value being 0 indicates that the WCP is not enabled.

Picture Header (PH) Layer:

ph_wcp_enabled_flag: the flag indicates whether the WCP is used in the current picture. The value being 1 indicates that the WCP is used, and the value being 0 indicates that the WCP is not enabled. When the syntax element does not exist, it is treated as being equal to 0.

Slice Header (SH) Layer:

slice_wcp_enabled_flag: the flag indicates whether the WCP is used in a current slice. The value being 1 indicates that the WCP is used, and the value being 0 indicates that the WCP is not used. When the syntax element does not exist, it is treated as being equal to 0.

Coding Unit (CU) layer:

wcp_mode_flag: the flag indicates whether the WCP is used in a current CU. The value being 1 indicates that the WCP is used, and the value being 0 indicates that the WCP is not used. When the syntax element does not exist, it is treated as being equal to 0.

wcp_mode_idx: denotes an index of the current the WCP mode.

wcp_S_Chroma: denotes a value of the best control parameter S for the n-th category of Cb and Cr chroma CU or an index of the best control parameter S.

intra_chroma_pred_mode: denotes an intra prediction mode of a current chroma component. When intra_chroma_pred_mode does not exist, it is inferred to be equal to 0.

In the fifth selection scheme, the newly added three chroma prediction modes WCP, WCP_L, and WCP_T are in a competitive relationship with other chroma prediction modes. The specific parsing of the mode index wcp_mode_idx of the chroma prediction mode is the same as that of the fifth selection scheme.

It should be noted that, in the third selection scheme and the fifth selection scheme described above, regarding the chroma components Cb and Cr, the same prediction is performed for Cb and Cr chroma blocks, and the same best S that is obtained is used for the components Cr and Cb. The prediction may also be performed separately for the components Cb and Cr, and each of the components Cb and Cr may obtain a respective best S by transversing.

In the embodiments of the present disclosure, in addition to the transmission of the best control parameter S at the CU layer in the bitstream, an original value of a coding block may be introduced at an SPS layer, a PPS layer, an APS layer, a PH layer, an SH layer, a CTU layer, or the like in the bitstream to perform distortion cost calculation to obtain the best control parameter S, and to perform the transmission of the best control parameter S.

When being transmitted at the SPS layer: the same S is used for the same sequence of frames, and the syntax semantics are as follows:

| seq_parameter_set_rbsp( ) { | Descriptor |
|---|---|
| **sps_wcp_enabled_flag** | u(1) |
| if(sps_wcp_enabled_flag){ | |
| **wcp_S_Chroma** | ue(v) |
| } | |
| } | |

sps_wcp_enabled_flag: the flag indicates whether WCP is enabled at the sps layer. The value being 1 indicates that WCP is enabled, and the value being 0 indicates that WCP is not enabled.

wcp_S_Chroma: denotes a numerical value of the best control parameter S for a current sequence or an index of the best control parameter S.

When being transmitted at the PPS layer: the same S is used for the same frame, and the syntax semantics are as follows:

| seq_parameter_set_rbsp( ) { | Descriptor |
|---|---|
| **sps_wcp_enabled_flag** | u(1) |

(continued)

| | |
|---|---|
| } | |

| pic_parameter_set_rbsp( ) { | Descriptor |
|---|---|
| if(sps_wcp_enabled_flag){ | |
| **pps_wcp_enabled_flag** | u(1) |
| if(pps_wcp_enabled_flag){ | |
| **wcp_S_Chroma** | ue(v) |
| } | |
| } | |
| } | |

sps_wcp_enabled_flag: the flag indicates whether WCP is enabled at the sps layer. The value being 1 indicates that WCP is enabled, and the value being 0 indicates that WCP is not enabled.

pps_wcp_enabled_flag: the flag indicates whether WCP is enabled at the pps layer, The value being 1 indicates that WCP is enabled, and the value being 0 indicates that WCP is not enabled.

wcp_S_Chroma: denotes a numerical value of the best control parameter S for the current frame or an index of the best control parameter S.

When being transmitted at the APS layer: the same S is used for the same frame, an APS parameter type WCP_APS may be added at the APS layer. When aps_params_type is WCP_APS, the syntax structure of wcp_data() is parsed. A control parameter set of WCP is included in wcp_data(), and the control parameter set includes several typical control parameters S. A control parameter set including three control parameters is used as an example as shown in Table 2.11 below.

Table 2.11 Examples of typical control parameter

| Index of S in the control parameter S set | Value of S |
|---|---|
| 0 | 8 |
| 1 | 12 |
| 2 | 16 |

The encoding end introduces the original value of the current coding block and selects the best control parameter value from the control parameter set through the distortion cost such as SAD, SATD, MSE, etc.

The decoding end acquires the best control parameter S corresponding to the WCP by parsing wcp_data() at the APS layer. The syntax semantics are as follows:

| seq_parameter_set_rbsp( ) { | Descriptor |
|---|---|
| **sps_wcp_enabled_flag** | u(1) |
| } | |

| adaptation_parameter_set_rbsp( ) { | Descriptor |
|---|---|
| if(sps_wcp_enabled_flag){ | |
| **aps_wcp_enabled_flag** | u(1) |
| if(aps_params_type == WCP_APS ) | |
| wcp_data( ) | |
| } | |

(continued)

| | |
|---|---|
| } | |

| wcp_data ( ) { | Descriptor |
|---|---|
| if(aps_wcp_enabled_flag){ | |
| **wcp_S_Chroma** | ue(v) |
| } | |
| } | |

sps_wcp_enabled_flag: the flag indicates whether WCP is enabled at the sps layer. The value being 1 indicates that WCP is enabled, and the value being 0 indicates that WCP is not enabled.

aps_wcp_enabled_flag: the flag indicates whether WCP is enabled at the aps layer. The value being 1 indicates that WCP is enabled, and the value being 0 indicates that WCP is not enabled.

WCP_APS: indicates that the parameter type of APS is WCP_APS.

wcp_S_Chroma: denotes a numerical value of the best control parameter S for the current frame or an index of the best control parameter S.

When being transmitted at the PH layer: the same S is used for the same picture, and the syntax semantics are as follows:

| seq_parameter_set_rbsp( ) { | Descriptor |
|---|---|
| **sps_wcp_enabled_flag** | u(1) |
| } | |

| pic_parameter_set_rbsp( ) { | Descriptor |
|---|---|
| if(sps_wcp_enabled_flag){ | |
| **pps_wcp_enabled_flag** | u(1) |
| } | |
| } | |

| picture_header_structure( ) { | Descriptor |
|---|---|
| if(pps_wcp_enabled_flag){ | |
| **ph_wcp_enabled_flag** | u(1) |
| if(ph_wcp_enabled_flag){ | |
| **wcp_S_Chroma** | ue(v) |
| } | |
| } | |
| } | |

sps_wcp_enabled_flag: the flag indicates whether WCP is enabled at the sps layer. The value being 1 indicates that WCP is enabled, and the value being 0 indicates that WCP is not enabled.

pps_wcp_enabled_flag: the flag indicates whether WCP is enabled at the pps layer. The value being 1 indicates that WCP is enabled, and the value being 0 indicates that WCP is not enabled.

ph_wcp_enabled_flag: the flag indicates whether WCP is enabled at the picture header layer. The value being 1 indicates that WCP is enabled, and the value being 0 indicates that WCP is not enabled.

wcp_S_Chroma: denotes a numerical value of the best control parameter S for the current frame or an index of the best control parameter S.

When being transmitted at the SH layer: the same S is used for the same slice, and the syntax semantics are as follows:

| seq_parameter_set_rbsp( ) { | Descriptor |
|---|---|
| **sps_wcp_enabled_flag** | u(1) |
| } | |

| pic_parameter_set_rbsp( ) { | Descriptor |
|---|---|
| if(sps_wcp_enabled_flag){ | |
| **pps_wcp_enabled_flag** | u(1) |
| } | |
| } | |

| picture_header_structure( ) { | Descriptor |
|---|---|
| if(pps_wcp_enabled_flag){ | |
| **ph_wcp_enabled_flag** | u(1) |
| } | |
| } | |

| slice_header( ) { | Descriptor |
|---|---|
| if( ph_wcp_enabled_flag){ | |
| **sh_wcp_enabled_flag** | u(1) |
| if(sh_wcp_enabled_flag){ | |
| **wcp_S_Chroma** | ue(v) |
| } | |
| } | |
| } | |

sps_wcp_enabled_flag: the flag indicates whether WCP is enabled at the sps layer. The value being 1 indicates that WCP is enabled, and the value being 0 indicates that WCP is not enabled.

pps_wcp_enabled_flag: the flag indicates whether WCP is enabled at the pps layer. The value being 1 indicates that WCP is enabled, and the value being 0 indicates that WCP is not enabled.

ph_wcp_enabled_flag: the flag indicates whether WCP is enabled at the picture header layer. The value being 1 indicates that WCP is enabled, and the value being 0 indicates that WCP is not enabled.

sh_wcp_enabled_flag: the flag indicates whether WCP is enabled at the slice header layer. The value being 1 indicates that WCP is enabled, and the value being 0 indicates that WCP is not enabled.

wcp_S_Chroma: denotes a numerical value of the best control parameter S for the current frame or an index of the best control parameter S.

When being transmitted at the CTU layer: the same S is used for the same CTU, and the syntax semantics are as follows:

| seq_parameter_set_rbsp( ) { | Descriptor |
|---|---|
| **sps_wcp_enabled_flag** | u(1) |
| } | |

| pic_parameter_set_rbsp( ) { | Descriptor |
| --- | --- |
| if(sps_wcp_enabled_flag){ | |
| **pps_wcp_enabled_flag** | u(1) |
| } | |
| } | |

| picture_header_structure( ) { | Descriptor |
| --- | --- |
| if(pps_wcp_enabled_flag){ | |
| **ph_wcp_enabled_flag** | u(1) |
| } | |
| } | |

| slice_header( ) { | Descriptor |
| --- | --- |
| if(ph_wcp_enabled_flag){ | |
| **sh_wcp_enabled_flag** | u(1) |
| } | |
| } | |

| coding_tree_unit( ) { | Descriptor |
| --- | --- |
| if(sh_wcp_enabled_flag){ | |
| **wcp_ctb_flag**[ CtbAddrX ][ CtbAddrY ] | ae(v) |
| if( wcp_ctb_flag[ CtbAddrX ][ CtbAddrY ] ) { | |
| **wcp_S_Chroma** | ae(v) |
| } | |
| } | |
| } | |

sps_wcp_enabled_flag: the flag indicates whether WCP is enabled at the sps layer. The value being 1 indicates that WCP is enabled, and the value being 0 indicates that WCP is not enabled.

pps_wcp_enabled_flag: the flag indicates whether WCP is enabled at the pps layer. The value being 1 indicates that WCP is enabled, and the value being 0 indicates that WCP is not enabled.

ph_wcp_enabled_flag: the flag indicates whether WCP is enabled at the picture header layer. The value being 1 indicates that WCP is enabled, and the value being 0 indicates that WCP is not enabled.

sh_wcp_enabled_flag: the flag indicates whether WCP is enabled at the slice header layer. The value being 1 indicates that WCP is enabled, and the value being 0 indicates that WCP is not enabled.

wcp_ctb_flag [CtbAddrX][CtbAddrY]: the flag indicates whether the WCP is enabled in the current CTU. The value being 1 indicates that WCP is enabled, and the value being 0 indicates that WCP is not enabled.

wcp_S_Chroma: denotes a numerical value of the best control parameter S for the current CTU or an index of the best control parameter S.

By adopting the above technical solution, a weighting coefficient is calculated by means of luminance information of neighboring region reference points and a current block, and the weighting coefficient is used for the chroma prediction of the current coding block, which fully explores the correlation between the current coding block and neighboring reference regions in the luminance information. The correlation is used to participate in the chroma prediction of the current coding block, thereby improving the accuracy of chroma prediction. At the same time, the original value of the current block is introduced into a larger control parameter selection, the best control parameter S is selected at the encoding end according to the deviation between the original value and the prediction value, and the best control parameter S is transmitted to the decoding end through the bitstream, which can improve the mapping ability of the non-linear mapping model, increase the credibility of the reference pixel weight, and further improve the accuracy of chroma prediction to a certain extent.

In yet another embodiment of the present disclosure, the embodiment of the present disclosure further provides a bitstream, which is generated by bit coding according to information to be coded. The information to be coded includes at least a first control parameter of a current block.

In some embodiments, the information to be coded further includes a preset correspondence between prediction parameters and first control parameters. In an embodiment, the prediction parameter includes at least one of a component to be predicted, a size of the current block, a prediction mode, and an index parameter of a control parameter. The current block size may include at least one of the height of the current block, the width of the current block, the number of first color component sampling points included in the current block, and the number of second color component sampling points included in the current block. Here, the first color component sampling points and the second color component sampling points are pixel points to be predicted within the current block, and the first color component sampling points and the second color component sampling points may be pixel points completely identical to each other or not completely identical to each other. In this way, the encoding end transmits the first control parameters to the decoding end through the bitstream, which can increase the reliability of the weighting coefficient and improve the accuracy of the chroma prediction to a certain extent.

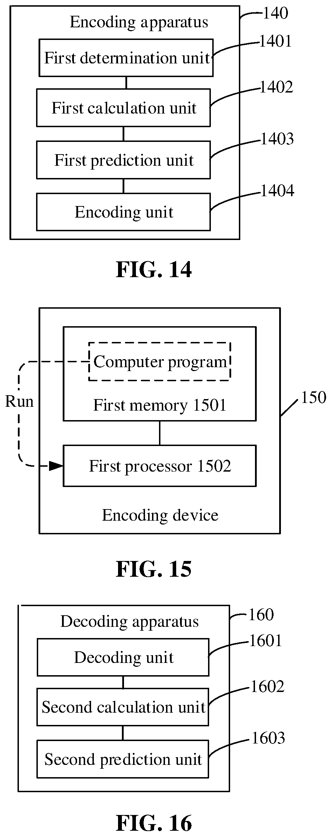

In yet another embodiment of the present disclosure, referring to FIG. 14, a diagram of the composition structure of an encoding apparatus according to an embodiment of the present disclosure is shown. As shown in FIG. 14, the encoding apparatus 140 may include: a first determination unit 1401, a first calculation unit 1402, a first prediction unit 1403, and a encoding unit 1404.

The first determination unit 1401 is configured to determine first control parameter candidates for a current block.

The first calculation unit 1402 is configured to determine a reference sample value of a first color component of the current block, and determine a weighting coefficient according to the reference sample value of the first color component of the current block and a candidate value of the first control parameter candidates.

The first prediction unit 1403 is configured to determine, according to the weighting coefficient and a reference sample value of a second color component of the current block, a prediction value of the second color component of the current block; determine, according to the prediction value and an original value of the second color component of the current block, a reference value of a prediction difference of the second color component of the current block; and determine a first control parameter of the current block according to the reference value of the prediction difference of the second color component of the current block.

The encoding unit 1404 is configured to encode the first control parameter of the current block to write obtained coded bits into a bitstream.

In some embodiments, the first control parameter candidates include multiple candidate values of the first control parameter.

In some embodiments, the first control parameter candidates are determined according to a prediction parameters of the current block.

In some embodiments, the prediction parameters of the current block at least include a size of the current block. The size of the current block includes at least one of a height of the current block, a width of the current block, a number of first color component sampling points included in the current block, or a number of second color component sampling points included in the current block.

In some embodiments, the prediction parameters of the current block include a prediction mode of the current block.

In some embodiments, the first determination unit 1401 is configured to determine, according to the prediction parameters of the current block, first control parameter candidates corresponding to the current block based on a preset correspondence between prediction parameters and first control parameter candidates.

In some embodiments, the first calculation unit 1402 is configured to determine, according to neighboring sampling values of the first color component of the current block and a reconstruction value of the first color component of the current block, the reference sample value of the first color component of the current block.

In some embodiments, the first calculation unit 1402 is configured to set the reference sample value of the first color component of the current block to be equal to an absolute value of a difference between a first intra-block reference value and a first neighboring reference value. The first intra-block reference value is the reconstruction value of the first color component of the current block or a value obtained by filtering the reconstruction value of the first color component of the current block. The first neighboring reference value is the neighboring sampling value of the first color component of the current block or a value obtained by filtering the neighboring sampling value of the first color component of the current block.

In some embodiments, the first calculation unit 1402 is configured to determine a first input parameter according to the reference sample value of the first color component of the current block and the candidate value of the first control parameter candidates, and determine the weighting coefficient according to a preset mapping relationship and the first input parameter.

In some embodiments, the first calculation unit 1402 is configured to set the first input parameter to be equal to a ratio of the reference sample value of the first color component of the current block to the candidate value of the first control parameter candidates.

In some embodiments, the first calculation unit 1402 is configured to set the first input parameter to be equal to a product of the reference sample value of the first color component of the current block and the candidate value of the first control parameter candidates.

In some embodiments, the first calculation unit 1402 is configured to set the first input parameter to be equal to a value obtained by right-shifting the reference sample value of the first color component of the current block by S bits. A value of S is determined according to the candidate value of the first control parameter candidates.

In some embodiments, the value of S is set to be equal to the candidate value of the first control parameter candidates.

In some embodiments, the first calculation unit 1402 is configured to use the reference sample value of the first color component of the current block and the first control parameter as index values for a value mapping lookup table, search the value mapping lookup table to obtain a corresponding array element value, and set the first input parameter to be equal to the array element value.

In some embodiments, the first calculation unit 1402 is configured to use the first input parameter as an input value of the preset mapping relationship and set the weighting coefficient to be equal to an output value of the preset mapping relationship, wherein the preset mapping relationship is a correspondence between the first input parameter and the weighting coefficient, and a value of the weighting coefficient decreases as a value of the first input parameter increases.

In some embodiments, the preset mapping relationship is a softmax function.

In some embodiments, the first prediction unit 1403 is configured to calculate a weighted sum of the weighting coefficient and the reference sample value of the second color component of the current block to determine the prediction value of the second color component of the current block.

In some embodiments, the first prediction unit 1403 is configured to calculate a weighted sum of the weighting coefficient and the reference sample value of the second color component of the current block to determine a first prediction value of the second color component of the current block, and filter the first prediction value of the second color component of the current block to determine the prediction value of the current block.

In some embodiments, the first prediction unit 1403 is configured to determine, according to an neighboring sampling value of the second color component of the current block, the reference sample value of the second color component of the current block.

In some embodiments, the first prediction unit 1403 is configured to set the reference sample value of the second color component of the current block to be equal to the neighboring sampling value of the second color component of the current block or a value obtained by filtering the neighboring sampling value of the second color component of the current block.

In some embodiments, the first prediction unit 1403 is configured to determine, according to a difference between the prediction value and the original value of the second color component of the current block, the reference value of the prediction difference of the second color component of the current block.

In some embodiments, the first prediction unit 1403 is configured to determine a minimum reference value according to reference values of prediction differences corresponding to multiple candidate values of the first control parameter candidates, and set the first control parameter to be equal to a candidate value corresponding to the minimum reference value.

In some embodiments, the coding unit 1404 is configured to encode the first control parameter of the current block in data units at a block layer and above in the bitstream.

In some embodiments, the data units at the block layer and above include at least one of a parameter set data unit, a picture header, a slice header, a coding tree unit, or a current unit.

In some embodiments, the first control parameter candidates include one or more candidate values of the first control parameter.

In some embodiments, the coding unit 1404 is configured to encode, in a parameter set data unit in the bitstream, a preset correspondence between prediction parameters and first control parameters. A parameter set corresponding to the parameter set data unit is a parameter set directly or indirectly referenced by a slice, and the slice comprises the current block.

In some embodiments, the parameter set directly or indirectly referenced by the slice includes at least one of a sequence parameter set, a picture parameter set, or an adaptation parameter set.

In some embodiments, the coding unit 1404 is configured to encode the preset correspondence between prediction parameters and first control parameters in a slice header in the bitstream.

In some embodiments, the coding unit 1404 is configured to encode the preset correspondence between prediction parameters and first control parameters in a picture header in the bitstream. A picture corresponding to the picture header includes the slice.

In actual application, the embodiments of the present disclosure further provide an encoding device. FIG. 15 is a diagram of a specific hardware structure of an encoding device according to an embodiment of the present disclosure. As shown in FIG. 15, the encoding device 150 includes a first memory 1501 and a first processor 1502.

The first memory 1501 stores a computer program executable on the first processor 1502, and the first processor 1502, when executing the program, implements an encoding method of an encoder side.

In actual application, the encoding device may further include a first communication interface used for reception and transmission of signals in the process sending information to other external network elements and receiving information from other external network elements.

By adopting the above coding apparatus or coding device, a weighting coefficient is calculated by means of luminance information of neighboring region reference points and a current block, and the weighting coefficient is used for the chroma prediction of the current coding block, which fully explores the correlation between the current coding block and neighboring reference regions in the luminance information. The correlation is used to participate in the chroma prediction of the current coding block, thereby improving the accuracy of chroma prediction. At the same time, the original value of the current block is introduced into a larger control parameter selection, the best control parameter S is selected at the encoding end according to the deviation between the original value and the prediction value, and the best control parameter S is transmitted to the decoding end through the bitstream, which can improve the mapping ability of the non-linear mapping model, increase the credibility of the reference pixel weight, and further improve the accuracy of chroma prediction to a certain extent.

In yet another embodiment of the present disclosure, referring to FIG. 16, a diagram of the composition structure of a decoding apparatus according to an embodiment of the present disclosure is shown. As shown in FIG. 16, the decoding apparatus 160 includes a decoding unit 1601, a second calculation unit 1602 and a second prediction unit 1603.

The decoding unit 1601 is configured to decode a bitstream to determine a first control parameter of a current block.

The second calculation unit 1602 is configured to determine a reference sample value of a first color component of the current block, determine a weighting coefficient according to the reference sample value of the first color component of the current block and the first control parameter, and determine, according to the weighting coefficient and a reference sample value of a second color component of the current block, a prediction value of the second color component of the current block.

The second prediction unit 1603 is configured to determine a reconstruction value of a second color component sampling point of the current block according to the prediction value of the second color component of the current block.

In some embodiments, the decoding unit 1601 is configured to: decode data units at a block layer and above in the bitstream to determine first control parameter candidates, and determine the first control parameter according to the first control parameter candidates.

In some embodiments, the data units at the block layer and above include at least one of a parameter set data unit, a picture header, a slice header, a coding tree unit, or a current unit.

In some embodiments, the first control parameter candidates include one or more candidate values of the first control parameter.

In some embodiments, the decoding unit 1601 is configured to determine the first control parameter from the first control parameter candidates according to a prediction parameter of the current block.

In some embodiments, the prediction parameter of the current block at least includes a size of the current block. The size of the current block comprises at least one of a height of the current block, a width of the current block, a number of first color component sampling points included in the current block, or a number of second color component sampling points included in the current block.

In some embodiments, the prediction parameter of the current block includes a prediction mode of the current block.

In some embodiments, the prediction parameter of the current block includes an index parameter of the first control parameter.

In some embodiments, the decoding unit 1601 is configured to determine the first control parameter from the first control parameter candidates based on a preset correspondence between prediction parameters and first control parameters.

In some embodiments, the first control parameter is set to be equal to a first control parameter corresponding to the prediction parameter of the current block from the first control parameter candidates.

In some embodiments, the decoding unit 1601 is configured to decode a slice header in the bitstream to determine a parameter set directly or indirectly referenced by a slice. The slice corresponding to the slice header includes the current block. The decoding unit 1601 is configured to determine the preset correspondence between prediction parameters and first control parameters according to the parameter set directly or indirectly referenced by the slice.

In some embodiments, the parameter set directly or indirectly referenced by the slice includes at least one of a sequence parameter set, a picture parameter set, or an adaptation parameter set.

In some embodiments, the decoding unit 1601 is configured to decode the slice header, and update the preset correspondence between prediction parameters and first control parameters.

In some embodiments, the decoding unit 1601 is configured to decode a picture header in the bitstream, and update the preset correspondence between prediction parameters and first control parameters. A picture corresponding to the picture header includes the slice.

In some embodiments, the second calculation unit 1602 is configured to determine the reference sample value of the first color component of the current block according to an neighboring sampling value of the first color component of the current block and a reconstruction value of the first color component of the current block.

In some embodiments, the second calculation unit 1602 is configured to set the reference sample value of the first color component of the current block to be equal to an absolute value of a difference between a first intra-block reference value and a first neighboring reference value. The first intra-block reference value is the reconstruction value of the first color component of the current block or a value obtained by filtering the reconstruction value of the first color component of the current block. The first neighboring reference value is the neighboring sampling value of the first color component of the current block or a value obtained by filtering the neighboring sampling value of the first color component of the current block.

In some embodiments, the second calculation unit 1602 is configured to determine a first input parameter according to the reference sample value of the first color component of the current block and the first control parameter, and determine the weighting coefficient according to a preset mapping relationship and the first input parameter.

In some embodiments, the second calculation unit 1602 is configured to set the first input parameter to be equal to a ratio of the reference sample value of the first color component of the current block to the first control parameter.

In some embodiments, the second calculation unit 1602 is configured to set the first input parameter to be equal to a product of the reference sample value of the first color component of the current block and the first control parameter.

In some embodiments, the second calculation unit 1602 is configured to set the first input parameter to be equal to a value obtained by right-shifting the reference sample value of the first color component of the current block by S bits. A value of S is determined according to the first control parameter.

In some embodiments, the second calculation unit 1602 is configured to set the value of S to be equal to the first control parameter.

In some embodiments, the second calculation unit 1602 is configured to use the reference sample value of the first color component of the current block and the first control parameter as index values for a value mapping lookup table, search the value mapping lookup table to obtain a corresponding array element value, and set the first input parameter to be equal to the array element value.

In some embodiments, the second calculation unit 1602 is configured to use the first input parameter as an input value of the preset mapping relationship, and set the weighting coefficient to be equal to an output value of the preset mapping relationship. The preset mapping relationship is a correspondence between the first input parameter and the weighting coefficient, and a value of the weighting coefficient decreases as a value of the first input parameter increases.

In some embodiments, the preset mapping relationship is a softmax function.

In some embodiments, the second prediction unit 1603 is configured to calculate a weighted sum of the weighting coefficient and the reference sample value of the second color component of the current block to determine the prediction value of the second color component of the current block.

In some embodiments, the second prediction unit 1603 is configured to calculate a weighted sum of the weighting coefficient and the reference sample value of the second color component of the current block to determine a first prediction value of the second color component of the current block; and filtering the first prediction value of the second color component of the current block to determine the prediction value of the current block.

In some embodiments, the second prediction unit 1603 is configured to determine, according to an neighboring sampling value of the second color component of the current block, the reference sample value of the second color component of the current block.

In some embodiments, the reference sample value of the second color component of the current block is set to be equal to the neighboring sampling value of the second color component of the current block or a value obtained by filtering the neighboring sampling value of the second color component of the current block.

In some embodiments, the decoding unit 1601 is configured to decode the bitstream to determine a reconstruction value of a prediction difference of the second color component of the current block.

The second prediction unit 1603 is configured to determine the reconstruction value of the second color component sampling point of the current block according to a sum of the prediction value of the second color component of the current block and the reconstruction value of the prediction difference of the second color component of the current block.

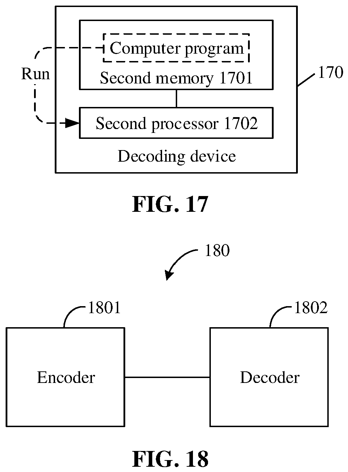

In actual application, embodiments of the present disclosure further provide a decoding device. FIG. 17 is a diagram of a specific hardware structure of a decoding device according to an embodiment of the present disclosure. As shown in FIG. 17, the decoding device 170 includes a second memory 1701 and a second processor 1702.

The second memory 1701 stores a computer program executable on the second processor 1702, and the second processor 1702, when executing the program, implements a decoding method of a decoder side.

In actual application, the decoding device may further include a second communication interface used for reception and transmission of signals in the process sending information to other external network elements and receiving information from other external network elements.

By adopting the above decoding apparatus or decoding device, a weighting coefficient is calculated by means of luminance information of neighboring region reference points and a current block, and the weighting coefficient is used for the chroma prediction of the current coding block, which fully explores the correlation between the current coding block and neighboring reference regions in the luminance information. The correlation is used to participate in the chroma prediction of the current coding block, thereby improving the accuracy of chroma prediction. The decoding end receives the best control parameter or the control parameter candidates through the bitstream, so as to improve the mapping capability of the non-linear mapping model by using the control parameter in the bitstream, increase the reliability of the reference pixel weight, thereby further improving the accuracy of the chroma prediction to a certain extent.

In addition, various functional units in this embodiment may be integrated in one processing unit, or each unit may be individually physically present, or two or more units may be integrated into one unit. The integrated units described above may be implemented in the form of hardware or in the form of software functional modules.

In yet another embodiment of the present disclosure, referring to FIG. 18, a diagram of the composition structure of an encoding and decoding system according to an embodiment of the present disclosure is shown. As shown in FIG. 18, the encoding and decoding system 180 may include an encoder 1801 and a decoder 1802. The encoder 1801 may be a device into which the encoding apparatus 140 described in the foregoing embodiment is integrated, or may also be the encoding device 150 described in the foregoing embodiment. The decoder 1802 may be a device into which the decoding apparatus 160 described in the foregoing embodiment is integrated, or may also be the decoding device 170 described in the foregoing embodiment.

In the embodiments of the present disclosure, in the coding and decoding system 180, both the encoder 1801 and the decoder 1802 may use color component information of neighboring reference pixels and a pixel to be predicted to calculate a weighting coefficient corresponding to the pixel to be predicted. Furthermore, different reference pixels may have different weighting coefficients, and the weighting coefficients are applied to the chroma prediction of the pixel to be predicted in the current block, thereby not only improving the accuracy of chroma prediction and reducing bitrates, but also enhancing encoding and decoding performance.

Correspondingly, an embodiment of the present disclosure provides a computer storage medium having stored thereon a computer program. When the computer program is executed by a first processor, an encoding method performed of an encoder is implemented. Alternatively, when the computer program is executed by a second processor, a decoding method of a decoder is implemented.

It should be pointed out here that the above description of the storage medium and apparatus embodiments is similar to the description of the method embodiments described above, and has similar beneficial effects as the method embodiments. For technical details not disclosed in the storage medium and apparatus embodiments of the present disclosure, reference can be made to the description of the method embodiments of the present disclosure for understanding.

It should be noted that the expressions "first", "second", and the like are used for distinguishing similar objects and are not necessarily for describing a particular sequential or chronological order.

The methods disclosed in several method embodiments according to the present disclosure may be arbitrarily combined without conflict to obtain new method embodiments. The features disclosed in several product embodiments provided by the present disclosure may be arbitrarily combined without conflict to obtain new product embodiments. The features disclosed in several method or apparatus embodiments according to the present disclosure may be arbitrarily combined without conflict to obtain new method embodiments or apparatus embodiments. The above description is merely the detailed description of the present invention, but the scope of protection of the present invention is not limited thereto. Any changes or substitutions that can be easily thought of by those skilled in the art within the scope of the disclosure should be included in the scope of protection of the present invention. Therefore, the scope of protection of the present invention should be defined by the scope of protection of the claims.

INDUSTRIAL APPLICABILITY

The present disclosure provides encoding and decoding methods and apparatuses, an encoding device, a decoding device, and a storage medium. The decoding method includes: decoding a bitstream to determine a first control parameter of a current block; determining a reference sample value of a first color component of the current block;

determining a weighting coefficient according to the reference sample value of the first color component of the current block and the first control parameter; determining, according to the weighting coefficient and a reference sample value of a second color component of the current block, a prediction value of the second color component of the current block; and determining, according to the prediction value of the second color component of the current block, a reconstruction value of a second color component sampling point of the current block. In this way, a weighting coefficient corresponding to a pixel to be predicted in a current block is calculated. The weighting coefficient is used to predict a color component of the pixel to be predicted in the current block, which can not only improve prediction accuracy and reduce bitrates, but also enhance encoding and decoding performance. In addition, the encoding end transmits the first control parameter to the decoding end through a bitstream, which can increase the reliability of the weighting coefficient, and further improve the accuracy of color component prediction to a certain extent.

**Claims**

1. A decoding method, comprising:

   decoding a bitstream to determine a first control parameter of a current block;
   determining a reference sample value of a first color component of the current block;
   determining a weighting coefficient according to the reference sample value of the first color component of the current block and the first control parameter;
   determining, according to the weighting coefficient and a reference sample value of a second color component of the current block, a prediction value of the second color component of the current block; and
   determining, according to the prediction value of the second color component of the current block, a reconstruction value of a second color component sampling point of the current block.

2. The method according to claim 1, wherein the decoding a bitstream to determine a first control parameter of a current block comprises:

   decoding data units at a block layer and above in the bitstream to determine first control parameter candidates; and
   determining the first control parameter according to the first control parameter candidates.

3. The method according to claim 2, wherein the method comprises:
   the data units at the block layer and above comprise at least one of a parameter set data unit, a picture header, a slice header, a coding tree unit, or a current unit.

4. The method according to claim 2, wherein the method comprises: the first control parameter candidates comprise one or more candidate values of the first control parameter.

5. The method according to claim 2, wherein the determining the first control parameter according to the first control parameter candidates comprises:
   determining the first control parameter from the first control parameter candidates according to a prediction parameter of the current block.

6. The method according to claim 5, further comprising:
   the prediction parameter of the current block at least comprise a size of the current block, wherein the size of the current block comprises at least one of a height of the current block, a width of the current block, a number of first color component sampling points included in the current block, or a number of second color component sampling points included in the current block.

7. The method according to claim 5, further comprising: the prediction parameter of the current block comprises a prediction mode of the current block.

8. The method according to claim 5, further comprising: the prediction parameter of the current block comprises an index parameter of the first control parameter.

9. The method according to claim 5, wherein the determining the first control parameter from the first control parameter candidates according to prediction parameter of the current block comprises:

determining, according to the prediction parameter of the current block, the first control parameter from the first control parameter candidates based on a preset correspondence between prediction parameters and first control parameters.

**10.** The method according to claim 9, further comprising:
setting the first control parameter to be equal to a first control parameter, from the first control parameter candidates, corresponding to the prediction parameter of the current block.

**11.** The method according to claim 9, further comprising:

decoding a slice header in the bitstream to determine a parameter set directly or indirectly referenced by a slice, wherein the slice corresponding to the slice header comprises the current block; and
determining the preset correspondence between prediction parameters and first control parameters according to the parameter set directly or indirectly referenced by the slice.

**12.** The method according to claim 11, wherein further comprising:
the parameter set directly or indirectly referenced by the slice comprises at least one of a sequence parameter set, a picture parameter set, or an adaptation parameter set.

**13.** The method according to claim 11, further comprising:
decoding the slice header, and updating the preset correspondence between prediction parameters and first control parameters.

**14.** The method according to claim 13, further comprising:
decoding a picture header in the bitstream, and updating the preset correspondence between prediction parameters and first control parameters, wherein a picture corresponding to the picture header comprises the slice.

**15.** The method according to claim 1, wherein the determining a reference sample value of a first color component of the current block comprises:
determining the reference sample value of the first color component of the current block according to an neighboring sampling value of the first color component of the current block and a reconstruction value of the first color component of the current block.

**16.** The method according to claim 15, further comprising:

setting the reference sample value of the first color component of the current block to be equal to an absolute value of a difference between a first intra-block reference value and a first neighboring reference value;
wherein the first intra-block reference value is the reconstruction value of the first color component of the current block or a value obtained by filtering the reconstruction value of the first color component of the current block; and
the first neighboring reference value is the neighboring sampling value of the first color component of the current block or a value obtained by filtering the neighboring sampling value of the first color component of the current block.

**17.** The method according to claim 1, wherein the determining a weighting coefficient according to the reference sample value of the first color component of the current block and the first control parameter comprises:

determining a first input parameter according to the reference sample value of the first color component of the current block and the first control parameter; and
determining the weighting coefficient according to a preset mapping relationship and the first input parameter.

**18.** The method according to claim 17, wherein the determining a first input parameter according to the reference sample value of the first color component of the current block and the first control parameter comprises:
setting the first input parameter to be equal to a ratio of the reference sample value of the first color component of the current block to the first control parameter.

**19.** The method according to claim 17, wherein the determining a first input parameter according to the reference sample value of the first color component of the current block and the first control parameter comprises:
setting the first input parameter to be equal to a product of the reference sample value of the first color component of the current block and the first control parameter.

20. The method according to claim 17, wherein the determining a first input parameter according to the reference sample value of the first color component of the current block and the first control parameter comprises:
setting the first input parameter to be equal to a value obtained by right-shifting the reference sample value of the first color component of the current block by S bits, wherein a value of S is determined according to the first control parameter.

21. The method according to claim 20, further comprising:
setting the value of S to be equal to the first control parameter.

22. The method according to claim 17, wherein the determining a first input parameter according to the reference sample value of the first color component of the current block and the first control parameter comprises:

using the reference sample value of the first color component of the current block and the first control parameter as index values for a value mapping lookup table, and searching the value mapping lookup table to obtain a corresponding array element value; and
setting the first input parameter to be equal to the array element value.

23. The method according to claim 17, wherein the determining the weighting coefficient according to a preset mapping relationship and the first input parameter comprises:
using the first input parameter as an input value of the preset mapping relationship, and setting the weighting coefficient to be equal to an output value of the preset mapping relationship, wherein the preset mapping relationship is a correspondence between the first input parameter and the weighting coefficient, and a value of the weighting coefficient decreases as a value of the first input parameter increases.

24. The method according to claim 23, wherein further comprising:
the preset mapping relationship is a softmax function.

25. The method according to claim 1, wherein the determining, according to the weighting coefficient and a reference sample value of a second color component of the current block, a prediction value of the second color component of the current block comprises:
calculating a weighted sum of the weighting coefficient and the reference sample value of the second color component of the current block to determine the prediction value of the second color component of the current block.

26. The method according to claim 1, wherein the determining, according to the weighting coefficient and a reference sample value of a second color component of the current block, a prediction value of the second color component of the current block comprises:

calculating a weighted sum of the weighting coefficient and the reference sample value of the second color component of the current block to determine a first prediction value of the second color component of the current block; and
filtering the first prediction value of the second color component of the current block to determine the prediction value of the current block.

27. The method according to claim 1, further comprising:
determining, according to an neighboring sampling value of the second color component of the current block, the reference sample value of the second color component of the current block.

28. The method according to claim 27, further comprising:
setting the reference sample value of the second color component of the current block to be equal to the neighboring sampling value of the second color component of the current block or a value obtained by filtering the neighboring sampling value of the second color component of the current block.

29. The method according to claim 1, wherein the determining, according to the prediction value of the second color component of the current block, a reconstruction value of a second color component sampling point of the current block comprises:

decoding the bitstream to determine a reconstruction value of a prediction difference of the second color component of the current block; and

determining the reconstruction value of the second color component sampling point of the current block according to a sum of the prediction value of the second color component of the current block and the reconstruction value of the prediction difference of the second color component of the current block.

30. An encoding method, comprising:

determining first control parameter candidates for a current block;

determining a reference sample value of a first color component of the current block;

determining a weighting coefficient according to the reference sample value of the first color component of the current block and a candidate value of the first control parameter candidates;

determining, according to the weighting coefficient and a reference sample value of a second color component of the current block, a prediction value of the second color component of the current block;

determining, according to the prediction value and an original value of the second color component of the current block, a reference value of a prediction difference of the second color component of the current block;

determining a first control parameter of the current block according to the reference value of the prediction difference of the second color component of the current block; and

encoding the first control parameter of the current block to write obtained encoded bits into a bitstream.

31. The method according to claim 30, wherein the first control parameter candidates comprise a plurality of candidate values of the first control parameter.

32. The method according to claim 31, further comprising: determining the first control parameter candidates according to a prediction parameter of the current block.

33. The method according to claim 32, further comprising:
the prediction parameter of the current block at least comprise a size of the current block, wherein the size of the current block comprises at least one of a height of the current block, a width of the current block, a number of first color component sampling points included in the current block, or a number of second color component sampling points included in the current block.

34. The method according to claim 32, wherein further comprising: the prediction parameter of the current block comprises a prediction mode of the current block.

35. The method according to claim 32, wherein the determining the first control parameter candidates according to a prediction parameter of the current block comprises:
determining, according to the prediction parameter of the current block, first control parameter candidates corresponding to the current block based on a preset correspondence between prediction parameters and first control parameter candidates.

36. The method according to claim 30, wherein the determining a reference sample value of a first color component of the current block comprises:
determining the reference sample value of the first color component of the current block according to an neighboring sampling value of the first color component of the current block and a reconstruction value of the first color component of the current block.

37. The method according to claim 36, further comprising:

setting the reference sample value of the first color component of the current block to be equal to an absolute value of a difference between a first intra-block reference value and a first neighboring reference value;
wherein the first intra-block reference value is the reconstruction value of the first color component of the current block or a value obtained by filtering the reconstruction value of the first color component of the current block; and
the first neighboring reference value is the neighboring sampling value of the first color component of the current block or a value obtained by filtering the neighboring sampling value of the first color component of the current block.

38. The method according to claim 30, wherein the determining a weighting coefficient according to the reference sample value of the first color component of the current block and a candidate value of the first control parameter candidates comprises:

determining a first input parameter according to the reference sample value of the first color component of the current block and the candidate value of the first control parameter candidates; and
determining the weighting coefficient according to a preset mapping relationship and the first input parameter.

39. The method according to claim 38, wherein the determining a first input parameter according to the reference sample value of the first color component of the current block and the candidate value of the first control parameter candidates comprises:
setting the first input parameter to be equal to a ratio of the reference sample value of the first color component of the current block to the candidate value of the first control parameter candidates.

40. The method according to claim 38, wherein the determining a first input parameter according to the reference sample value of the first color component of the current block and the candidate value of the first control parameter candidates comprises:
setting the first input parameter to be equal to a product of the reference sample value of the first color component of the current block and the candidate value of the first control parameter candidates.

41. The method according to claim 38, wherein the determining a first input parameter according to the reference sample value of the first color component of the current block and the candidate value of the first control parameter candidates comprises:
setting the first input parameter to be equal to a value obtained by right-shifting the reference sample value of the first color component of the current block by S bits, wherein a value of S is determined according to the candidate value of the first control parameter candidates.

42. The method according to claim 41, further comprising:
setting the value of S to be equal to the candidate value of the first control parameter candidates.

43. The method according to claim 38, wherein the determining a first input parameter according to the reference sample value of the first color component of the current block and the candidate value of the first control parameter candidates comprises:

using the reference sample value of the first color component of the current block and the first control parameter as index values for a value mapping lookup table, and searching the value mapping lookup table to obtain a corresponding array element value; and
setting the first input parameter to be equal to the array element value.

44. The method according to claim 38, wherein the determining the weighting coefficient according to a preset mapping relationship and the first input parameter comprises:
using the first input parameter as an input value of the preset mapping relationship, and setting the weighting coefficient to be equal to an output value of the preset mapping relationship, wherein the preset mapping relationship is a correspondence between the first input parameter and the weighting coefficient, and a value of the weighting coefficient decreases as a value of the first input parameter increases.

45. The method according to claim 44, wherein further comprising:
the preset mapping relationship is a softmax function.

46. The method according to claim 30, wherein the determining, according to the weighting coefficient and a reference sample value of a second color component of the current block, a prediction value of the second color component of the current block comprises:
calculating a weighted sum of the weighting coefficient and the reference sample value of the second color component of the current block to determine the prediction value of the second color component of the current block.

47. The method according to claim 30, wherein the determining, according to the weighting coefficient and a reference sample value of a second color component of the current block, a prediction value of the second color component of the current block comprises:

calculating a weighted sum of the weighting coefficient and the reference sample value of the second color component of the current block to determine a first prediction value of the second color component of the current block; and

filtering the first prediction value of the second color component of the current block to determine the prediction value of the current block.

48. The method according to claim 30, further comprising:
determining, according to an neighboring sampling value of the second color component of the current block, the reference sample value of the second color component of the current block.

49. The method according to claim 48, further comprising:
setting the reference sample value of the second color component of the current block to be equal to the neighboring sampling value of the second color component of the current block or a value obtained by filtering the neighboring sampling value of the second color component of the current block.

50. The method according to claim 30, wherein the determining, according to the prediction value and an original value of the second color component of the current block, a reference value of a prediction difference of the second color component of the current block comprises:
determining, according to a difference between the prediction value and the original value of the second color component of the current block, the reference value of the prediction difference of the second color component of the current block.

51. The method according to claim 30, wherein the determining a first control parameter of the current block according to the reference value of the prediction difference of the second color component of the current block comprises:

determining a minimum reference value according to reference values of prediction differences corresponding to a plurality of candidate values of the first control parameter candidates; and
setting the first control parameter to be equal to a candidate value corresponding to the minimum reference value.

52. The method according to claim 30, wherein the encoding the first control parameter of the current block comprises:
encoding the first control parameter of the current block in data units at a block layer and above in the bitstream.

53. The method according to claim 52, wherein the data units at the block layer and above comprise at least one of a parameter set data unit, a picture header, a slice header, a coding tree unit, or a current unit.

54. The method according to claim 30, wherein the encoding the first control parameter of the current block comprises:
encoding one or more first control parameter candidate values of the first control parameter.

55. The method according to claim 30, further comprising:
encoding, in a parameter set data unit in the bitstream, a preset correspondence between prediction parameters and first control parameters, wherein a parameter set corresponding to the parameter set data unit is a parameter set directly or indirectly referenced by a slice, and the slice comprises the current block.

56. The method according to claim 55, wherein the parameter set directly or indirectly referenced by the slice comprises at least one of a sequence parameter set, a picture parameter set, or an adaptation parameter set.

57. The method according to claim 55, further comprising:
encoding the preset correspondence between prediction parameters and first control parameters in a slice header in the bitstream.

58. The method according to claim 57, further comprising:
encoding the preset correspondence between prediction parameters and first control parameters in a picture header in the bitstream, wherein a picture corresponding to the picture header comprises the slice.

59. An encoding apparatus, comprising:

a first determination unit, configured to determine first control parameter candidates for a current block;
a first calculation unit, configured to: determine a reference sample value of a first color component of the current

58

block, and determine a weighting coefficient according to the reference sample value of the first color component of the current block and a candidate value of the first control parameter candidates;

a first prediction unit, configured to: determine, according to the weighting coefficient and a reference sample value of a second color component of the current block, a prediction value of the second color component of the current block; determine, according to the prediction value and an original value of the second color component of the current block, a reference value of a prediction difference of the second color component of the current block; and determine a first control parameter of the current block according to the reference value of the prediction difference of the second color component of the current block; and

an encoding unit, configured to encode the first control parameter of the current block to write obtained encoded bits into a bitstream.

60. A decoding apparatus, comprising:

a decoding unit, configured to decode a bitstream to determine a first control parameter of a current block;

a second calculation unit, configured to: determine a reference sample value of a first color component of the current block; and determine a weighting coefficient according to the reference sample value of the first color component of the current block and the first control parameter; and

a second prediction unit, configured to: determine, according to the weighting coefficient and a reference sample value of a second color component of the current block, a prediction value of the second color component of the current block; and determine, according to the prediction value of the second color component of the current block, a reconstruction value of a second color component sampling point of the current block.

61. An encoding device, comprising: a first memory and a first processor,
wherein the first memory stores a computer program executable on the first processor, and the first processor, when executing the program, implements the encoding method according to any one of claims 1 to 29.

62. A decoding device, comprising: a second memory and a second processor,
wherein the second memory stores a computer program executable on the second processor, and the second processor, when executing the program, implements the decoding method according to any one of claims 30 to 58.

63. A computer-readable storage medium, wherein the computer-readable storage medium stores a computer program, which implements the encoding method of any one of claims 1 to 29 when being executed by a first processor, or implements the decoding method according to any one of claims 30 to 58 when being executed by a second processor.

| Upper left region | Upper region |
|---|---|
| Left region | Coding block |

**FIG. 1**

FIG. 2

Input the vide

Divided into
coding blocks

─101

Transform and
quantization unit

Quantized transform coefficients

─100

─106

Inverse transform
and inverse
quantization unit

─102

Intra
estimation unit

─107

Filter control
analysis unit

Filter
control
data

─109

Coding unit

Output the
bitstream

103─

Inter/Intra
selection

Intra
prediction unit

─108

Filtering unit

Intra prediction data

Motion
compensation
unit

─104

Motion data

─105

Motion
estimation unit

─110

Decoded
image buffer
unit

Output the
video signal

FIG. 3

EP 4 510 575 A1

62

FIG. 4

| A bitstream is decoded to determining a first control parameter of a current block | 501 |

↓

| A reference sample value of a first color component of the current block is determined | 502 |

↓

| A weighting coefficient is determined according to the reference sample value of the first color component of the current block and the first control parameter | 503 |

↓

| A prediction value of the second color component of the current block is determined determining according to the weighting coefficient and a reference sample value of a second color component of the current block | 504 |

↓

| A reconstruction value of a second color component sampling point of the current block is determined according to the prediction value of the second color component of the current block | 505 |

**FIG. 5A**

Neighboring luminance vector

Luminance difference vector

Normalized weight vector

Sample point

Downsampled luminance block

Chroma

Adjacent chroma vector

Weighted chroma prediction

Predicted chroma value

**FIG. 5B**

**FIG. 6**

Upper-right
neighboring region

Upper Neighboring region

Coding block

C

Coding block

Left neighboring region

Lower-left neighboring
region

B

**FIG. 7**

Upper neighboring region

Coding block

Left neighboring region

A

First control parameter candidates are determined for a current block
801

↓

A reference sample value of a first color component of the current block is determined
802

↓

A weighting coefficient is determined according to the reference sample value of the first color component of the current block and a candidate value of the first control parameter candidates
803

↓

A prediction value of the second color component of the current block is determined according to the weighting coefficient and a reference sample value of a second color component of the current block
804

↓

A reference value of a prediction difference of the second color component of the current block is determined according to the prediction value and an original value of the second color component of the current block
805

↓

A first control parameter of the current block is determined according to the reference value of the prediction difference of the second color component of the current block
806

↓

The first control parameter of the current block is encoded to write obtained encoded bits into a bitstream
807

**FIG. 8**

S1:the chroma prediction for a current block is started

S2:is it the WCP mode? —No→ S3: other chroma prediction modes are used for the prediction

Yes

S4: the best control parameter S_best is acquired

S5: the softmax non-linear mapping is performed on each point to be predicted in all Cb and Cr chroma blocks using the best control parameter S_best to obtain a weight vector

S6: the weighted prediction is performed on the obtained weight vector corresponding to each point to be predicted and a reference chroma point to obtain a final chroma prediction value

**FIG. 9**

S1: the chroma prediction for a
current block is started

S2: is it the WCP mode? —No→

S3: other chroma
prediction modes are
used for the prediction

Yes | Yes

Cr component | Cr component

S4: the best control
parameter S_best_Cb is
acquired

S7: the best control
parameter S_best_Cr is
acquired

S5: the softmax non-linear
mapping is performed on
each point to be predicted in
a Cb chroma block using the
best control parameter
S_best_Cb to obtain a
weight vector

S8: the softmax non-linear
mapping is performed on
each point to be predicted in
a Cr chroma block using the
best control parameter
S_best_Cr to obtain a
weight vector;

S6: the weighted prediction
is performed on the
obtained weight vector
corresponding to each point
to be predicted and a
reference chroma point to
obtain a final chroma
prediction value Cb

S9: the weighted prediction
is performed on the
obtained weight vector
corresponding to each point
to be predicted and a
reference chroma point to
obtain a final chroma
prediction value Cr

**FIG. 10**

S1: the chroma prediction for
a current block is started

S2: is it the
WCP mode? —No→ S3: other chroma prediction
modes are used for the prediction

Yes

S4: the same prediction is
performed on Cb and Cr, and
the current block is classified

——No——

S5:
does it belong
to the first
category? —No→

S7:
does it belong
to the second
category? —No→

S9:
does it belong
to the third
category? —No→

S11:
does it belong
to the n-th
category?

Yes          Yes          Yes          Yes

S6: the best control
parameter S_best1
is acquired by
traversing S within
a specified
selection range

S8: the best control
parameter S_best2
is acquired by
traversing S within
the specified
selection range

S10: the best
control parameter
S_best3 is acquired
by traversing S
within the specified
selection range

S12: the best
control parameter
S_bestn is acquired
by traversing S
within the specified
selection range

S13: the softmax non-linear mapping is
performed on each point to be predicted in all Cb
and Cr chroma blocks using the best control
parameters S_besti to obtain a respecitve weight
vector, where i is an integer from 1 to n

S14: the weighted prediction is performed on the
obtained weight vector corresponding to each
point to be predicted in each category of blocks
and a reference chroma point to obtain a final
chroma prediction value

**FIG. 11**

```
┌─────────────────────────────┐
│ S1: the chroma prediction for a │
│   current block is started      │
└─────────────────────────────┘
              │
              ▼
    ┌───────────────────┐
Yes─│ S2: is it the      │
    │   WCP mode?        │
    └───────────────────┘
              │ No
              ▼
    ┌───────────────────┐
Yes─│ S3: is it the      │
    │   WCP_L mode?      │
    └───────────────────┘
              │ No
              ▼
    ┌───────────────────┐         ┌──────────────────────┐
    │ S4: is it the      │──No──▶  │ S5: the prediction is │
    │   WCP_T mode?      │         │ performed using other │
    └───────────────────┘         │ chroma prediction modes│
              │ Yes               └──────────────────────┘
              ▼
┌─────────────────────────────┐
│ S6: the best control parameter │
│   S_best is acquired           │
└─────────────────────────────┘
              │
              ▼
┌─────────────────────────────────────────────┐
│ S7: the softmax non-linear mapping is performed on │
│ each point to be predicted in all Cb and Cr chroma │
│ blocks using the best control parameter S_best to  │
│      obtain a respective weight vector             │
└─────────────────────────────────────────────┘
              │
              ▼
┌─────────────────────────────────────────────┐
│ S8: the weighted prediction on the obtained weight │
│ vector corresponding to each point to be predicted │
│ and a reference chroma point is performed to obtain │
│      a final chroma prediction value               │
└─────────────────────────────────────────────┘
```

**FIG. 12**

S1:the chroma prediction for a current block is started

Yes ← S2: is it the WCP mode?

No

Yes ← S3: is it the WCP_L mode?

No

S4: is it the WCP_T mode? → No → S5: the prediction is performed using other chroma prediction modes

Yes

S6: the same prediction is performed on Cb and Cr, and the current block is classified

No

S7: does it belong to the first category? → No → S9: does it belong to the second category? → No → S11: does it belong to the third category? → No → S13: does it belong to category n?

Yes

S8: the best control parameter S_best1 is acquired by traversing S within a specified selection range

Yes

S10: the best control parameter S_best2 is acquired by traversing S within the specified selection range

Yes

S12: the best control parameter S_best3 is acquired by traversing S within the specified selection range

Yes

S14: the best control parameter S_bestn is acquired by traversing S within the specified selection range

S15: the softmax non-linear mapping is performed on each point to be predicted in all Cb and Cr chroma blocks using the best control parameters S_besti to obtain a respective weight vector, where i is an integer from 1 to n

S16: weighted prediction is performed on the obtained weight vector corresponding to each point to be predicted in each category of blocks and a reference chroma point to obtain a final chroma prediction value

**FIG. 13**

**FIG. 14**

**FIG. 15**

**FIG. 16**

Run

Computer program

Second memory 1701

170

Second processor 1702

Decoding device

**FIG. 17**

180

1801

1802

Encoder

Decoder

**FIG. 18**

## INTERNATIONAL SEARCH REPORT

| International application No. |
|---|
| **PCT/CN2022/086466** |

**A. CLASSIFICATION OF SUBJECT MATTER**

H04N 19/159(2014.01)i; H04N 19/186(2014.01)i

According to International Patent Classification (IPC) or to both national classification and IPC

**B. FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS, VEN, DWPI, CNTXT, ENTXT, USTXT, JPTXT, IEEE, CNKI, 百度, BAIDU: 亮度, 色度, 颜色, 色彩, 分量, 预测, 重建, 重构, 参考, 像素, 差, 加权, 权重, 控制参数, colour, color, luma, chroma, component, prediction, predict, softmax, weight, reference, pixel, residual

**C. DOCUMENTS CONSIDERED TO BE RELEVANT**

| Category* | Citation of document, with indication, where appropriate, of the relevant passages | Relevant to claim No. |
|---|---|---|
| A | CN 113068030 A (GUANGDONG OPPO MOBILE TELECOMMUNICATIONS CORP., LTD.) 02 July 2021 (2021-07-02)<br>claims 1-26, and description, paragraphs [0007]-[0028] and [0042] | 1-63 |
| A | CN 112789863 A (HUAWEI TECHNOLOGIES CO., LTD.) 11 May 2021 (2021-05-11)<br>entire document | 1-63 |
| A | CN 113992913 A (KANGDA INTERCONTINENTAL MEDICAL EQUIPMENT CO., LTD.) 28 January 2022 (2022-01-28)<br>entire document | 1-63 |
| A | WO 2018131838 A1 (LG ELECTRONICS INC.) 19 July 2018 (2018-07-19)<br>entire document | 1-63 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 November 2022** | **29 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| | INTERNATIONAL SEARCH REPORT<br>Information on patent family members | | | International application No.<br>**PCT/CN2022/086466** | | |

| Patent document<br>cited in search report | | | Publication date<br>(day/month/year) | Patent family member(s) | | | Publication date<br>(day/month/year) |
|---|---|---|---|---|---|---|---|
| CN | 113068030 | A | 02 July 2021 | JP | 2022503990 | A | 12 January 2022 |
| | | | | AU | 2019357929 | A1 | 29 April 2021 |
| | | | | US | 2022239901 | A1 | 28 July 2022 |
| | | | | CN | 112335245 | A | 05 February 2021 |
| | | | | IL | 281832 | A | 31 May 2021 |
| | | | | US | 2021218958 | A1 | 15 July 2021 |
| | | | | ZA | 202102207 | B | 27 July 2022 |
| | | | | BR | 112021006138 | A2 | 29 June 2021 |
| | | | | KR | 20210070368 | A | 14 June 2021 |
| | | | | EP | 3843399 | A1 | 30 June 2021 |
| | | | | SG | 11202103312 Y | A | 29 April 2021 |
| | | | | PH | 12021550708 | A1 | 03 November 2021 |
| | | | | CA | 3114816 | A1 | 16 April 2020 |
| | | | | WO | 2020073990 | A1 | 16 April 2020 |
| | | | | VN | 78542 | A | 25 June 2021 |
| | | | | IN | 202127016627 | A | 03 September 2021 |
| | | | | EP | 3843399 | A4 | 20 October 2021 |
| | | | | US | 11388397 | B2 | 12 July 2022 |
| | | | | ZA | 202102207 | A | 29 July 2022 |
| CN | 112789863 | A | 11 May 2021 | CA | 3115177 | A1 | 09 April 2020 |
| | | | | WO | 2020069667 | A1 | 09 April 2020 |
| | | | | BR | 112021006412 | A2 | 06 July 2021 |
| | | | | EP | 3850853 | A1 | 21 July 2021 |
| | | | | KR | 20210064366 | A | 02 June 2021 |
| | | | | AU | 2019353560 | A1 | 13 May 2021 |
| | | | | JP | 2022504297 | A | 13 January 2022 |
| | | | | US | 2021297656 | A1 | 23 September 2021 |
| | | | | VN | 79514 | A | 26 July 2021 |
| | | | | IN | 202117016008 | A | 20 August 2021 |
| | | | | EP | 3850853 | A4 | 10 August 2022 |
| | | | | CN | 112789863 | B | 19 August 2022 |
| CN | 113992913 | A | 28 January 2022 | CN | 113992913 | B | 17 May 2022 |
| WO | 2018131838 | A1 | 19 July 2018 | None | | | |

Form PCT/ISA/210 (patent family annex) (January 2015)